(19)

**Europäisches Patentamt**
**European Patent Office**
**Office européen des brevets**

(11)  **EP 4 434 762 A1**

(12)  ## EUROPÄISCHE PATENTANMELDUNG

(43) Veröffentlichungstag:
　　 **25.09.2024  Patentblatt 2024/39**

(21) Anmeldenummer: **24173126.4**

(22) Anmeldetag: **23.09.2019**

(51) Internationale Patentklassifikation (IPC):
　　 **B42D 25/324** (2014.01)　　 **B42D 25/328** (2014.01)

(52) Gemeinsame Patentklassifikation (CPC):
　　 **B42D 25/324; B42D 25/328**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2018  DE 102018123482**
　　　　　　　 **19.12.2018  DE 102018132974**

(62) Dokumentnummer(n) der früheren Anmeldung(en) nach Art. 76 EPÜ:
**19773814.9 / 3 856 534**

(71) Anmelder: **OVD Kinegram AG**
**6300 Zug (CH)**

(72) Erfinder:
• **FRASCHINA, Corrado**
**6300 Zug (CH)**

• **MADER, Sebastian**
**6300 Zug (CH)**
• **WALTER, Harald**
**6300 Zug (CH)**

(74) Vertreter: **Zinsinger, Norbert**
**Louis Pöhlau Lohrentz**
**Patentanwälte Partnerschaft mbB**
**P.O.Box 30 55**
**90014 Nürnberg (DE)**

Bemerkungen:
Diese Anmeldung ist am 29.04.2024 als Teilanmeldung zu der unter INID-Code 62 erwähnten Anmeldung eingereicht worden.

(54)  **OPTISCH VARIABLES ELEMENT, SICHERHEITSDOKUMENT, VERFAHREN ZUR HERSTELLUNG EINES OPTISCH VARIABLEN ELEMENTS, VERFAHREN ZUR HERSTELLUNG EINES SICHERHEITSDOKUMENTS**

(57)　Die Erfindung betrifft ein optisch variables Element (1a), insbesondere ein Sicherheitselement (1b) und/oder ein Dekorelement (1c), bevorzugt für Sicherheitsdokumente (1d), wobei das optisch variable Element (1a) zumindest ein Pixelarray (2) umfassend zwei oder mehrere Pixel (2aa-2dd,2e-2f) aufweist, wobei ein oder mehrere Pixel der zwei oder mehreren Pixel (2aa-2dd,2e-2f) ein oder mehrere Strukturen (3aa-3dd,3e-3f) aufweisen, und wobei ein oder mehrere Strukturen der ein oder mehreren Strukturen (3aa-3dd,3e-3f) einfallende elektromagnetische Strahlung (6) in ein oder mehrere Raumwinkel abbilden, beugen und/oder streuen. Weiter betrifft die Erfindung ein Sicherheitsdokument (1d), insbesondere umfassend ein oder mehrere optisch variable Elemente (1a), ein Verfahren zur Herstellung eines optisch variablen Elements (1a), vorzugsweise eines Sicherheitselements (1b) und/oder eines Dekorelements (1c), bevorzugt für Sicherheitsdokumente (1d), sowie ein Verfahren zur Herstellung eines Sicherheitsdokuments (1d), vorzugsweise umfassend ein oder mehrere Schichten, bevorzugt umfassend ein oder mehrere optisch variable Elemente (1a).

Fig. 1

**Beschreibung**

Die Erfindung betrifft ein optisch variables Element, insbesondere ein Sicherheitselement und/oder ein Dekorelement, ein Sicherheitsdokument, ein Verfahren zur Herstellung eines optisch variablen Elements, sowie ein Verfahren zur Herstellung eines Sicherheitsdokuments.

Sicherheitselemente werden verwendet, um die Fälschungssicherheit von Sicherheitsdokumenten, wie beispielsweise Banknoten, Pässen, Scheckkarten, Visa, Kreditkarten, Zertifikaten und/oder ähnlichen Wert- beziehungsweise Identifikationsdokumenten zu erhöhen und damit zu verbessern. Weiter sind die von den Sicherheitselementen bereitgestellten optisch variablen Effekte von Laien einfach und eindeutig ohne weitere technische Hilfsmittel oder mittels weiterer technischer Hilfsmittel, wie beispielsweise Kameras, erfassbar, wobei der Laie mit geringst möglichem Aufwand die Echtheit eines mit einem derartigen Sicherheitselement ausgestatteten Sicherheitsdokuments nachweisen kann und manipulative Eingriffe an dem Sicherheitsdokument und/oder gefälschte Sicherheitsdokumente möglichst umgehend erkennen kann.

Als Sicherheitselemente kommen diffraktive Strukturen und Dünnfilmschichtelemente häufig zum Einsatz. Hierbei zeigen diffraktive Strukturen in Abhängigkeit vom Betrachtungswinkel Farbeffekte, wie beispielsweise einen Regenbogeneffekt. Dünnfilmschichtelemente hingegen zeichnen sich durch einen definierten Farbwechseleffekt aus. Derartige Sicherheitselemente finden beim Laien aufgrund ihrer umfassenden Verbreitung und den daraus folgenden Gewöhnungseffekt jedoch kaum mehr Beachtung.

So ist beispielsweise aus dem Dokument DE 10 2004 016 596 A1 ein derartiges Sicherheitselement bekannt.

Der vorliegenden Erfindung liegt daher die Aufgabe zugrunde, ein verbessertes optisch variables Element, ein Sicherheitsdokument umfassend ein oder mehrere verbesserte optisch variable Elemente, ein Verfahren zur Herstellung eines verbesserten optisch variablen Elements sowie ein Verfahren zur Herstellung eines Sicherheitsdokuments umfassend ein oder mehrere verbesserte optische variable Elemente bereitzustellen. Insbesondere stellt das verbesserte optisch variable Element einen besonders einprägsamen optisch variablen Effekt bereit.

Die Aufgabe wird gelöst durch ein optisch variables Element, insbesondere ein Sicherheitselement und/oder ein Dekorelement, bevorzugt für Sicherheitsdokumente, wobei das optisch variable Element zumindest ein Pixelarray umfassend zwei oder mehrere Pixel aufweist, wobei ein oder mehrere Pixel der zwei oder mehreren Pixel des zumindest einen Pixelarray ein oder mehrere Strukturen aufweisen, und wobei ein oder mehrere Strukturen der ein oder mehreren Strukturen einfallende elektromagnetische Strahlung in ein oder mehrere Raumwinkel abbilden, beugen und/oder streuen.

Weiter wird die Aufgabe gelöst durch ein Sicherheitsdokument, insbesondere umfassend ein oder mehrere optisch variable Elemente.

Weiter wird die Aufgabe gelöst durch ein Verfahren zur Herstellung eines optisch variablen Elements, vorzugsweise eines Sicherheitselements und/oder eines Dekorelements, bevorzugt für Sicherheitsdokumente, welches durch die folgenden Schritte gekennzeichnet ist:

- Bereitstellung zumindest eines virtuellen Pixelarray umfassend zwei oder mehrere virtuelle Pixel,
- Zuordnung zumindest eines Raumwinkels zu ein oder mehreren virtuellen Pixel der zwei oder mehreren virtuellen Pixel des zumindest einen virtuellen Pixelarray,
- Anordnung ein oder mehrerer virtueller Feldquellen in und/oder auf zumindest einem Bereich oder zumindest einem Segment des zumindest einen zugeordneten Raumwinkels, wobei der zumindest eine Bereich oder das zumindest eine Segment des zumindest einen zugeordneten Raumwinkels in einem ersten Abstand zu den ein oder mehreren virtuellen Pixel der zwei oder mehreren virtuellen Pixel des zumindest einen virtuellen Pixelarray angeordnet ist,
- Berechnung ein oder mehrerer virtueller elektromagnetischer Felder ausgehend von den ein oder mehreren virtuellen Feldquellen in einem vorbestimmten Abstand von den ein oder mehreren virtuellen Pixel der zwei oder mehreren virtuellen Pixel des zumindest einen virtuellen Pixelarray in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene,
- Berechnung ein oder mehrerer Phasenbilder für die ein oder mehreren virtuellen Pixel der zwei oder mehreren virtuellen Pixel des zumindest einen virtuellen Pixelarray aus einem virtuellen elektromagnetischen Gesamtfeld bestehend aus der Überlagerung der ein oder mehreren virtuellen elektromagnetischen Feldern in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene,
- Berechnung virtueller Strukturprofile für die ein oder mehreren virtuellen Pixel zwei oder mehreren virtuellen Pixel des zumindest einen virtuellen Pixelarray aus den ein oder mehreren Phasenbildern,
- Ausbildung der virtuellen Strukturprofile der ein oder mehreren virtuellen Pixel der zwei oder mehreren Pixel des zumindest einen virtuellen Pixelarray in und/oder auf ein Substrat als zumindest ein Pixelarray umfassend zwei oder mehrere Pixel, wobei ein oder mehrere Pixel der zwei oder mehreren Pixel des zumindest einen Pixelarray ein oder mehrere Strukturen aufweisen, zur Bereitstellung des optisch variablen Elements.

Weiter wird die Aufgabe gelöst durch ein Verfahren zur Herstellung eines Sicherheitsdokuments, insbesondere umfassend ein oder mehrere Schichten, bevorzugt umfassend ein oder mehrere optisch variable Elemente, wobei ein oder mehrere optisch variable Elemente als Laminierfolie und/oder als Prägefolie auf das Sicherheitsdokument und/oder auf eine oder mehrere Schichten des Sicherheitsdokuments aufgebracht werden und/oder in das Sicherheitsdokument und/oder in ein oder mehrere Schichten der ein oder mehreren Schichten des Sicherheitsdokuments eingebracht werden.

Ein solches optisch variables Element zeichnet sich dadurch aus, dass dieses bevorzugt zumindest ein Pixelarray umfasst, wobei das zumindest eine Pixelarray zwei oder mehrere Pixel umfassend Strukturen aufweist, wobei insbesondere jeder Pixel einfallendes Licht in vorbestimmte Raumwinkel abbildet, beugt und/oder streut. Hierbei bestimmt vorzugsweise die Größe der vorbestimmte Raumwinkel das optisch erfassbare Erscheinungsbild des zumindest einen Pixelarray. Die Richtung des durch die Strukturen abgebildeten, gebeugten und/oder gestreuten ausfallenden Lichts ist hochpräzise vorbestimmbar.

Hierdurch wird erreicht, dass das optisch variable Element für einen Betrachter und/oder Sensor erfassbare, optische Bewegungseffekte generiert, welche eine hervorragende Erfassbarkeit auf Grund einer hohen Helligkeit, Intensität und Brillanz des entsprechenden Erscheinungsbildes aufweisen.

Vorteilhafte Ausgestaltungen der Erfindung sind in den Unteransprüchen bezeichnet.

Es ist möglich, dass wobei ein oder mehrere Strukturen der ein oder mehreren Strukturen einfallende elektromagnetische Strahlung in ein oder mehrere Raumwinkel achromatisch abbilden, beugen und/oder streuen. Hierbei sind die Strukturen insbesondere derart ausgelegt, dass sie einfallende elektromagnetische Strahlung nicht in ein oder mehrere Raumwinkel reflektieren wie beispielsweise Mikrospiegel oder Mikrofacetten.

Unter "Raumwinkel" wird insbesondere üblicherweise der Flächeninhalt einer Teilfläche A einer Kugeloberfläche von einer Kugel verstanden, welcher bevorzugt durch das Quadrat des Radius R der Kugel dividiert wird. Der Raumwinkel wird insbesondere in der dimensionslosen Einheit Steradiant angegeben. Der gesamte Raumwinkel entspricht vorzugsweise der Oberfläche der Einheitskugel beziehungsweise einer Kugel mit Radius eins, also insbesondere $4\pi$.

Insbesondere sind Zahlenwerte für den Raumwinkel, in welchen die Strukturen in den Pixeln Licht abbilden, beugen und/oder streuen, vorzugsweise für senkrecht auf die Strukturen einfallendes Licht definiert, wobei bevorzugt die Zahlenwerte des Raumwinkels die Richtung des Lichtkegels im Bezug zur senkrechten z-Achse angeben.

Unter "Öffnungswinkel" wird insbesondere die Breite des Lichtkegels in Bezug auf die Gerade im Zentrum des Lichtkegels verstanden. Die Richtung des Lichtkegels in Bezug auf eine Achse, insbesondere die x- bzw. y-Achse, hängt bevorzugt von dem jeweils anvisierten optischen Effekt ab, wobei die x-Achse und die y-Achse vorzugsweise senkrecht zueinander ausgerichtet sind, insbesondere in einer Ebene, welche von der x-Achse und der y-Achse aufgespannt wird, in einem Winkel von 90° zueinander ausgerichtet sind.

Vorzugsweise ist das zumindest eine Pixelarray als ein eindimensionales, zweidimensionales oder dreidimensionales, insbesondere als eine Überlagerung von ein oder mehreren eindimensionalen und/oder zweidimensionalen, Arrays oder Anordnungen oder Matrizen von Pixeln ausgebildet.

Es ist möglich, dass das optisch variable Element und/oder das Sicherheitsdokument ein oder mehrere Schichten umfasst, wobei insbesondere das zumindest eine Pixelarray auf oder in zumindest einer Schicht der ein oder mehreren Schichten angeordnet ist und wobei vorzugsweise ein oder mehrere Schichten der ein oder mehreren Schichten ausgewählt sind aus: HRI-Schicht (HRI = High Refractive Index, Schicht mit hohem Brechungsindex im Vergleich zu einem durchschnittlichen Brechungsindex von etwa 1,5), insbesondere Schicht umfassend HRI und/oder LRI-Lackschicht (LRI = Low Refractive Index, Schicht mit niedrigem Brechungsindex im Vergleich zu einem durchschnittlichen Brechungsindex von etwa 1,5), Metallschicht, Interferenzschicht, insbesondere Interferenzschichtabfolgen, bevorzugt HLH (High-Low-High bzgl. der Brechungsindizes der jeweiligen Schichten) oder HLHLH (High-Low-High-Low-High bzgl. der Brechungsindizes der jeweiligen Schichten), weiter bevorzugt Fabry-Perot-Dreischichtsystem oder -Mehrschichtsystem, Flüssigkristallschicht, Lumineszenzschicht, insbesondere Fluoreszenzschicht, Farbschicht, insbesondere lasierende Farbschicht, Metallschicht in direktem Kontakt mit einer lasierenden Farbschicht zur Erzeugung von Plasmonenresonanz-Effekten.

Weiter ist es möglich, dass das optisch variable Element und/oder das Substrat umfassend das zumindest eine Pixelarray zwischen zwei Schichten, insbesondere zwei weiteren Schichten, eingebettet ist. Ein oder mehrere Schichten der ein oder mehreren weiteren Schichten sind bevorzugt als Schutzschichten, Haftvermittlerschichten beziehungsweise Haftvermittlungsschichten, Kleberschichten, Barriereschichten, Dekorschichten, Reflexionsschichten, leitfähige Schichten ausgebildet.

Die Schichten können auf einem Trägersubstrat (beispielsweise aus Polyester, insbesondere PET), ablösbar oder nicht ablösbar angeordnet sein.

Ein oder mehrere Schichten sind vorzugsweise metallische Schichten, welche vorzugsweise jeweils nicht vollflächig, sondern lediglich partiell in dem optisch variablen Element und/oder dem Sicherheitsdokument vorgesehen sind.

Die metallischen Schichten sind hierbei insbesondere opak, transluzent oder semitransparent ausgebildet. Vorzugsweise umfassen die metallischen Schichten hierbei unterschiedliche Metalle, welche unterschiedliche, insbesondere deutlich unterschiedliche, bevorzugt von einem Betrachter und/oder Sensor unterscheidbare, Reflexions- und/oder Transmissionsspektren aufweisen. Bevorzugt umfassen die Metallschichten ein oder mehrere der Metalle: Aluminium, Kupfer, Gold, Silber, Chrom, Zinn, und/oder ein oder mehrere Legierungen dieser Metalle. Weiter sind die partiell vorgesehenen metallischen Schichten bevorzugt gerastert und/oder mit lokal unterschiedlichen Schichtdicken ausgestaltet. Ein Raster kann insbesondere regelmäßig oder fraktal oder unregelmäßig, insbesondere stochastisch ausgebildet sein, und bereichsweise in der Ausbildung variieren.

Insbesondere sind ein oder mehrere Metallschichten der Metallschichten hierbei vorzugsweise musterförmig strukturiert in der Form, dass diese ein oder mehrere Bildelemente umfassen, in denen das Metall der Metallschicht vorgesehen ist und einen Hintergrundbereich umfassen, in denen das Metall der Metallschichten nicht vorgesehen ist oder umgekehrt. Die Bildelemente können hierbei vorzugsweise in Form von alphanumerischen Zeichen, jedoch auch von Motiven, Mustern, Grafiken und komplexen Darstellung von Objekten gebildet sein.

Vorzugsweise umfassen ein oder mehrere der Schichten ein oder mehrere Farbschichten, insbesondere lasierende Farben. Bei diesen Farbschichten handelt es sich insbesondere um Farbschichten, welche mittels eines Druckverfahrens aufgebracht werden, und welche ein oder mehrere Farbstoffe und/oder Pigmente aufweisen, welche bevorzugt in einer Bindemittelmatrix eingebunden sind. Die Farbschichten, insbesondere Farben, können transparent, klar, teilweise streuend, transluzent, intransparent, und/oder deckend sein.

Es ist möglich, dass ein oder mehrere der Schichten zusätzlich zu dem zumindest einen Pixelarray ein oder mehrere optisch aktive Reliefstrukturen aufweisen, welche vorzugsweise jeweils in zumindest eine Oberfläche einer Lackschicht, bevorzugt einer replizierten Lackschicht, eingebracht sind. Bei derartigen Reliefstrukturen handelt es sich insbesondere um diffraktive Reliefstrukturen, wie beispielsweise Hologramme, Beugungsgitter, fresnelsche Freiformflächen, Beugungsgitter mit symmetrischen oder asymmetrischen Profilformen und/oder Beugungsstrukturen Nullter Ordnung.

Weiter bevorzugt handelt es sich bei den Reliefstrukturen um isotrope und/oder anisotrope streuende Mattstrukturen, Blaze-Gitter und/oder im Wesentlichen in Reflexion und/oder in Transmission wirkende Reliefstrukturen, wie beispielsweise Mikrolinsen, Mikroprismen oder Mikrospiegel.

Die zusätzlichen optisch aktiven Reliefstrukturen können insbesondere entweder horizontal benachbart neben dem zumindest einen Pixelarray angeordnet sein und/oder vertikal über und unterhalb dem zumindest einen Pixelarray in weiteren Schichtebenen angeordnet sein.

Unter "isotroper Intensitätsverteilung" wird insbesondere eine Intensitätsverteilung verstanden, deren Strahlungsleistung über alle Raumwinkel gleich ist.

Unter "anisotroper Intensitätsverteilung" wird insbesondere eine Intensitätsverteilung verstanden, deren Strahlungsleistung sich in zumindest einem ersten Raumwinkel von zumindest einem zweiten Raumwinkel unterscheidet.

Es ist möglich, dass eine oder mehrere der Schichten ein oder mehrere Flüssigkristallschichten aufweisen, welche vorzugsweise zum einen eine von der Polarisation des einfallenden Lichts abhängige und vorzugsweise zum anderen eine wellenlängenselektive Reflexion und/oder Transmission einfallenden Lichts abhängig von der Ausrichtung der Flüssigkristalle generieren.

Unter "HRI-Schicht" wird insbesondere eine Schicht mit einem hohen Brechungsindex verstanden, welche beispielsweise vollständig oder teilweise aus $TiO_2$ oder ZnS besteht oder aus einer aufgedampften Schicht aus zumindest einem Metalloxid, Metallsulfid, Titandioxid, und/oder anderen Stoffen und/oder Kombinationen aus den vorstehenden Stoffen, besteht. Insbesondere weist eine HRI-Schicht eine Schichtdicke von 10 nm bis 150 nm, auf. Die "HRI-Schicht" kann insbesondere vollflächig oder partiell vorliegen.

Vorzugsweise werden die ein oder mehreren Strukturen der ein oder mehreren Strukturen und/oder das zumindest eine Pixelarray in einen Dünnschichtaufbau, insbesondere in einen Fabry-Perot-Schichtaufbau, eingebracht. Bevorzugt wird der Dünnschichtaufbau auf die ein oder mehreren Strukturen und/oder auf das zumindest eine Pixelarray aufgebracht. Insbesondere weist ein derartiger Fabry-Perot-Schichtaufbau, insbesondere zumindest bereichsweise, zumindest eine erste semitransparente Absorberschicht, zumindest eine transparente Abstandsschicht und zumindest eine zweite semitransparente Absorberschicht und/oder eine opake Reflexionsschicht auf.

Unter "Dünnschichtaufbau" wird insbesondere ein Aufbau aus Dünnschichtelementen verstanden, welcher einen blickwinkelabhängigen Farbverschiebungseffekt generiert, basierend auf einer Anordnung von Schichten, welche eine optische Dicke im Bereich einer halben Wellenlänge ($\lambda/2$) oder einer viertel Wellenlänge ($\lambda/4$) einfallenden Lichts beziehungsweise einer oder mehrerer einfallender elektromagnetischer Wellen aufweist. Konstruktive Interferenz in einer Interferenzschicht mit einem Brechungsindex n und einer Dicke d wird vorzugsweise mittels der folgenden Gleichung berechnet:

$$2nd\cos(\Theta) = m\lambda,$$

wobei $\Theta$ der Winkel zwischen der Beleuchtungsrichtung und der Betrachtungsrichtung, $\lambda$ die Wellenlänge des Lichts beziehungsweise der Felder, und m eine ganze Zahl ist. Diese Schichten umfassen vorzugsweise eine Abstandsschicht, insbesondere angeordnet zwischen einer Absorptionsschicht und einer Reflexionsschicht.

Unter "semitransparent" wird insbesondere eine Transmissivität im infraroten, sichtbaren und/oder ultravioletten Wellenlängenbereich verstanden, welche zwischen 10% und 70%, bevorzugt zwischen 10% und 50%, liegt, wobei vorzugsweise ein nicht zu vernachlässigender Teil des einfallenden elektromagnetischen Wellen, insbesondere des einfallenden Lichts, absorbiert wird.

Vorzugsweise weist die erste semitransparente Absorberschicht eine Schichtdicke zwischen 5 nm und 50 nm auf. Die Absorberschicht weist bevorzugt Aluminium, Silber, Kupfer, Zinn, Nickel, Inconel, Titan und/oder Chrom auf. Vorzugsweise weist die erste semitransparente Absorberschicht im Fall von Aluminium und Chrom eine Schichtdicke zwischen 5 nm und 15 nm auf.

Vorzugsweise weist die transparente Abstandsschicht eine Schichtdicke zwischen 100 nm und 800 nm, insbesondere zwischen 300 nm und 600 nm, auf. Die Abstandsschicht besteht bevorzugt aus organischem Material, insbesondere aus Polymer, und/oder aus anorganischem $Al_2O_3$, $SiO_2$ und/oder $MgF_2$.

Weiter bevorzugt besteht die transparente Abstandsschicht aus einer gedruckten Polymerschicht, welche insbesondere mittels Tiefdruck, Schlitzgießen oder im Inkjet-Druck aufgebracht wird.

Unter "opak" wird insbesondere verstanden, dass kein Licht im infraroten, sichtbaren und/oder ultravioletten Wellenlängenbereich oder nur eine zu vernachlässigende Menge an Licht im infraroten, sichtbaren und/oder ultravioletten Wellenlängenbereich, insbesondere weniger als 10%, weiter bevorzugt weniger als 5%, insbesondere bevorzugt weniger als 2%, durch ein Substrat, insbesondere ein oder mehrere Schichten der ein oder mehreren Schichten, transmittiert wird.

Es ist möglich, dass jedem Pixel der zwei oder mehreren Pixel des zumindest einen Pixelarray ein oder mehrere Strukturen der ein oder mehreren Strukturen zugeordnet sind, wobei die einem Pixel zugeordneten ein oder mehreren Strukturen einfallende elektromagnetische Strahlung in ein oder mehrere vorbestimmte Raumwinkel abbilden, beugen und/oder streuen, wobei insbesondere den ein oder mehreren vorbestimmten Raumwinkeln jeweils eine Richtung, vorzugsweise eine vorbestimmte Richtung, zugeordnet ist.

Weiter ist es möglich, dass ein oder mehrere Strukturen der ein oder mehreren Strukturen und/oder ein oder mehrere zugeordnete Strukturen der ein oder mehreren zugeordneten Strukturen in ein oder mehrere Raumwinkel der ein oder mehreren Raumwinkel und/oder ein oder mehrere vorbestimmten Raumwinkel der ein oder mehreren vorbestimmten Raumwinkel abbilden, beugen und/oder streuen, welche sich insbesondere voneinander unterscheiden, wobei ein oder mehrere auf eine um einen Pixel angeordnete Kugel, insbesondere eine Einheitskugel mit einem Einheitsradius von 1, projizierte Raumwinkel der ein oder mehreren Raumwinkel und/oder vorbestimmten Raumwinkel der ein oder mehreren vorbestimmten Raumwinkel ein oder mehrere, insbesondere gleiche oder verschiedenartige, Formen ausbilden, welche vorzugsweise jeweils ausgewählt sind aus: Kreisfläche, Ellipsenfläche, Dreiecksfläche, Quadratfläche, Rechteckfläche, Polygonfläche, Kreisringfläche.

Möglich ist weiter, dass ein oder mehrere Formen der ein oder mehreren Formen offen oder geschlossen sind und/oder aus ein oder mehreren Teilformen bestehen, wobei insbesondere zumindest zwei Teilformen miteinander verbunden oder überlagert sind.

Es ist auch möglich, dass ein oder mehrere der von einem Betrachter erfassbaren Raumwinkel der ein oder mehreren Raumwinkel oder vorbestimmten Raumwinkel der ein oder mehreren vorbestimmten Raumwinkel, in welche ein oder mehrere Pixel der zwei oder mehreren Pixel des zumindest einen Pixelarray einfallende elektromagnetische Strahlung abbilden, beugen und/oder streuen, einer Funktion folgen, wobei die Funktion derart ausgebildet ist, dass ein Betrachter die Raumwinkel oder vorbestimmten Raumwinkel als wellenförmig bewegende Helligkeitsbänder, bevorzugt sinusförmig bewegende Helligkeitsbänder, erfasst.

Vorzugsweise betragen ein oder mehrere oder alle Raumwinkel der ein oder mehreren Raumwinkel und/oder ein oder mehrere oder alle vorbestimmten Raumwinkel der ein oder mehreren vorbestimmten Raumwinkel in zumindest einer Richtung bis zu 70°, bevorzugt bis zu 50°, weiter bevorzugt bis zu 40°. Die Aufweitung bzw. der Öffnungswinkel ein oder mehrerer oder aller Raumwinkel beträgt vorzugsweise maximal 20°, weiter bevorzugt maximal 15°, insbesondere bevorzugt maximal 10°.

Es ist möglich, einfallendes Licht beziehungsweise einfallende elektromagnetische Strahlung derart in und/oder auf einen Raumwinkel von bis zu 70°, bevorzugt bis zu 50°, weiter bevorzugt bis zu 40° abzubilden, zu beugen und/oder zu streuen, dass insbesondere das hierbei generierte visuelle Erscheinungsbild hochglanzartig oder seidenmatt oder teilweise hochglanzartig und teilweise seidenmatt, bevorzugt zumindest als ein 3D-Effekt und/oder Bewegungseffekt, für einen Betrachter und/oder Sensor erfassbar ist.

Der insbesondere seidenmatt erscheinende Teilbereich des hochglanzartigen Bereichs mit dem 3D-Effekt und/oder dem Bewegungseffekt ist hierbei vorzugsweise in Form eines Motivs, eines Musters, einer Grafik oder einer komplexen Darstellung von Objekten, beispielsweise in Form eines Icons, von Buchstaben, Denominationszeichen oder ähnlichem, ausgebildet.

Es ist weiter möglich, dass ein hochglanzartig erscheinender Teilbereich in einem seidenmatt erscheinenden Bereich vorgesehen ist. Die Kombination aus seidenmattem und hochglanzartigem Erscheinungsbild findet insbesondere Verwendung, um Designelemente realistischer und damit noch einfacher für Laien erkennbar zu machen. Beispielsweise ist es möglich, einen hochglanzartigen 3D-Effekt eines Berges zu erzeugen, wobei im Bereich der Bergspitze ein seidenmatter Teilbereich vorgesehen ist. Dieser erzeugt vorzugsweise die Illusion einer schneebedeckten Bergspitze in dem hochglanzartigen 3D-Effekt. Insbesondere verstärkt die Kombination aus seidenmattem und hochglanzartigem Erscheinungsbild visuell den hochglanzartigen 3D-Effekt, beispielsweise durch die Ausgestaltung von Schatten als seidenmatt erscheinende Teilbereiche im hochglanzartigen Bereich.

Unter einem Sensor wird insbesondere zumindest ein menschliches Auge und/oder zumindest ein flächiger Detektor, bevorzugt zumindest ein CMOS-Sensor (CMOS = Complementary Metal-Oxide Semiconductor), weiter bevorzugt zumindest ein CCD-Sensor (CCD = "Charge-Coupled Device"), verstanden. Insbesondere weist der Sensor eine spektrale Auflösung, insbesondere in dem sichtbaren elektromagnetischen Spektrum, auf. Vorzugsweise ist der Sensor ausgewählt oder kombiniert aus: Kamera, insbesondere zumindest einer Kamera umfassend zumindest einen CCD-Chip, zumindest einer IR-Kamera (IR = Infrarot), zumindest einer VIS-Kamera (VIS= Visuell), zumindest einer UV-Kamera (UV = ultraviolett), zumindest einem Photomultiplier, zumindest einem Spektrometer und/oder zumindest einem Transition-Edge-Sensor (TES).

Es ist möglich, dass ein oder mehrere Strukturen der ein oder mehreren Strukturen und/oder die einem Pixel der zwei oder mehreren Pixel des zumindest einen Pixelarray zugeordneten Strukturen derart ausgebildet sind, dass diese eine optisch variable Information bereitstellen, insbesondere ein oder mehrere 3D-Effekte und/oder Bewegungseffekte bereitstellen, bevorzugt achromatische oder monochromatische 3D-Effekte und/oder Bewegungseffekte bereitstellen.

Es ist auch möglich, dass ein oder mehrere Strukturen der ein oder mehreren Strukturen und/oder die einem Pixel der zwei oder mehreren Pixel des zumindest einen Pixelarray zugeordneten Strukturen elektromagnetische Strahlung, insbesondere einfallende elektromagnetische Strahlung, in einem Raumwinkel, insbesondere einem punktförmigen Raumwinkel, insbesondere mit einem Öffnungswinkel nahe 0°, abbilden, beugen und/oder streuen.

Insbesondere sind ein oder mehreren Strukturen der ein oder mehreren Strukturen und/oder ein oder mehrere Pixel der zwei oder mehreren Pixel des zumindest einen Pixelarrays umfassend ein oder mehrere zugeordnete Strukturen der ein oder mehreren zugeordneten Strukturen zwei oder mehreren Gruppen von Strukturen und/oder zwei oder mehreren Gruppen von Pixeln zugeordnet, insbesondere wobei sich die Gruppen der zwei oder mehreren Gruppen von Strukturen und/oder die Gruppen der zwei oder mehreren Gruppen von Pixeln voneinander unterscheiden.

Weiter ist es möglich, dass zwei oder mehrere Gruppen von Strukturen der zwei oder mehreren Gruppen von Strukturen und/oder zwei oder mehrere Gruppen von Pixeln der zwei oder mehreren Gruppen von Pixeln elektromagnetische Strahlung, insbesondere einfallende elektromagnetische Strahlung, in gleiche oder unterschiedliche Raumwinkel und/oder vorbestimmte Raumwinkel, insbesondere punktförmige Raumwinkel und/oder vorbestimmte Raumwinkel, bevorzugt verschiedenförmige Raumwinkel und/oder vorbestimmte Raumwinkel, abbilden, beugen und/oder streuen.

Bevorzugt stellen zwei oder mehrere Gruppen von Strukturen der zwei oder mehreren Gruppen von Strukturen und/oder zwei oder mehrere Gruppen von Pixeln der zwei oder mehreren Gruppen von Pixeln eine optische variable Information umfassend einen 3D-Effekt bereit.

Auch ist es möglich, dass ein oder mehrere oder alle der Strukturen elektromagnetische Strahlung, insbesondere einfallende elektromagnetische Strahlung, diffraktiv streuen, beugen und/oder abbilden.

Insbesondere weist das zumindest eine Pixelarray in zumindest einer Richtung zumindest bereichsweise eine von null verschiedene Krümmung auf.

Unter "Krümmung" wird insbesondere eine lokale Abweichung einer Kurve von einer Geraden verstanden. Unter der Krümmung einer Kurve wird insbesondere eine Richtungsänderung pro durchlaufender Länge und/oder Strecke eines genügend kurzen Kurvenstücks bzw. Kurvenverlaufs verstanden. Die Krümmung einer Geraden ist überall gleich null. Ein Kreis mit einem Radius R hat überall die gleiche Krümmung, nämlich 1/R. Bei den meisten Kurven ändert sich die Krümmung von Kurvenpunkt zu Kurvenpunkt. Insbesondere ändert sich die Krümmung von Kurvenpunkt zu Kurvenpunkt kontinuierlich, sodass die Kurven insbesondere keine Knicke und/oder Unstetigkeitsstellen aufweisen. Die Krümmung einer Kurve in einem Punkt P gibt somit an wie stark die Kurven der unmittelbaren Umgebung des Punktes P von einer Geraden abweicht. Der Betrag der Krümmung wird als Krümmungsradius bezeichnet und dieser entspricht dem Kehrwert des Betrages eines lokalen Radiusvektors. Der Krümmungsradius ist der Radius des Kreises, der gerade nur den Tangentialpunkt P berührt und/oder in einer lokalen Umgebung des Tangentialpunktes P die beste Näherung darstellt. Eine Kurve ist beispielsweise die zweidimensionale Oberfläche und/oder ein Segment einer Kugel oder einer Kreisfläche oder eine Kreisfläche.

Vorzugsweise beträgt zumindest eine laterale Abmessung ein oder mehrerer Pixel der zwei oder mehreren Pixel in dem zumindest einen Pixelarray zwischen 5 $\mu$m und 500 $\mu$m, bevorzugt zwischen 10 $\mu$m und 300 $\mu$m, weiter bevorzugt zwischen 20 $\mu$m und 150 $\mu$m.

Es ist möglich, dass eine oder mehrere laterale Abmessungen ein oder mehrerer Pixel der zwei oder mehreren Pixel in dem zumindest einen Pixelarray in eine oder mehrere Raumrichtungen in dem zumindest einen Pixelarray, insbesondere zumindest bereichsweise, periodisch, nicht-periodisch, pseudozufällig und/oder zufällig variieren.

Unter zufälliger Variation wird insbesondere verstanden, dass die der Variation, insbesondere die mit der Variation verknüpften Werte, zugrundeliegende Verteilung vorzugsweise eine Zufallsverteilung ist.

Unter pseudo-zufälliger Variation wird insbesondere verstanden, dass die der Variation, insbesondere die mit der Variation verknüpften Werte, zugrundeliegende Verteilung vorzugsweise eine Pseudozufallsverteilung ist.

Unter periodischer Variation wird insbesondere verstanden, dass sich die Variation, insbesondere die mit der Variation verknüpften Werte, vorzugsweise regelmäßig, insbesondere in regelmäßigen räumlichen und/oder zeitlichen Abstände, wiederholen.

Unter nicht-periodischer Variation wird insbesondere verstanden, dass sich die Variation, insbesondere die mit der Variation verknüpften Werte, vorzugsweise regelmäßig, insbesondere in regelmäßigen räumlichen und/oder zeitlichen Abstände, nicht wiederholen.

Weiter ist es möglich, dass eine oder mehrere laterale Abmessungen ein oder mehrerer Pixel der zwei oder mehreren Pixel in dem zumindest einen Pixelarray in eine oder mehrere Raumrichtungen in dem zumindest einen Pixelarray, insbesondere zumindest bereichsweise, maximal um $\pm70\%$, bevorzugt maximal um $\pm50\%$, um einem Mittelwert herum variieren.

Bevorzugt sind ein oder mehrere Pixel der zwei oder mehreren Pixel in dem zumindest einen Pixelarray, insbesondere zumindest bereichsweise, periodisch, nicht-periodisch, zufällig und/oder pseudozufällig in dem zumindest einen Pixelarray angeordnet.

Es ist möglich, dass die Pixel in dem Pixelarray eine Parkettierung ausformen. Als Parkettierung wird hierbei vorzugsweise eine lückenlose und überlappungsfreie Überdeckung einer Ebene durch gleichförmige oder unterschiedliche Teilflächen - hier insbesondere die Pixel - verstanden. Die Teilflächen bzw. Pixel können insbesondere komplexe Umrissformen aufweisen. Vorteilhafterweise weist die Parkettierung vorzugsweise keine Periodizität auf, sondern ist insbesondere aperiodisch. In einer Ausgestaltungsform stellt die Parkettierung bevorzugt eine Penrose-Parkettierung dar. In einer weiteren Ausgestaltungform ist die Parkettierung vorzugsweise aus vektorartigen flächigen, insbesondere aus länglichen, Pixeln aufgebaut. Die Form der länglichen Pixel kann hierbei insbesondere zumindest stückweise gerade Außenkanten aufweisen, sie kann vorzugsweise aber auch als Freiform vorliegen. Bevorzugt weisen derartige vektorartige flächige Pixel abgerundete Ecken und geschwungene Kanten auf, wobei weiter bevorzugt mehr als 50%, insbesondere bevorzugt mehr als 70%, der Ecken und Kanten des Pixelarrays abgerundet bzw. geschwungen sind. Unter einer abgerundeten Ecke wird vorzugsweise verstanden, dass die Ecke einen Kurvenradius von mindestens 2 $\mu$m, bevorzugt mindestens 5 $\mu$m, insbesondere mindestens 10 $\mu$m, aufweist. Gleichzeitig soll der Kurvenradius insbesondere maximal 300 $\mu$m, bevorzugt maximal 200 $\mu$m, insbesondere maximal 100 $\mu$m, sein.

Weiter bevorzugt sind ein oder mehrere Pixel der zwei oder mehreren Pixel in dem zumindest einen Pixelarray entlang von Kurven oder Kurvensegmenten oder Kreisbahnen oder Kreisbahnsegmenten angeordnet. Bevorzugt sind die Umrissformen der Teilflächen bzw. Pixel als Kurvensegmente oder Kreisbahnsegmente ausgestaltet, die insbesondere eine lückenlose Aneinanderreihung ermöglichen. Wird der den Pixeln zugeordnete vorbestimmte Raumwinkel vorzugsweise in Schritten von bevorzugt kleiner 10°, besonders bevorzugt kleiner 5°, insbesondere bevorzugt kleiner 2°, von einem Pixel zum nächsten Pixel verändert, kann so für einen Betrachter bevorzugt ein quasikontinuierlicher Bewegungsablauf eines einzelnen Punktes, beispielsweise ein Fine-Line Movement, bereitgestellt werden. Insbesondere durch Kombination von für einen Betrachter sichtbarer Punkte zu einem Muster, Motiv, Symbol, Icon, Bild, alphanumerischen Zeichen, Freiform, Quadrat, Kreis, Rechteck oder Polygon kann ein Bewegungsablauf entlang einer Kurve, eines Kurvensegments, einer Kreisbahn oder eines Kreisbahnsegments erzielt werden.

Es ist auch möglich, dass ein oder mehrere Strukturen der ein oder mehreren Strukturen der zwei oder mehreren Pixel des zumindest einen Pixelarrays, eine Gitterperiode bzw. einen mittleren Abstand der Strukturerhebungen insbesondere kleiner als die Hälfte, bevorzugt kleiner als dem Drittel, weiter bevorzugt kleiner als dem Viertel, der maximalen lateralen Abmessung der zwei oder mehreren Pixel, bevorzugt jedem der zwei oder mehreren Pixel, des zumindest einen Pixelarrays aufweisen.

Weiter ist es auch möglich, dass ein oder mehrere Strukturen der ein oder mehreren Strukturen eine beschränkte maximale Strukturtiefe aufweisen, wobei die beschränkte maximale Strukturtiefe insbesondere kleiner als 15 $\mu$m, bevorzugt kleiner als 10 $\mu$m, weiter bevorzugt kleiner gleich 7 $\mu$m, noch weiter bevorzugt kleiner gleich 4 $\mu$m, insbesondere bevorzugt kleiner gleich 2 $\mu$m, ist.

Insbesondere sind ein oder mehrere Strukturen der ein oder mehreren Strukturen derart ausgebildet, dass die beschränkte maximale Strukturtiefe der ein oder mehreren Strukturen für mehr als 50% der Pixel, insbesondere für mehr als 70% der Pixel, bevorzugt für mehr als 90% der Pixel, des zumindest einen Pixelarray kleiner gleich 15 $\mu$m, insbesondere kleiner gleich 7 $\mu$m, bevorzugt kleiner gleich 2 $\mu$m, ist.

Bevorzugt sind ein oder mehrere Strukturen der ein oder mehreren Strukturen derart ausgebildet, dass die beschränkte maximale Strukturtiefe der ein oder mehrerer Strukturen für alle Pixel des zumindest einen Pixelarrays kleiner gleich 15 $\mu$m, insbesondere kleiner gleich 7 $\mu$m, bevorzugt kleiner gleich 2 $\mu$m, ist.

Es ist auch möglich, dass ein oder mehrere Strukturen der ein oder mehreren Strukturen zueinander unterschiedlich oder ähnlich oder gleich oder identisch sind.

Weiter ist es möglich, dass ein oder mehrere Strukturen der ein oder mehreren Strukturen als achromatisch beugende Strukturen, vorzugsweise als Blaze-Gitter, insbesondere lineare Blaze-Gitter, ausgebildet sind, wobei insbesondere die Gitterperiode der achromatisch beugenden Strukturen größer als 3 μm, bevorzugt größer als 5 μm, ist und/oder wobei insbesondere mehr als 70% der Pixel, weiter bevorzugt mehr als 90% der Pixel, insbesondere bevorzugt jedes Pixel, der zwei oder mehreren Pixel des zumindest einen Pixelarray mindestens zwei Gitterperioden umfasst. Die Gitterperiode ist vorzugsweise zusammen mit der Gittertiefe und der Ausrichtung des Gitters in der x/y-Ebene definiert, in welchen Raumwinkel das in dem jeweiligen Pixel vorliegende Gitter insbesondere einfallendes Licht achromatisch beugt. Die Ausrichtung des Gitters in der x/y-Ebene wird bevorzugt auch als Azimutwinkel bezeichnet.

Insbesondere sind die achromatisch beugenden Strukturen in ein oder mehreren Pixeln der zwei oder mehreren Pixel in dem zumindest einen Pixelarray mit weiteren Mikrostrukturen und/oder Nanostrukturen, insbesondere linearen Gitterstrukturen, bevorzugt Kreuzgitterstrukturen, weiter bevorzugt Subwellenlängengitterstrukturen, überlagert.

Es ist möglich, dass ein oder mehrere Strukturen der ein oder mehreren Strukturen als konvex oder konkav wirkende Mikrolinsen und/oder Teilbereiche von Mikrolinsen, insbesondere als reflektiv wirkende Mikrolinsen und/oder Teilbereiche von Mikrolinsen, ausgebildet sind, wobei insbesondere die Fokuslänge der ein oder mehreren Strukturen zwischen 0,04 mm bis 5 mm, insbesondere 0,06 mm bis 3 mm, bevorzugt 0,1 mm bis 2 mm, beträgt und/oder wobei insbesondere die Fokuslänge in einer Richtung X und/oder Y durch die Gleichung

$$f_{X,Y} = \frac{\Delta_{X,Y}/2}{\tan(\phi_{X,Y}/2)}$$

bestimmt ist, wobei bevorzugt $\Delta_{X,Y}$ die jeweilige laterale Abmessung ein oder mehrerer Pixels der zwei oder mehreren Pixel des zumindest einen Pixelarrays in die Richtung X beziehungsweise in die Richtung Y ist und $\phi_{X,Y}$ der jeweilige Raumwinkel in die Richtung X beziehungsweise in die Richtung Y ist, in welche die ein oder mehreren Strukturen einfallende elektromagnetische Strahlung abbilden, beugen und/oder streuen.

Weiter bevorzugt sind ein oder mehrere Strukturen der ein oder mehreren Strukturen als Zylinderlinse ausgebildet, wobei insbesondere eine Fokuslänge der ein oder mehreren Strukturen unendlich groß ist.

Weiter ist es möglich, dass ein oder mehrere Strukturen der ein oder mehreren Strukturen als Fresnelsche Mikrolinsenstrukturen, insbesondere reflektiv wirkende Fresnelsche Mikrolinsenstrukturen, ausgebildet sind, wobei insbesondere die Gitterlinien der Fresnelschen Mikrolinsenstrukturen als gekrümmte Gitterlinien ausgebildet sind und/oder Gitterlinien mit variierenden Gitterperioden aufweisen und/oder wobei insbesondere jedes Pixel der zwei oder mehreren Pixel des zumindest einen Pixelarrays, vorzugsweise in zumindest einer Raumrichtung, mindestens zwei Gitterperioden umfasst.

Zur Berechnung des Mikrostrukturprofils für Fresnelsche Mikrolinsenstrukturen wird vorzugsweise jedem Pixel in Abhängigkeit des zugeordneten Raumwinkels und der lateralen Abmessung des Pixels genau eine virtuelle Feldquelle zugeordnet. Die virtuelle Feldquelle strahlt insbesondere eine virtuelle Kugelwelle ab. Das Phasenbild des von der virtuellen Feldquelle abgestrahlte virtuelle elektromagnetische Feld wird bevorzugt in der Fläche des Pixels berechnet und vorzugsweise linear in ein virtuelles Strukturprofil umgewandelt, wobei insbesondere ein Phasenwert von 0 der minimalen Strukturtiefe und ein Phasenwert von 2*Pi der maximalen virtuellen Strukturtiefe entspricht.

Es ist auch möglich, dass die vorstehend aufgelisteten Varianten für ein oder mehrere oder alle Strukturen der ein oder mehreren Strukturen ein binäres Strukturprofil oder eine Überlagerung aus ein oder mehreren binären Strukturprofilen aufweisen und/oder dass ein oder mehrere oder alle Strukturen der ein oder mehreren Strukturen ein binäres Strukturprofil oder eine Überlagerung aus ein oder mehreren binären Strukturprofilen aufweisen. Derartige binäre Strukturen beziehungsweise Mikrostrukturen weisen insbesondere eine Grundfläche und ein oder mehrere Strukturelemente auf, welche bevorzugt jeweils eine gegenüber der Grundfläche erhöhte oder versenkte Elementfläche und bevorzugt eine zwischen der Elementfläche und der Grundfläche angeordneten Flanke aufweisen, wobei insbesondere die Grundfläche der Mikrostruktur eine durch Koordinatenachsen x und y aufgespannte Grundebene definiert, wobei bevorzugt die Elementflächen der Strukturelemente jeweils im Wesentlichen parallel zu der Grundebene verlaufen und wobei vorzugsweise die Elementflächen der Strukturelemente und die Grundfläche in einer senkrecht zur Grundebene in Richtung einer Koordinatenachse z verlaufende Richtung beabstandet sind, insbesondere mit einem ersten Abstand h, welcher vorzugsweise derart gewählt ist, dass insbesondere durch Interferenz des an der Grundfläche und den Elementflächen reflektierten Lichts im Auflicht und/oder insbesondere durch Interferenz des durch die Elementflächen und die Grundfläche transmittierten Lichts im Durchlicht eine zweite Farbe in den ein oder mehreren ersten Zonen generiert wird. Hierbei wird vorzugsweise in die direkte Reflexion oder Transmission die zweite Farbe generiert und insbesondere die dazu komplementäre erste Farbe in der ersten oder in höheren Ordnungen. Beispielsweise kann die erste Farbe Gelb und die zweite Farbe Blau sein oder die erste Farbe kann Grün und die zweite Farbe Rot sein.

Weiter ist es möglich, dass der erste Abstand zur Erzielung der jeweiligen gewünschten ersten Farbe eingestellt wird. Vorzugsweise beträgt hierbei der erste Abstand h zwischen 150 nm und 1000 nm, weiter bevorzugt zwischen 200 nm bis 600 nm. Für Effekte in Durchlicht beträgt der erste Abstand vorzugsweise zwischen 300 nm und 4000 nm, weiter bevorzugt zwischen 400 nm bis 2000 nm. Der einzustellende erste Abstand hängt hierbei insbesondere vom Brechungsindex des Materials ab, welches sich vorzugsweise zwischen den beiden Ebenen befindet.

Vorzugsweise ist eine ausreichende Konstanz der Strukturhöhe beziehungsweise des ersten Abstands für das Erzielen eines möglichst einheitlichen Farbeindrucks vorteilhaft oder sinnvoll. Bevorzugt variiert dieser erste Abstand in einem Flächenbereich mit einem einheitlichen Farbeindruck weniger als +/-50 nm, weiter bevorzugt weniger als +/- 20 nm, noch weiter bevorzugt weniger als +/- 10 nm.

Weiter bevorzugt sind mehrere stufenförmig angeordnete Strukturelemente vorgesehen, wobei insbesondere alle Strukturelemente im Wesentlichen parallel zu der Grundfläche angeordnet sind und bevorzugt der Abstand von einem Strukturelement zum nächsten jeweils entweder der erste Abstand oder ein ganzzahliges Vielfaches des ersten Abstandes ist.

Vorzugsweise sind ein oder mehrere oder alle Strukturen der ein oder mehreren Strukturen weniger bevorzugt als Mikrospiegel und/oder Mikroprismen ausgebildet, welche Licht bevorzugt achromatisch reflektieren, insbesondere nicht als Mikrospiegel und/oder Mikroprismen ausgebildet, welche Licht bevorzugt achromatisch reflektieren.

Weiter bevorzugt bilden ein oder mehrere oder alle Strukturen der ein oder mehreren Strukturen einfallendes Licht diffraktiv ab.

Es ist möglich, dass ein oder mehrere Strukturen der ein oder mehreren Strukturen eine Anzahl von mindestens 2 Erhebungen, insbesondere mindestens 3 Erhebungen, bevorzugt mindestens 4 Erhebungen, vorzugsweise pro Pixel, aufweisen.

Weiter ist es möglich, dass mehr als 70% der Pixel, insbesondere mehr als 90% der Pixel, der zwei oder mehreren Pixel in dem zumindest einen Pixelarray ein oder mehrere Strukturen der ein oder mehreren Strukturen aufweisen, welche eine Anzahl von mindestens 2 Erhebungen, insbesondere mindestens 3 Erhebungen, bevorzugt mindestens 4, vorzugsweise pro Pixel, aufweisen.

Es ist auch möglich, dass ein oder mehrere Strukturen der ein oder mehreren Strukturen, insbesondere in ein oder mehreren Pixeln der zwei oder mehreren Pixel des zumindest einen Pixelarrays, als chromatische Gitterstrukturen, insbesondere als lineare Gitter, bevorzugt als lineare Gitter mit einem sinusförmigen Profil, und/oder Nanotext und/oder Spiegelflächen, ausgebildet sind.

Weiter ist es auch möglich, dass ein oder mehrere Strukturen der ein oder mehreren Strukturen als Subwellenlängengitter, insbesondere als lineare Subwellenlängengitter und/oder als Mottenaugen-artige Strukturen, ausgebildet sind, wobei bevorzugt die Gitterperiode der Subwellenlängengitter, insbesondere der linearen Subwellenlängengitter und/oder der Mottenaugen-artigen Strukturen, weniger als 450 nm beträgt und/oder wobei insbesondere zumindest ein derartiges Pixelarray einen für einen Betrachter erfassbaren optisch variablen Effekt, insbesondere einen für einen Betrachter erfassbaren zusätzlichen optisch variablen Effekt, beim Kippen des optisch variablen Elements und/oder des zumindest einen Pixelarray bereitstellt.

Vorzugsweise sind ein oder mehrere Strukturen der ein oder mehreren Strukturen mit einer Metallschicht versehen und/oder absorbieren einfallende elektromagnetische Strahlung, wobei insbesondere die zwei oder mehreren Pixel des zumindest einen Pixelarrays in Reflexion für einen Betrachter in dunkelgrau bis schwarz erfassbar sind.

Insbesondere weisen ein oder mehrere Strukturen der ein oder mehreren Strukturen eine HRI-Schicht auf, wobei insbesondere die zwei oder mehreren Pixel des zumindest einen Pixelarrays in Reflexion für einen Betrachter farbig erfassbar sind.

Es ist möglich, dass ein oder mehrere Strukturen der ein oder mehreren Strukturen einfallende elektromagnetische Strahlung pseudo-zufällig oder zufällig in alle Raumrichtungen abbilden, beugen und/oder streuen, wobei das zumindest eine Pixelarray insbesondere ein oder mehreren Pixel, in Reflexion für einen Betrachter isotrop weiß, bevorzugt isotrop achromatisch, erfassbar ist.

Weiter ist es möglich, dass ein oder mehrere Strukturen der ein oder mehreren Strukturen bei einer Verbiegung des Elements und/oder des zumindest einen Pixelarray einen optisch variablen Effekt bereitstellen, wobei insbesondere ein erstes Motiv in einem nicht gebogenen Zustand des Elements und/oder des zumindest einen Pixelarray erfassbar ist und ein zweites Motiv in einem gebogenen Zustand des Elements und/oder des zumindest einen Pixelarray erfassbar ist.

Beispielsweise können die Motive bei Betrachtung beziehungsweise bei Erfassung durch einen Betrachter und/oder einen Sensor die Form von einem/einer oder mehreren Buchstaben, Porträts, Landschafts- oder Bauwerksdarstellungen, Bildern, Barcode, QR-Code, alphanumerischen Zeichen, Schriftzeichen, geometrische Freiformen, Quadraten, Dreiecken, Kreisen, gekrümmten Linien und/oder Umrissen oder die Form von Kombinationen von ein oder mehreren der vorstehenden Formen annehmen.

Unter "Freiform" wird insbesondere eine offene oder geschlossene zweidimensionale Fläche in einem dreidimensionalen Raum verstanden, welche eben oder in zumindest einer Richtung gekrümmt ist. Beispielsweise sind die Oberfläche oder ein Segment einer Kugel oder die Oberfläche oder ein Segment eines Torus geschlossene Freiformflächen. Eine Sattelfläche oder eine gekrümmte Kreisfläche sind beispielsweise offene Freiformflächen.

Es ist auch möglich, dass sich die ein oder mehreren Motive jeweils aus einem oder mehreren Mustern zusammensetzen und/oder überlagern, wobei die Muster vorzugsweise eine Geometrie und/oder Form aufweisen, welche insbesondere jeweils ausgewählt oder kombiniert werden aus: Linie, Gerade, Motiv, Bild, Dreieck, Barcode, QR-Code, Welle, Viereck, Vieleck, gekrümmte Linie, Kreis, Oval, Trapez, Parallelogramm, Raute, Kreuz, Sichel, Aststruktur, Stern, Ellipse, Zufallsmuster, Pseudo-Zufallsmuster, Mandelbrotmenge, insbesondere Fraktal oder Apfelmännchen, wobei sich die Muster insbesondere überlagern und/oder ergänzen.

Im Folgenden werden bevorzugte Ausführungsformen des Sicherheitsdokuments genannt.

Vorzugsweise weist das Sicherheitsdokument in ein oder mehreren Bereichen, insbesondere in ein oder mehreren streifenförmigen Bereichen, bevorzugt in ein oder mehreren fadenförmigen Bereichen, ein oder mehrere optisch variable Elemente auf. Einzelne optisch variablen Elemente können dabei insbesondere voneinander beabstandet sein und zwischen den optisch variablen Elementen vorzugsweise nicht optisch variable Bereich angeordnet sein. Alternativ dazu ist es möglich, dass einzelne optisch variable Elemente bevorzugt direkt aneinander angrenzen und/oder ineinander übergehen und insbesondere gemeinsam ein optisch variables Kombinationselement ausbilden.

Insbesondere sind ein oder mehrere Bereiche der ein oder mehreren Bereiche umfassend jeweils ein oder mehrere optisch variablen Elemente in Streifenform und/oder in Patch-Form ausgebildet.

Bevorzugt sind ein oder mehrere optische variable Elemente bei Betrachtung des Sicherheitsdokuments entlang eines durch das Sicherheitsdokument aufgespannten Flächennormalenvektors zumindest teilweise überlappend angeordnet.

Im Folgenden werden bevorzugte Ausführungsformen des Verfahrens zur Herstellung eines optisch variablen Elements genannt.

Es ist möglich, dass jedem Pixel der zwei oder mehreren virtuellen Pixel des zumindest einen virtuellen Pixelarray zumindest ein Raumwinkel zugeordnet wird.

Es ist möglich, dass jedes Pixel der zwei oder mehreren Pixel des zumindest einen Pixelarray ein oder mehrere, einfallendes Licht gerichtet abbildende, beugende und/oder streuende Strukturen, insbesondere Mikrostrukturen, umfasst, wobei derartige Strukturen einfallendes Licht, bevorzugt sehr effizient, in ein oder mehrere vorbestimmte Raumwinkel der ein oder mehreren vorbestimmten Raumwinkel abbilden, beugen und/oder streuen, insbesondere auf einen Punkt im Raum fokussiert, wobei ein solcher Punkt beispielsweise ein Fokuspunkt sein kann.

Vorzugsweise sind für jedes Pixel der zwei oder mehreren Pixel des zumindest einen Pixelarray ein oder mehrere vorbestimmte Raumwinkel der ein oder mehreren Raumwinkel derart ausgebildet, dass die von den Pixeln umfassten Mikrostrukturen einfallendes Licht in diese vorbestimmten Raumwinkel abbilden, beugen und/oder streuen, wobei bevorzugt ein oder mehrere Effekte, insbesondere ein oder mehrere statische oder variable optische Effekte, generiert werden.

Weiter ist es möglich, dass ein oder mehrere Pixel der zwei oder mehreren Pixel des zumindest einen Pixelarray ein vorbestimmtes, von einem Betrachter oder einem Sensor erfassbares 3D-Objekt generieren, wobei vorzugsweise unterschiedliche Gruppen von ein oder mehreren Pixeln der zwei oder mehreren Pixel des zumindest einen Pixelarray umfassend ein oder mehrere Strukturen der ein oder mehreren Strukturen, insbesondere umfassend ein oder mehrere unterschiedliche Strukturen, einfallendes Licht in ein oder mehrere, insbesondere unterschiedliche, vorbestimmte Raumwinkel der ein oder mehreren vorbestimmten Raumwinkel, bevorzugt ein oder mehrere Raumwinkel, abbilden, beugen und/oder streuen.

Vorzugsweise korrelieren ein oder mehrere vorbestimmte Raumwinkel der ein oder mehreren vorbestimmten Raumwinkel, welche insbesondere ein oder mehreren Pixeln der zwei oder mehreren Pixel des zumindest einen Pixelarray zugeordnet sind, vorzugsweise mit einer lokalen, zumindest in eine Raumrichtung verlaufenden Krümmung eines 3D-Objekts. Das für einen Betrachter virtuell erkennbare 3D-Objekt umfasst hierbei insbesondere eine Vielzahl von Lichtpunkten, welche bevorzugt ausfallendes Licht aufweisen, welches bevorzugt als einfallendes Licht von den ein oder mehreren Strukturen der ein oder mehreren Strukturen abgebildet, gebeugt und/oder gestreut wurde. Jedem Pixel der zwei oder mehreren Pixel des zumindest einen Pixelarray ist vorzugsweise jeweils ein Lichtpunkt zugeordnet und/oder generiert jeweils einen Lichtpunkt, wobei ein oder mehrere Lichtpunkte der Vielzahl von Lichtpunkten insbesondere einander überlappen, bevorzugt einander nicht überlappen.

Bevorzugt werden ein oder mehrere oder alle Strukturen der ein oder mehreren Strukturen mittels ein oder mehrerer Computer, insbesondere umfassend zumindest einen Prozessor und zumindest einen Speicher, bevorzugt umfassend zumindest einen Grafikprozessor und zumindest einen Speicher, berechnet. Insbesondere im Unterschied zu den aus dem Stand der Technik bekannten Computer-generierten Hologrammen (CGH) wird nicht der Gesamteffekt, beispielsweise das virtuelle 3D-Objekt oder der achromatische Bewegungseffekt, insgesamt bzw. gemeinsam berechnet. Erfindungsgemäß wird vorzugsweise für jedes Pixel die jeweilige Struktur separat berechnet, welche das Licht in die vorgegebene Richtung achromatisch abbildet, beugt und/oder streut. Jeder Pixel wirkt im Wesentlichen insbesondere unabhängig von den anderen Pixeln. Das erfindungsgemäße Zusammenspiel der optischen Wirkung aller Pixel des zumindest einen Pixelarrays ergibt vorzugsweise den gewünschten Gesamteffekt des zumindest einen Pixelarrays.

Für die Berechnung des Sicherheits- und/oder Dekorelements wird jedem Pixel des zumindest einen Pixelarray ein Raumwinkel zugeordnet, in den die Mikrostruktur das Licht abbilden, beugen und/oder streuen soll. Der jeweilige zugeordnete Raumwinkel korreliert vorzugsweise direkt mit der lokalen Krümmung des zumindest einen Pixelarrays.

Es ist möglich, dass der zumindest eine zugeordnete Raumwinkel und/oder der zumindest eine Bereich des zumindest einen zugeordneten Raumwinkels das zumindest eine Segment aufspannt, wobei insbesondere das zumindest eine Segment zumindest einem Segment einer Kugel, bevorzugt zumindest einem konischen Segment, entspricht, wobei der halbe Öffnungswinkel des zumindest einen Segments kleiner als 20°, bevorzugt kleiner als 15°, weiter bevorzugt kleiner als 10°, ist.

Weiter ist es möglich, dass die virtuellen Feldquellen, welche insbesondere in und/oder auf ein oder mehreren Teilbereichen des zumindest einen Segments und/oder auf dem zumindest einen Bereich des zumindest einen zugeordneten Raumwinkels angeordnet sind, in zumindest einer Richtung periodisch und/oder pseudo-zufällig und/oder zufällig auf ein oder mehreren Teilbereichen der ein oder mehreren Teilbereiche des zumindest Segments und/oder des zumindest einen Bereichs des zumindest einen zugeordneten Raumwinkels angeordnet sind.

Es ist auch möglich, dass die Abstände benachbarter virtueller Feldquellen zwischen 0,01 mm und 100 mm, insbesondere zwischen 0,1 mm und 50 mm, bevorzugt zwischen 0,25 mm und 20 mm, in und/oder auf ein oder mehreren Teilbereichen der ein oder mehreren Teilbereiche des zumindest einen Segments und/oder des zumindest einen Bereichs des zumindest einen zugeordneten Raumwinkels liegen, und/oder dass die Abstände benachbarter virtueller Feldquellen insbesondere im Mittel zwischen 0,01 mm und 100 mm, insbesondere zwischen 0,1 mm und 50 mm, bevorzugt zwischen 0,25 mm und 20 mm, in und/oder auf ein oder mehreren Teilbereichen der ein oder mehreren Teilbereiche des zumindest einen Segments und/oder des zumindest einen Bereichs des zumindest einen zugeordneten Raumwinkels liegen.

Weiter ist es auch möglich, dass die Anordnung der virtuellen Feldquellen, insbesondere der virtuellen Punktfeldquellen, als ein Kreuzraster, bevorzugt einem äquidistanten Kreuzraster, in und/oder auf ein oder mehreren Teilbereichen der ein oder mehreren Teilbereiche des zumindest einen Segments und/oder des zumindest einen Bereichs des zumindest einen zugeordneten Raumwinkels erfolgt, wobei der Abstand benachbarter virtueller Feldquellen zueinander zwischen 0,01 mm und 100 mm, insbesondere zwischen 0,1 mm und 50 mm, beträgt und/oder wobei der Winkel zwischen zwei benachbarten virtuellen Feldquellen zueinander, insbesondere relativ zur Position der jeweiligen ein oder mehreren virtuellen Pixel der zwei oder mehreren virtuellen Pixel des zumindest einen virtuellen Pixelarray, kleiner als 1°, vorzugsweise kleiner als 0,5°, ist.

Es ist weiter möglich, dass der halbe Öffnungswinkel eines kugelförmigen Segments und/oder des zumindest einen Segments einer Kugel kleiner 20°, insbesondere kleiner 15°, bevorzugt kleiner 10°, ist, wobei ein oder mehrere Punktfeldquellen der ein oder mehrere auf dem kugelförmigen Segment und/oder dem zumindest einen Segment einer Kugel vorzugsweise auf einem räumlich äquidistanten Kreuzraster angeordnet, wobei der Winkel zwischen zwei benachbarten Punktfeldquellen, insbesondere räumlich benachbarten Punktfeldquellen, bevorzugt kleiner als 1°, weiter bevorzugt kleiner als 0,5°, ist.

Vorzugsweise weisen ein oder mehrere virtuelle Feldquellen der ein oder mehreren virtuellen Feldquellen eine Anordnung in Form von Mikrosymbolen auf, insbesondere ausgewählt aus: Buchstabe, Porträt, Bild, alphanumerisches Zeichen, Schriftzeichen, geometrische Freiform, Quadrat, Dreieck, Kreis, gekrümmte Linie, Umriss.

Weiter bevorzugt liegen die lateralen Abmessungen der Mikrosymbole zwischen 0,1° und 10°, insbesondere zwischen 0,2° und 5°.

Bevorzugt sind eine erste Gruppe von ein oder mehreren virtuellen Feldquellen der ein oder mehreren virtuellen Feldquellen aus einem Abstand von 0,3 m, insbesondere von 0,15 m bis 0,45 m, nicht auf einen Schirm projizierbar und/oder eine zweite Gruppe von ein oder mehreren virtuellen Feldquellen der ein oder mehreren virtuellen Feldquellen aus einem Abstand von 1,0 m, insbesondere von 0,8 m bis 1,2 m, auf einen Schirm projizierbar.

Insbesondere bevorzugt weist das virtuelle elektromagnetische Feld, welches von ein oder mehreren der virtuellen Feldquellen ausgeht, insbesondere von allen der virtuellen Feldquellen ausgeht, die gleiche Intensität und/oder die gleiche Intensitätsverteilung über den zumindest einen zugeordneten Raumwinkel und/oder über das zumindest eine Segment und/oder über den zumindest einen Bereich des zumindest einen zugeordneten Raumwinkels auf.

Unter "Intensität" wird insbesondere der Anteil der gesamten Strahlungsleistung verstanden, welche von einer oder mehreren der virtuellen Feldquellen in einen vorbestimmten Raumwinkel emittiert wird, wobei die Strahlungsleistung insbesondere als die Energiemenge betrachtet wird, welche innerhalb eines vorbestimmten Zeitintervalls von einem elektromagnetischen Feld, insbesondere von einer elektromagnetischen Welle, transportiert wird. Die Strahlungsleistung wird vorzugsweise in der Einheit Watt angegeben.

Es ist möglich, dass das virtuelle elektromagnetische Feld, welches von zwei oder mehreren der virtuellen Feldquellen ausgeht, insbesondere von allen der virtuellen Feldquellen ausgeht, unterschiedliche Intensitäten und/oder unterschiedliche Intensitätsverteilungen über ein oder mehrere Raumwinkel, insbesondere über den gesamten Raumwinkel, und/oder über den zumindest einen Bereich und/oder über das zumindest eine Segment des zumindest einen zugeordneten Raumwinkels aufweist.

Weiter ist es möglich, dass das virtuelle elektromagnetische Feld, welches von ein oder mehreren der virtuellen Feldquellen ausgeht, insbesondere von allen der virtuellen Feldquellen ausgeht, eine Intensitätsverteilung über den zumindest einen zugeordneten Raumwinkel und/oder über das zumindest eine Segment und/oder über den zumindest einen Bereich des zumindest einen zugeordneten Raumwinkels aufweist, welche gaußförmig oder supergaußförmig verteilt ist.

Es ist auch möglich, dass das virtuelle elektromagnetische Feld, welches von zwei oder mehreren der virtuellen Feldquellen ausgeht, insbesondere von allen der virtuellen Feldquellen ausgeht, unterschiedliche Intensitäten und/oder unterschiedliche Intensitätsverteilungen über den zumindest einen zugeordneten Raumwinkel und/oder über das zumindest eine Segment und/oder über den zumindest einen Bereich des zumindest einen zugeordneten Raumwinkels aufweist.

Weiter ist es auch möglich, dass das virtuelle elektromagnetische Feld, welche von ein oder mehreren der virtuellen Feldquellen ausgeht, insbesondere von allen der virtuellen Feldquellen ausgeht, eine isotrope oder eine anisotrope Intensitätsverteilung über den zumindest einen zugeordneten Raumwinkels und/oder über den zumindest einen Bereich und/oder über das zumindest eine Segment des zumindest einen zugeordneten Raumwinkels aufweist.

Insbesondere bilden ein oder mehrere virtuelle Feldquellen der ein oder mehreren virtuellen Feldquellen, insbesondere alle der virtuellen Feldquellen, virtuelle Punktfeldquellen aus, wobei die virtuellen Punktfeldquellen vorzugsweise virtuelle Kugelwellen abstrahlen.

Unter "Kugelwelle" oder "virtueller Kugelwelle" wird eine Welle verstanden, welche sich von einer Feldquelle, insbesondere einer virtuellen Feldquelle, in den gesamten Raumwinkel, insbesondere in einem Raumwinkel von $4\pi$, in konzentrischen Wellenfronten ausbreitet, wobei die Feldquelle bevorzugt als punktförmige Quelle der Kugelwelle verstanden wird.

Es ist möglich, dass die ein oder mehreren virtuellen Feldquellen, insbesondere ein oder mehrere virtuelle Punktfeldquellen, jeweils ein oder mehrere virtuelle Felder der ein oder mehreren virtuellen Felder als virtuelle Kugelwellen aus einem Abstand von 1 m, insbesondere zu ein oder mehreren Pixeln der zwei oder mehreren Pixel des zumindest einen Pixelarray abstrahlen. Hierbei wird vorzugsweise eine gleich helle Fläche und/oder eine Fläche homogener Intensität in einem Abstand von 1 m zu den ein oder mehreren Pixel erzeugt, wobei die Größe und/oder Form der Fläche durch den zumindest einen zugeordneten Raumwinkel und/oder über das zumindest eine Segment und/oder durch den zumindest einen Bereich des zumindest einen zugeordneten Raumwinkels bestimmt wird.

Weiter ist es möglich, dass insbesondere das resultierende, zumindest eine Pixelarray und/oder das resultierende optisch variable Element bei einem Abstand von 30 cm, bevorzugt bei einem typischen und/oder normalen Leseabstand oder Betrachtungsabstand eines menschlichen Betrachters und/oder Sensors, visuell bevorzugt nicht als Abbildung, sondern weiter bevorzugt als Streuung erfasst wird. Insbesondere bei einem Abstand von 1 m wird die Fläche, insbesondere die gleich helle Fläche und/oder die Fläche homogener Intensität, sichtbar.

Auch ist es möglich, einzelne virtuelle Punktfeldquellen zu deaktivieren, wobei vorzugsweise die deaktivierten Punktfeldquellen in einem Abstand von 1 m als ein oder mehrere Motive, insbesondere als Text, auf der gleich hellen Fläche und/oder in der Fläche homogener Intensität für einen Betrachter und/oder Sensor erfassbar sind. Insbesondere strahlt eine deaktivierte Feldquelle und/oder Punktfeldquelle keine virtuellen elektromagnetischen Felder ab. Ein Betrachter und/oder ein Sensor ist insbesondere nicht in der Lage, das durch die deaktivierten Punktfeldquellen verursachte Fehlen einzelner Lichtpunkte in einem Abstand von 30 cm zu erfassen, wobei derart vorteilhaft Information in dem zumindest einen Pixelarray und/oder dem optisch variablen Element versteckt werden können.

Weiter ist es auch möglich, die virtuellen Punktfeldquellen derart in dem zumindest einen zugeordneten Raumwinkel und/oder in dem zumindest einen Bereich des zumindest einen zugeordneten Raumwinkels anzuordnen, dass vorzugsweise ein Motiv, insbesondere ein Bild, in einem Abstand von 1 m von ein oder mehreren Pixel der zwei oder mehreren Pixel des zumindest einen Pixelarrays generiert wird und/oder bevorzugt von einem Betrachter und/oder einem Sensor erfassbar ist.

Vorzugsweise wird das virtuelle elektromagnetische Feld $U_i$ ausgehend von einer i-ten virtuellen Punktfeldquelle am Ort $(x_i, y_i, z_i)$ zumindest einer Koordinate $(x_h, y_h, z_h)$, insbesondere einer Koordinate $(x_h, y_h, z_h=0) = (x_h, y_h)$, in und/oder auf ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, mittels der Gleichung

$$U_i(x_h, y_h) = \frac{exp(ikr)}{r}, \quad r = \sqrt{(x_h - x_i)^2 + (y_h - y_i)^2 + z_i^2},$$

berechnet.

Es ist möglich, dass das virtuelle elektromagnetische Feld $U_i$ ein oder mehrere Wellenlängen umfasst, welche insbesondere im sichtbaren Spektralbereich von 380 nm bis 780 nm, bevorzugt von 430 nm bis 690 nm, bevorzugt in ein oder mehreren Teilen eines infraroten, sichtbaren beziehungsweise visuellen, und/oder ultravioletten Spektralbereichs liegen, wobei ein oder mehrere, jeweils benachbarte Wellenlängen der ein oder mehreren Wellenlängen, bevorzugt in dem sichtbaren Spektralbereich, vorzugsweise äquidistant, zueinander beabstandet sind.

Es ist weiter möglich, dass die ein oder mehreren Wellenlängen, insbesondere ein oder mehrere Wellenlängen der ein oder mehreren virtuellen elektromagnetischen Wellen, bevorzugt ein oder mehrere Wellenlängen des einfallenden Lichts beziehungsweise der einfallenden elektromagnetischen Strahlung, aus dem infraroten und/oder sichtbaren und/oder ultravioletten Spektrum, insbesondere aus dem elektromagnetischen Spektrum, ausgewählt sind.

Unter einem infraroten Spektrum werden vorzugsweise eine oder mehrere Teile des Infrarotbereichs des elektromagnetischen Spektrums verstanden, wobei das infrarote Spektrum insbesondere aus einem oder mehreren Teilen des Wellenlängenbereichs von 780 nm bis 1400 nm ausgewählt ist.

Unter einem sichtbaren Spektrum werden vorzugsweise ein oder mehrere Teile des sichtbaren Bereichs des elektromagnetischen Spektrums verstanden, wobei das sichtbare Spektrum insbesondere aus einem oder mehreren Teilen des Wellenlängenbereichs von 380 nm bis 780 nm ausgewählt ist. Insbesondere ist ein sichtbares Spektrum für das unbewaffnete menschliche Auge erfassbar.

Unter einem ultravioletten Spektrum werden vorzugsweise ein oder mehrere Teile des Ultraviolettbereichs des elektromagnetischen Spektrums verstanden, wobei das ultraviolette Spektrum insbesondere aus einem oder mehreren Teilen des Wellenlängenbereichs von 250 nm bis 380 nm ausgewählt ist.

Eine Berechnung ein oder mehrerer virtueller Strukturprofile der ein oder mehreren virtuellen Strukturprofile ein oder mehrerer oder aller virtueller Pixel der zwei oder mehreren virtuellen Pixel des zumindest einen virtuellen Pixelarray für ein oder mehrere Wellenlängen, insbesondere für mehrere Wellenlängen im sichtbaren Spektralbereich zwischen 380 nm und 780 nm, bevorzugt zwischen 430 nm und 690 nm, ist möglich, wobei die ein oder mehreren Wellenlängen vorzugsweise mit einer gleich hohen Effizienz berechnet werden. Die wellenlängenabhängigen Teilfelder $U_i$ werden insbesondere mit der Effizienz gewichtet und summiert.

Bevorzugt werden die ein oder mehreren virtuellen Strukturprofile für mindestens fünf über den sichtbaren Spektralbereich verteilte Wellenlängen berechnet, wobei die resultierenden, ausgebildeten Strukturen einfallendes Licht achromatisch und vorteilhafterweise ohne störende diffraktive Farbeffekte in zumindest einen vorbestimmten Raumwinkels abbilden, beugen und/oder streuen.

Vorzugsweise werden die mindestens fünf Wellenlängen gleichmäßig über den sichtbaren Spektralbereich verteilt gewählt. In einer alternativen Ausgestaltungsform werden vorzugsweise mindestens sechs Wellenlängen auf den Flanken der Empfindlichkeitskurve der menschlichen Photorezeptoren gewählt und bevorzugt je zwei Wellenlängen auf je einer Flanke jedes Photorezeptor. Für den blauen Rezeptor werden die zwei Wellenlängen bevorzugt im Bereich 420 nm bis 460 nm gewählt, und/oder für den grünen Rezeptor werden die zwei Wellenlängen bevorzugt im Bereich 470 nm bis 530 nm gewählt, und/oder für den roten Rezeptor werden die zwei Wellenlängen bevorzugt im Bereich 560 nm bis 630 nm gewählt.

Insbesondere ist die zumindest eine Wellenlänge in dem Wellenvektor, bevorzugt dem Wellenvektor $k = 2 \times \pi / \lambda$, enthalten.

Weiter ist es möglich, dass das virtuelle elektromagnetische Feld $U_i$ ein oder mehrere Wellenlängen umfasst, welche insbesondere im infraroten, sichtbaren und/oder ultravioletten Spektralbereich liegen, wobei ein oder mehrere, jeweils benachbarte Wellenlängen der ein oder mehreren Wellenlängen, bevorzugt in dem infraroten, sichtbaren und/oder ultravioletten Spektralbereich, vorzugsweise äquidistant, zueinander beabstandet sind.

Vorzugsweise wird das virtuelle elektromagnetische Gesamtfeld $U_p$ in und/oder auf ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, mittels der Gleichung

$$U_p\left(x_p, y_p\right) = U_r^*\left(x_p, y_p\right) \sum_{i=1}^{N_p} U_i\left(x_p, y_p\right)$$

berechnet, wobei insbesondere die virtuellen elektromagnetischen Felder $U_i$ ausgehend von $i = 1, ..., N_p$ virtuellen Punktfeldquellen an zumindest einer Koordinate $(x_p, y_p, z_p=0) = (x_p, y_p)$ und/oder insbesondere die optionale Referenzwelle $U_r^*$, bevorzugt die zumindest eine optionale Referenzwelle $U_r^*$, an zumindest einem Punkt oder für die Parameter $(x_p, y_p)$ in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, berechnet werden.

Es ist möglich, dass die zumindest eine optionale Referenzwelle derart gewählt wird, dass für ein oder mehrere virtuelle Feldquellen der ein oder mehreren Feldquellen die entsprechenden Intensitäten und Phasen ideal kompensiert werden. Hierbei kann die zumindest eine optionale Referenzwelle beispielsweise die einfallende elektromagnetische Strahlung von einer Spotlampe in einem Abstand von 1,5 m von dem zumindest einen Pixelarray und/oder dem optisch variablen Element simulieren. Insbesondere ist die Phase der zumindest einen optionalen Referenzwelle in ein oder mehreren Phasenbildern der ein oder mehreren Phasenbilder zur Berechnung der virtuellen Strukturprofile für die ein oder mehreren virtuellen Pixel der zwei oder mehreren virtuellen Pixel des zumindest einen virtuellen Pixelarray enthalten.

Insbesondere werden ein oder mehrere Phasenbilder der ein oder mehreren Phasenbilder in ein virtuelles Strukturprofil umgewandelt, bevorzugt linear in ein virtuelles Strukturprofil umgewandelt, wobei ein Phasenwert von 0 der minimalen Tiefe und ein Phasenwert von $2\pi$ der maximalen Tiefe der ausgebildeten ein oder mehreren Strukturen ein oder mehrerer oder aller Pixel der zwei oder mehreren Pixel des zumindest einen Pixelarray entsprechen.

Weiter ist es möglich, ein oder mehrere oder alle Phasenbilder der ein oder mehreren Phasenbilder in ein binäres virtuelles Strukturprofil umzuwandeln, wobei die Phasenwerte bevorzugt zwischen 0 und $\pi$ der minimalen Tiefe und Phasenwerte bevorzugt zwischen $\pi$ und $2\pi$ der maximalen Tiefe der ausgebildeten ein oder mehreren Strukturen ein oder mehrerer oder aller Pixel der zwei oder mehreren Pixel des zumindest einen Pixelarray entsprechen. Ferner ist eine Zuordnung der Phasenwerte zu einem mehr als zweistufigen, insbesondere zu einem n-stufigen virtuellen Strukturprofil möglich.

Vorzugsweise wird die Umwandlung der Phasenbilder für jedes Pixel der zwei oder mehreren Pixel des zumindest einen Pixelarrays durchgeführt, wobei insbesondere jedem Pixel der zwei oder mehreren Pixel des zumindest einen Pixelarrays jeweils ein oder mehrere Phasenbilder der ein oder mehreren Phasenbilder zugeordnet sind.

Es ist auch möglich, dass das virtuelle Strukturprofil ein oder mehrerer virtueller Pixel der zwei oder mehreren virtuellen Pixel des zumindest einen virtuellen Pixelarray mittels Laserbelichtung und Entwicklung auf eine mit Photoresist beschichtete Platte oder mittels Elektronenstrahl-Lithographie als die ein oder mehreren Strukturen ein oder mehrerer Pixel der zwei oder mehreren Pixel des zumindest einen Pixelarray ausgebildet wird. Eine weitere Herstellmethode ist insbesondere Laserablation, beispielsweise direkt in Polymer- oder Glas- oder Metallsubstrate, insbesondere in Polycarbonate (PC) oder Polymethylmethacrylate (PMMA) oder Kupfer.

Weiter ist es auch möglich, dass ein oder mehrere in einem oder mehreren Pixeln der zwei oder mehreren Pixel des zumindest einen Pixelarray umfasste beziehungsweise ausgebildete Strukturen eine optische Tiefe, insbesondere eine optische Tiefe in Luft oder Polymer, von der halben mittleren Wellenlänge des virtuellen elektromagnetischen Feldes und/oder des virtuellen elektromagnetischen Gesamtfeldes aufweisen.

Unter optischer Tiefe wird insbesondere ein dimensionsloses Maß dafür verstanden, in welchem Maß ein physikalisches Medium und/oder Stoff elektromagnetische Wellen beziehungsweise elektromagnetische Strahlung verzögert.

Bevorzugt weisen ein oder mehrere Strukturen der ein oder mehreren Strukturen eine optische Tiefe entsprechend der halben mittleren Wellenlänge der berechneten virtuellen elektromagnetischen Felder auf. Vorzugsweise werden die Felder für ein ganzzahliges Vielfaches der Betrachtungswellenlänge berechnet und auch realisiert, z.B. berechnet für 5 x 550 nm = 2750 nm und realisiert 1375 nm tief. Dies hat insbesondere den Vorteil, dass die Strukturen weniger diffraktiv wirken und somit achromatischer erscheinen.

Insbesondere unterscheiden sich die Strukturen von konventionellen Hologrammen durch die derart erhöhte Tiefe, bevorzugt optische Tiefe, wobei die Strukturen hierbei insbesondere nicht rein beugend und/oder diffraktiv wirken. Weiter sind die Strukturen derart klein und flach, dass diese insbesondere nicht rein refraktiv wirken und sich hierbei vorzugsweise von Mikrospiegeln unterscheiden. Die im Vergleich zu Mikrospiegeln geringere Strukturtiefe reduziert vorzugsweise die notwendige Dicke der Sicherheitsmerkmale und erlaubt zusätzlich insbesondere eine einfachere Herstellung in der Massenproduktion. Bei den Strukturen handelt es sich bevorzugt um sogenannte "multi-order diffractive elements", welche Eigenschaften von konventionellen Hologrammen und von konventionellen Mikrospiegeln aufweisen.

Im Folgenden werden bevorzugte Ausführungsformen des Verfahrens zur Herstellung eines Sicherheitsdokuments, insbesondere umfassend ein oder mehrere optisch variable Elemente, genannt.

Vorzugsweise werden die ausgebildeten Strukturprofile in beziehungsweise auf ein opakes oder transparentes Substrat, insbesondere in beziehungsweise auf opake oder transparente Papier- oder Polymerdokumente oder in beziehungsweise auf opake oder transparente Papier- oder Polymerbanknoten eingebracht oder appliziert.

Insbesondere werden die Strukturprofile mittels der Verfahren Galvanik, Rekombination und Roll-to-Roll Replikation in eine Schicht auf einer Folie, insbesondere in eine zumindest eine Replikationsschicht und/oder in eine Metallschicht und/oder in eine transparente hochbrechende oder niedrigbrechende Schicht eingebracht. Im Falle der Replikationsschicht kann diese insbesondere nachträglich mit einer Metallschicht und/oder einer transparenten hochbrechenden oder niedrigbrechenden Schicht versehen werden, sodass die Metallschicht und/oder die transparente hochbrechende oder niedrigbrechende Schicht vorzugsweise dem Strukturprofil der Replikationsschicht folgt.

Unter einer "hochbrechenden Schicht" wird insbesondere eine Schicht mit einem hohen Brechungsindex, insbesondere mit einem Brechungsindex von größer als 1,5, bevorzugt von größer als 1,7, verstanden.

Unter "niedrigbrechender Schicht" wird insbesondere eine Schicht mit einem niedrigen Brechungsindex, insbesondere mit einem Brechungsindex von kleiner als 1,5, bevorzugt von kleiner als 1,4, verstanden.

Unter Brechungsindex oder Brechzahl oder optischer Dichte wird bevorzugt eine, insbesondere dimensionslose, optische Materialeigenschaft verstanden, welche insbesondere angibt, um welchen Faktor die Wellenlänge und/oder die Phasengeschwindigkeit einer elektromagnetischen Welle beziehungsweise elektromagnetischer Strahlung in einem Material kleiner ist als im Vakuum. Bei einem Übergang einer elektromagnetischen Welle zwischen Materialien und/oder Stoffen mit unterschiedlichen Brechungsindizes wird die elektromagnetische Welle gebrochen und/oder gestreut, insbesondere reflektiert.

Insbesondere weist die Folie eine HRI-Schicht (HRI = High Refractive Index = Hoher Brechungsindex; HRI-Schicht = hochbrechende Schicht) auf. Eine derartige hochbrechende Schicht ist insbesondere aus ZnS oder TiO$_2$ ausgebildet. Alternativ oder zusätzlich weist die Folie bevorzugt eine Metallschicht auf, insbesondere eine Metallschicht ausgewählt aus den folgenden Metallen: Aluminium, Kupfer, Gold, Silber, Chrom, Zinn, und/oder ein oder mehrere Legierungen dieser Metalle. Die HRI-Schicht und/oder Metallschicht wird vorzugsweise nach einem Roll-to-Roll-Replikationsschritt auf und/oder in ein oder mehrere Strukturprofile der ein oder mehreren Strukturprofile auf der Folie aufgebracht.

Es ist möglich, dass ein oder mehrere Strukturen der ein oder mehreren Strukturen und/oder das zumindest eine Pixelarray in zumindest einen Fensterbereich, insbesondere in beziehungsweise auf zumindest einen Fensterbereich einer ID1-Karte, oder in beziehungsweise auf ein transparentes Substrat, insbesondere in beziehungsweise auf eine transparente Polymerbanknote, eingebracht oder appliziert werden, wodurch die ein oder mehreren Strukturen und/oder das zumindest eine Pixelarray zumindest von der Vorder- und Rückseite und/oder bei Durchlichtbetrachtung erfassbar ist. Der zumindest eine Fensterbereich weist insbesondere eine Durchbrechung des Substrats und/oder einen nicht durchbrochenen transparenten Bereich des Substrats auf.

Unter "transparent" wird insbesondere eine Transmissivität im infraroten, sichtbaren und/oder ultravioletten Wellenlängenbereich verstanden, welche zwischen 70% und 100%, bevorzugt zwischen 80% und 95%, liegt, wobei vorzugsweise ein zu vernachlässigender Teil der einfallenden elektromagnetischen Strahlung, insbesondere des einfallenden Lichts, absorbiert wird.

Unter einer "ID1-Karte" ist insbesondere ein Sicherheitsdokument oder eine Karte mit einer Abmessung von 85,6 mm x 53,99 mm verstanden, wobei die Abmessungen des Sicherheitsdokuments oder der Karte dem ID1-Format entsprechen.

Insbesondere werden ein oder mehrere optisch variable Elemente, vorzugsweise zu Dekorationszwecken und/oder zu Identifizierungszwecken, in und/oder auf Verpackungen aller Art eingebracht und/oder aufgebracht.

Es ist möglich, dass ein oder mehrere optisch variable Elemente insbesondere passergenau beziehungsweise registergenau in und/oder auf ein Substrat und/oder ein oder mehrere weitere Schichten, insbesondere relativ zueinander und/oder zu weiteren Sicherheitselementen und/oder weiteren Dekorelements und/oder zu den Rändern des Substrats und/oder der ein oder mehreren Schichten, eingebracht und/oder aufgebracht beziehungsweise appliziert wird.

Unter Register oder Passer bzw. Registergenauigkeit oder Passergenauigkeit oder Positionsgenauigkeit ist insbesondere eine Lagegenauigkeit zweier oder mehrerer Elemente und/oder Schichten relativ zueinander zu verstehen. Dabei soll sich die Registergenauigkeit vorzugsweise innerhalb einer vorgegebenen Toleranz bewegen und dabei bevorzugt möglichst hoch sein. Gleichzeitig ist die Registergenauigkeit von mehreren Elementen und/oder Schichten zueinander weiter bevorzugt ein wichtiges Merkmal, um insbesondere die Prozesssicherheit zu erhöhen. Die lagegenaue Positionierung kann dabei insbesondere mittels sensorischer, vorzugsweise optisch detektierbarer Passermarken oder der Positionsmarkierungen erfolgen. Diese Passermarken oder Positionsmarkierungen können dabei entweder spezielle separate Elemente oder Bereiche oder Schichten darstellen oder selbst Teil der zu positionierenden Elemente oder Bereiche oder Schichten sein.

Es ist möglich, dass das Substrat vor oder nach Einbringen der virtuellen Strukturprofile mit einer lasierenden Farbschicht versehen wird, welche die Funktion eines Farbfilters aufweist. Das Versehen mit einer lasierenden Farbschicht kann vor oder nach Einbringen der virtuellen Strukturprofile und Aufbringen einer Metallschicht und/oder einer transparenten hoch- oder niedrigbrechenden Schicht erfolgen. Beispielsweise ändert die lasierende Farbschicht das achromatische weiße Erscheinungsbild des zumindest einen Pixelarrays und/oder optisch variablen Elements für einen Betrachter und/oder Sensor in ein monochromatisches Erscheinungsbild.

Aspekte verschiedener Ausführungsformen der Erfindung sind in den Ansprüchen spezifiziert. Diese und weitere Aspekte von verschiedenen Ausführungsformen der Erfindung sind in den folgenden, nummerierten Paragraphen spezifiziert:

1. Optisch variables Element, insbesondere ein Sicherheitselement und/oder ein Dekorelement, bevorzugt für Sicherheitsdokumente, dadurch gekennzeichnet, dass das optisch variable Element zumindest ein Pixelarray umfassend zwei oder mehrere Pixel aufweist, wobei ein oder mehrere Pixel der zwei oder mehreren Pixel des zumindest einen Pixelarray ein oder mehrere Strukturen aufweisen, und wobei ein oder mehrere Strukturen der ein oder mehreren Strukturen einfallende elektromagnetische Strahlung in ein oder mehrere Raumwinkel abbilden, beugen und/oder streuen.

2. Optisch variables Element nach Paragraph 1, dadurch gekennzeichnet, dass ein oder mehrere Strukturen der ein oder mehreren Strukturen einfallende elektromagnetische Strahlung in ein oder mehrere Raumwinkel achromatisch abbilden, beugen und/oder streuen.

3. Optisch variables Element nach einem der vorhergehenden Paragraphen, dadurch gekennzeichnet, dass das optisch variable Element ein oder mehrere Schichten umfasst, wobei insbesondere das zumindest eine Pixelarray auf oder in zumindest einer Schicht der ein oder mehreren Schichten angeordnet ist und wobei vorzugsweise ein oder mehrere Schichten der ein oder mehreren Schichten ausgewählt sind aus: HRI-Schicht, insbesondere Schicht umfassend HRI und/oder LRI-Lackschicht, Metallschicht, Interferenzschicht, insbesondere Interferenzschichtabfolgen, bevorzugt HLH oder HLHLH, weiter bevorzugt Fabry-Perot-Dreischichtsystem oder -Mehrschichtsystem, Flüssigkristallschicht, Farbschicht, insbesondere lasierende Farbschicht.

4. Optisch variables Element nach einem der vorhergehenden Paragraphen, dadurch gekennzeichnet, dass jedem Pixel (2aa-2dd,2e-2f) der zwei oder mehreren Pixel (2aa-2dd,2e-2f) des zumindest einen Pixelarray (2) ein oder mehrere Strukturen der ein oder mehreren Strukturen (3aa-3dd,3e-3f) zugeordnet sind, wobei die einem Pixel (2aa-2dd,2e-2f) zugeordneten ein oder mehreren Strukturen einfallende elektromagnetische Strahlung (6) in ein oder mehrere vorbestimmte Raumwinkel abbilden, beugen und/oder streuen, wobei insbesondere den ein oder mehreren vorbestimmten Raumwinkeln jeweils eine Richtung, vorzugsweise eine vorbestimmte Richtung, zugeordnet ist.

5. Optisch variables Element nach einem der vorhergehenden Paragraphen, dadurch gekennzeichnet, dass ein oder mehrere Strukturen der ein oder mehreren Strukturen und/oder ein oder mehrere zugeordnete Strukturen der ein oder mehreren zugeordneten Strukturen in ein oder mehrere Raumwinkel der ein oder mehreren Raumwinkel und/oder ein oder mehrere vorbestimmten Raumwinkel der ein oder mehreren vorbestimmten Raumwinkel abbilden, beugen und/oder streuen, welche sich insbesondere voneinander unterscheiden, wobei ein oder mehrere auf eine um einen Pixel angeordnete Kugel, insbesondere eine Einheitskugel mit einem Einheitsradius von 1, projizierte Raumwinkel der ein oder mehreren Raumwinkel und/oder vorbestimmten Raumwinkel der ein oder mehreren vorbestimmten Raumwinkel ein oder mehrere, insbesondere gleiche oder verschiedenartige, Formen ausbilden, welche vorzugsweise jeweils ausgewählt sind aus: Kreisfläche, Ellipsenfläche, Dreiecksfläche, Quadratfläche, Rechteckfläche, Polygonfläche, Kreisringfläche.

6. Optisch variables Element nach Paragraph 5, dadurch gekennzeichnet, dass ein oder mehrere Formen der ein oder mehreren Formen offen oder geschlossen sind und/oder aus ein oder mehreren Teilformen bestehen, wobei insbesondere zumindest zwei Teilformen miteinander verbunden oder überlagert sind.

7. Optisch variables Element nach einem der vorhergehenden Paragraphen, dadurch gekennzeichnet, dass ein oder mehrere der, insbesondere von einem Betrachter und/oder einem Sensor erfassbaren, Raumwinkel der ein oder mehreren Raumwinkel oder vorbestimmten Raumwinkel der ein oder mehreren vorbestimmten Raumwinkel, in welche ein oder mehrere Pixel der zwei oder mehreren Pixel des zumindest einen Pixelarray einfallende elektromagnetische Strahlung abbilden, beugen und/oder streuen, einer Funktion folgen, wobei die Funktion derart ausgebildet ist, dass ein Betrachter die Raumwinkel oder vorbestimmten Raumwinkel als wellenförmig bewegende Helligkeitsbänder, bevorzugt sinusförmig bewegende Helligkeitsbänder, erfasst.

8. Optisch variables Element nach einem der vorhergehenden Paragraphen, dadurch gekennzeichnet, dass ein oder mehrere oder alle Raumwinkel der ein oder mehreren Raumwinkel und/oder ein oder mehrere oder alle vorbestimmten Raumwinkel der ein oder mehreren vorbestimmten Raumwinkel in zumindest einer Richtung bis zu 70°, bevorzugt bis zu 50°, weiter bevorzugt bis zu 40°, betragen und/oder dass der Öffnungswinkel ein oder mehrerer oder aller Raumwinkel vorzugsweise maximal 20°, weiter bevorzugt maximal 15°, insbesondere bevorzugt maximal 10°, beträgt.

9. Optisch variables Element nach einem der vorhergehenden Paragraphen, dadurch gekennzeichnet, dass ein oder mehrere oder alle Raumwinkel der ein oder mehreren Raumwinkel und/oder ein oder mehrere oder alle vorbestimmten Raumwinkel der ein oder mehreren vorbestimmten Raumwinkel in zumindest einer Richtung bis zu 70°, bevorzugt bis zu 50°, weiter bevorzugt bis zu 40°, betragen.

10. Optisch variables Element nach einem der vorhergehenden Paragraphen, dadurch gekennzeichnet, dass ein oder mehrere Strukturen der ein oder mehreren Strukturen und/oder die einem Pixel der zwei oder mehreren Pixel

des zumindest einen Pixelarray zugeordneten Strukturen derart ausgebildet sind, dass diese eine optisch variable Information bereitstellen, insbesondere ein oder mehrere 3D-Effekte und/oder Bewegungseffekte bereitstellen, bevorzugt achromatische oder monochromatische 3D-Effekte und/oder Bewegungseffekte bereitstellen.

11. Optisch variables Element nach einem der vorhergehenden Paragraphen, dadurch gekennzeichnet, dass ein oder mehrere Strukturen der ein oder mehreren Strukturen und/oder die einem Pixel der zwei oder mehreren Pixel des zumindest einen Pixelarray zugeordneten Strukturen zugeordneten Strukturen elektromagnetische Strahlung, insbesondere einfallende elektromagnetische Strahlung, in einem Raumwinkel, insbesondere einem punktförmigen Raumwinkel, abbilden, beugen und/oder streuen.

12. Optisch variables Element nach einem der vorhergehenden Paragraphen, dadurch gekennzeichnet, dass ein oder mehreren Strukturen der ein oder mehreren Strukturen und/oder ein oder mehrere Pixel der zwei oder mehreren Pixel des zumindest einen Pixelarray umfassend ein oder mehrere zugeordnete Strukturen der ein oder mehreren zugeordneten Strukturen zwei oder mehreren Gruppen von Strukturen und/oder zwei oder mehreren Gruppen von Pixeln zugeordnet sind, insbesondere wobei sich die Gruppen der zwei oder mehreren Gruppen von Strukturen und/oder die Gruppen der zwei oder mehreren Gruppen von Pixeln voneinander unterscheiden.

13. Optisch variables Element nach Paragraph 12, dadurch gekennzeichnet, dass zwei oder mehrere Gruppen von Strukturen der zwei oder mehreren Gruppen von Strukturen und/oder zwei oder mehrere Gruppen von Pixeln der zwei oder mehreren Gruppen von Pixeln elektromagnetische Strahlung, insbesondere einfallende elektromagnetische Strahlung, in gleiche oder unterschiedliche Raumwinkel und/oder vorbestimmte Raumwinkel, insbesondere punktförmige Raumwinkel, bevorzugt mit einem Öffnungswinkel nahe 0°, und/oder vorbestimmte Raumwinkel, bevorzugt verschiedenförmige Raumwinkel und/oder vorbestimmte Raumwinkel, abbilden, beugen und/oder streuen.

14. Optisch variables Element nach Paragraph 12 oder 13, dadurch gekennzeichnet, dass zwei oder mehrere Gruppen von Strukturen der zwei oder mehreren Gruppen von Strukturen und/oder zwei oder mehrere Gruppen von Pixeln der zwei oder mehreren Gruppen von Pixeln eine optische variable Information umfassend einen 3D-Effekt bereitstellt.

15. Optisch variables Element nach einem der vorhergehenden Paragraphen, dadurch gekennzeichnet, dass ein oder mehrere oder alle der Strukturen und/oder ein oder mehrere oder alle der zugeordneten Strukturen elektromagnetische Strahlung, insbesondere einfallende elektromagnetische Strahlung (6), diffraktiv streuen, beugen und/oder abbilden.

16. Optisch variables Element nach einem der vorhergehenden Paragraphen, dadurch gekennzeichnet, dass das zumindest eine Pixelarray in zumindest einer Richtung zumindest bereichsweise eine von Null verschiedene Krümmung aufweist.

17. Optisch variables Element nach einem der vorhergehenden Paragraphen, dadurch gekennzeichnet, dass zumindest eine laterale Abmessung ein oder mehrerer Pixel der zwei oder mehreren Pixel in dem zumindest einen Pixelarray zwischen 5 $\mu$m und 500 $\mu$m, bevorzugt zwischen 10 $\mu$m und 300 $\mu$m, bevorzugt zwischen 20 $\mu$m und 150 $\mu$m, beträgt.

18. Optisch variables Element nach einem der vorhergehenden Paragraphen, dadurch gekennzeichnet, dass eine oder mehrere laterale Abmessungen ein oder mehrerer Pixel der zwei oder mehreren Pixel in dem zumindest einen Pixelarray in eine oder mehrere Raumrichtungen in dem Pixelarray, insbesondere zumindest bereichsweise, periodisch, nicht-periodisch, pseudozufällig und/oder zufällig variieren.

19. Optisch variables Element nach einem der vorhergehenden Paragraphen, dadurch gekennzeichnet, dass eine oder mehrere laterale Abmessungen ein oder mehrerer Pixel der zwei oder mehreren Pixel in dem zumindest einen Pixelarray in eine oder mehrere Raumrichtungen in dem zumindest einen Pixelarray, insbesondere zumindest bereichsweise, maximal um $\pm$70%, bevorzugt maximal um $\pm$50%, um einem Mittelwert herum variieren.

20. Optisch variables Element nach einem der vorhergehenden Paragraphen, dadurch gekennzeichnet, dass ein oder mehrere Pixel der ein oder mehreren Pixel in dem zumindest einen Pixelarray, insbesondere zumindest bereichsweise, periodisch, nicht-periodisch, zufällig und/oder pseudozufällig in dem zumindest einen Pixelarray angeordnet sind.

21. Optisch variables Element nach einem der vorhergehenden Paragraphen, dadurch gekennzeichnet, dass ein oder mehrere Strukturen der ein oder mehreren Strukturen, eine Gitterperiode insbesondere kleiner als die Hälfte, bevorzugt kleiner als dem Drittel, weiter bevorzugt kleiner als dem Viertel, der maximalen lateralen Abmessung der zwei oder mehreren Pixel, bevorzugt jedem der zwei oder mehreren Pixel, des zumindest einen Pixelarray aufweisen.

22. Optisch variables Element nach einem der vorhergehenden Paragraphen, dadurch gekennzeichnet, dass ein oder mehrere Strukturen der ein oder mehreren Strukturen eine beschränkte maximale Strukturtiefe aufweisen, wobei die beschränkte maximale Strukturtiefe insbesondere kleiner als 15 $\mu$m, bevorzugt kleiner als 10 $\mu$m, weiter bevorzugt kleiner gleich 7 $\mu$m, noch weiter bevorzugt kleiner gleich 4 $\mu$m, insbesondere bevorzugt kleiner gleich 2 $\mu$m, ist.

23. Optisch variables Element nach Paragraph 22, dadurch gekennzeichnet, dass ein oder mehrere Strukturen der ein oder mehreren Strukturen derart ausgebildet sind, dass die beschränkte maximale Strukturtiefe der ein oder mehreren Strukturen für mehr als 50% der Pixel, insbesondere für mehr als 70% der Pixel, bevorzugt für mehr als 90% der Pixel, des zumindest einen Pixelarray kleiner gleich 15 $\mu$m, insbesondere kleiner gleich 7 $\mu$m, bevorzugt kleiner gleich 2 $\mu$m, ist.

24. Optisch variables Element nach Paragraph 22 oder 23, dadurch gekennzeichnet, dass ein oder mehrere Strukturen der ein oder mehreren Strukturen derart ausgebildet sind, dass die beschränkte maximale Strukturtiefe der ein oder mehrerer Strukturen für alle Pixel kleiner gleich 15 $\mu$m, insbesondere kleiner gleich 7 $\mu$m, bevorzugt kleiner gleich 2 $\mu$m, ist.

25. Optisch variables Element nach einem der vorhergehenden Paragraphen, dadurch gekennzeichnet, dass ein oder mehrere Strukturen der ein oder mehreren Strukturen zueinander unterschiedlich oder ähnlich oder gleich oder identisch sind.

26. Optisch variables Element nach einem der vorhergehenden Paragraphen, dadurch gekennzeichnet, dass ein oder mehrere Strukturen der ein oder mehreren Strukturen als achromatisch beugende Strukturen, vorzugsweise als Blaze-Gitter, insbesondere lineare Blaze-Gitter, ausgebildet sind, wobei insbesondere die Gitterperiode der achromatisch beugenden Strukturen größer als 3 $\mu$m, bevorzugt größer als 5 $\mu$m, ist und/oder wobei mehr als 70% der Pixel, insbesondere mehr als 90% der Pixel, bevorzugt jedes Pixel, der zwei oder mehreren Pixel des zumindest einen Pixelarrays mindestens zwei Gitterperioden umfasst.

27. Optisch variables Element nach einem der vorhergehenden Paragraphen, dadurch gekennzeichnet, dass die achromatisch beugenden Strukturen in ein oder mehreren Pixeln der zwei oder mehreren Pixel in dem zumindest einen Pixelarray mit weiteren Mikrostrukturen und/oder Nanostrukturen, insbesondere linearen Gitterstrukturen, bevorzugt Kreuzgitterstrukturen, weiter bevorzugt Subwellenlängengitterstrukturen, überlagert sind.

28. Optisch variables Element nach einem der vorhergehenden Paragraphen, dadurch gekennzeichnet, dass ein oder mehrere Strukturen der ein oder mehreren Strukturen als konvex oder konkav wirkende Mikrolinsen und/oder Teilbereiche von Mikrolinsen, insbesondere als reflektiv wirkende Mikrolinsen und/oder Teilbereiche von Mikrolinsen, ausgebildet sind, wobei insbesondere die Fokuslänge der ein oder mehreren Strukturen zwischen 0,04 mm bis 5 mm, insbesondere 0,06 mm bis 3 mm, bevorzugt 0,1 mm bis 2 mm, beträgt und/oder wobei insbesondere die Fokuslänge in einer Richtung X und/oder Y durch die Gleichung

$$f_{X,Y} = \frac{\Delta_{X,Y}/2}{\tan(\phi_{X,Y}/2)}$$

bestimmt ist, wobei bevorzugt $\Delta$X,Y die jeweilige laterale Abmessung ein oder mehrerer Pixel der zwei oder mehreren Pixel des zumindest einen Pixelarray in die Richtung X beziehungsweise in die Richtung Y ist und $\phi$X,Y der jeweilige Raumwinkel in die Richtung X beziehungsweise in die Richtung Y ist, in welche die ein oder mehreren Strukturen einfallende elektromagnetische Strahlung abbilden, beugen und/oder streuen.

29. Optisch variables Element nach einem der vorhergehenden Paragraphen, dadurch gekennzeichnet, dass ein oder mehrere Strukturen der ein oder mehreren Strukturen als Zylinderlinsen ausgebildet sind, wobei insbesondere eine Fokuslänge der ein oder mehreren Strukturen unendlich groß ist.

30. Optisch variables Element nach einem der vorhergehenden Paragraphen, dadurch gekennzeichnet, dass ein oder mehrere Strukturen der ein oder mehreren Strukturen als Fresnelsche Mikrolinsenstrukturen, insbesondere reflektiv wirkende Fresnelsche Mikrolinsenstrukturen, ausgebildet sind, wobei insbesondere die Gitterlinien der Fresnelschen Mikrolinsenstrukturen als gekrümmte Gitterlinien ausgebildet sind und/oder Gitterlinien mit variierenden Gitterperioden aufweisen und/oder wobei insbesondere jedes Pixel der zwei oder mehreren Pixel des zumindest einen Pixelarrays, vorzugsweise in zumindest einer Raumrichtung, mindestens zwei Gitterperioden umfasst.

31. Optisch variables Element nach einem der vorhergehenden Paragraphen, dadurch gekennzeichnet, dass ein oder mehrere Strukturen der ein oder mhreren Strukturen eine Anzahl von mindestens 2 Erhebungen, insbesondere mindestens 3 Erhebungen, bevorzugt mindestens 4 Erhebungen, vorzugsweise pro Pixel, aufweisen.

32. Optisch variables Element nach einem der vorhergehenden Paragraphen, dadurch gekennzeichnet, dass mehr als 70% der Pixel, insbesondere mehr als 90% der Pixel, der zwei oder mehreren Pixel in dem zumindest einen Pixelarray ein oder mehrere Strukturen der ein oder mehreren Strukturen aufweisen, welche eine Anzahl von mindestens 2 Erhebungen, insbesondere mindestens 3 Erhebungen, bevorzugt mindestens 4, vorzugsweise pro Pixel, aufweisen.

33. Optisch variables Element nach einem der vorhergehenden Paragraphen, dadurch gekennzeichnet, dass ein oder mehrere Strukturen der ein oder mehreren Strukturen als chromatische Gitterstrukturen, insbesondere als lineare Gitter, bevorzugt als lineare Gitter mit einem sinusförmigen Profil, und/oder Nanotext und/oder Spiegelflächen ausgebildet sind.

34. Optisch variables Element nach einem der vorhergehenden Paragraphen, dadurch gekennzeichnet, dass ein oder mehrere Strukturen der ein oder mehreren Strukturen als Subwellenlängengitter, insbesondere als lineare Subwellenlängengitter und/oder als Mottenaugen-artigen Strukturen, ausgebildet sind, wobei bevorzugt die Gitterperiode der Subwellenlängengitter, insbesondere der linearen Subwellenlängengitter und/oder der Mottenaugenartigen Strukturen, weniger als 450 nm beträgt und/oder wobei insbesondere zumindest ein derartiges Pixelarray einen für einen Betrachter erfassbaren optisch variablen Effekt, insbesondere einen für einen Betrachter erfassbaren zusätzlichen optisch variablen Effekt, beim Kippen des optisch variablen Elements und/oder des zumindest einen Pixelarray bereitstellt.

35. Optisch variables Element nach einem der vorhergehenden Paragraphen, dadurch gekennzeichnet, dass ein oder mehrere Strukturen der ein oder mehreren Strukturen mit einer Metallschicht versehen sind und/oder einfallende elektromagnetische Strahlung absorbieren, wobei insbesondere ein oder mehrere Pixel der zwei oder mehreren Pixel des zumindest einen Pixelarray in Reflexion für einen Betrachter in dunkelgrau bis schwarz erfassbar sind.

36. Optisch variables Element nach einem der vorhergehenden Paragraphen, dadurch gekennzeichnet, dass ein oder mehrere Strukturen der ein oder mehreren Strukturen eine HRI-Schicht aufweisen, wobei insbesondere ein oder mehrere Pixel der zwei oder mehreren Pixel des zumindest einen Pixelarray in Reflexion für einen Betrachter farbig erfassbar sind.

37. Optisch variables Element nach einem der vorhergehenden Paragraphen, dadurch gekennzeichnet, dass ein oder mehrere Strukturen der ein oder mehreren Strukturen einfallende elektromagnetische Strahlung pseudo-zufällig oder zufällig in alle Raumrichtungen abbilden, beugen und/oder streuen, wobei insbesondere ein oder mehrere Pixel der zwei oder mehreren Pixel des zumindest einen Pixelarray in Reflexion für einen Betrachter isotrop weiß, bevorzugt isotrop achromatisch, erfassbar sind.

38. Optisch variables Element nach einem der vorhergehenden Paragraphen, dadurch gekennzeichnet, dass ein oder mehrere Strukturen der ein oder mehreren Strukturen bei einer Verbiegung des Elements und/oder des zumindest einen Pixelarray einen optisch variablen Effekt bereitstellen, wobei insbesondere ein erstes Motiv in einem nicht gebogenen Zustand des Elements und/oder des zumindest einen Pixelarray erfassbar ist und ein zweites Motiv in einem gebogenen Zustand des Elements und/oder des zumindest einen Pixelarray erfassbar ist.

39. Sicherheitsdokument, insbesondere umfassend ein oder mehrere optisch variable Elemente, insbesondere nach einem der vorhergehenden Paragraphen.

40. Sicherheitsdokument nach Paragraph 39, dadurch gekennzeichnet, dass das Sicherheitsdokument in ein oder mehreren Bereichen, insbesondere in ein oder mehreren streifenförmigen Bereichen, bevorzugt ein oder mehreren fadenförmigen Bereichen, ein oder mehrere optisch variable Elemente aufweist.

41. Sicherheitsdokument nach Paragraph 39 oder 40, dadurch gekennzeichnet, dass ein oder mehrere Bereiche der ein oder mehreren Bereiche umfassend jeweils ein oder mehrere optisch variablen Elemente in Streifenform und/oder in Patch-Form ausgebildet sind.

42. Sicherheitsdokument nach einem der Paragraphen 39 bis 41, dadurch gekennzeichnet, dass ein oder mehrere optische variable Elemente bei Betrachtung des Sicherheitsdokuments entlang eines durch das Sicherheitsdokument aufgespannten Flächennormalenvektors zumindest teilweise überlappend angeordnet sind.

43. Verfahren zur Herstellung eines optisch variablen Elements, insbesondere nach einem der Paragraphen 1 bis 38, vorzugsweise eines Sicherheitselements und/oder eines Dekorelements, bevorzugt für Sicherheitsdokumente, insbesondere nach einem der Paragraphen 39 bis 42, dadurch gekennzeichnet, Bereitstellung zumindest eines virtuellen Pixelarray umfassend zwei oder mehrere virtuelle Pixel, Zuordnung zumindest eines Raumwinkels zu ein oder mehreren virtuellen Pixel der zwei oder mehreren virtuellen Pixel des zumindest einen virtuellen Pixelarray, Anordnung ein oder mehrerer virtueller Feldquellen in und/oder auf zumindest einem Bereich oder zumindest einem Segment des zumindest einen zugeordneten Raumwinkels, wobei der zumindest eine Bereich oder das zumindest eine Segment des zumindest einen zugeordneten Raumwinkels in einem ersten Abstand zu den ein oder mehreren virtuellen Pixel der zwei oder mehreren virtuellen Pixel des zumindest einen virtuellen Pixelarray angeordnet ist, Berechnung ein oder mehrerer virtueller elektromagnetischer Felder ausgehend von den ein oder mehreren virtuellen Feldquellen in einem vorbestimmten Abstand von den ein oder mehreren virtuellen Pixel der zwei oder mehreren virtuellen Pixel des zumindest einen virtuellen Pixelarray in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, Berechnung ein oder mehrerer Phasenbilder für die ein oder mehreren virtuellen Pixel der zwei oder mehreren virtuellen Pixel des zumindest einen virtuellen Pixelarray aus einem virtuellen elektromagnetischen Gesamtfeld bestehend aus der Überlagerung der ein oder mehreren virtuellen elektromagnetischen Feldern in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, Berechnung virtueller Strukturprofile für die ein oder mehreren virtuellen Pixel der zwei oder mehreren virtuellen Pixel des zumindest einen virtuellen Pixelarray aus den ein oder mehreren Phasenbildern, Ausbildung der virtuellen Strukturprofile der ein oder mehreren virtuellen Pixel der zwei oder mehreren Pixel des zumindest einen virtuellen Pixelarray in und/oder auf ein Substrat als zumindest ein Pixelarray umfassend zwei oder mehrere Pixel, wobei ein oder mehrere Pixel der zwei oder mehreren Pixel des zumindest einen Pixelarray ein oder mehrere Strukturen aufweisen, zur Bereitstellung des optisch variablen Elements.

44. Verfahren nach Paragraph 43, dadurch gekennzeichnet, dass der zumindest eine zugeordnete Raumwinkel und/oder der zumindest eine Bereich des zumindest einen zugeordneten Raumwinkels das zumindest eine Segment aufspannt, wobei insbesondere das zumindest eine Segment zumindest einem Segment einer Kugel, bevorzugt zumindest einem konischen Segment, entspricht, wobei der halbe Öffnungswinkel des zumindest einen Segments kleiner als 20°, bevorzugt kleiner als 15°, weiter bevorzugt kleiner als 10°, ist.

45. Verfahren nach Paragraph 43 oder 44, dadurch gekennzeichnet, dass die virtuellen Feldquellen, welche insbesondere in und/oder auf ein oder mehreren Teilbereichen des zumindest einen Segments und/oder des zumindest einen Bereichs des zumindest einen zugeordneten Raumwinkels angeordnet sind, in zumindest einer Richtung periodisch und/oder pseudo-zufällig und/oder zufällig auf ein oder mehreren Teilbereichen der ein oder mehreren Teilbereiche des zumindest einen Segments und/oder des zumindest einen Bereichs des zumindest einen zugeordneten Raumwinkels angeordnet sind.

46. Verfahren nach einem der Paragraphen 43 bis 45, dadurch gekennzeichnet, dass die Abstände benachbarter virtueller Feldquellen zwischen 0,01 mm und 100 mm, insbesondere zwischen 0,1 mm und 50 mm, bevorzugt zwischen 0,25 mm und 20 mm, in und/oder auf ein oder mehreren Teilbereichen der ein oder mehreren Teilbereiche des zumindest einen Segments und/oder des zumindest einen Bereichs des zumindest einen zugeordneten Raumwinkels liegen, und/oder dass die Abstände benachbarter virtueller Feldquellen insbesondere im Mittel zwischen 0,01 mm und 100 mm, insbesondere zwischen 0,1 mm und 50 mm, bevorzugt zwischen 0,25 mm und 20 mm, in und/oder auf ein oder mehreren Teilbereichen der ein oder mehreren Teilbereiche des zumindest einen Segments und/oder des zumindest einen Bereichs des zumindest einen zugeordneten Raumwinkels liegen.

47. Verfahren nach einem der Paragraphen 43 bis 46, dadurch gekennzeichnet, dass die Anordnung der virtuellen Feldquellen, insbesondere der virtuellen Punktfeldquellen, als ein Kreuzraster, bevorzugt einem äquidistanten Kreuzraster, in und/oder auf ein oder mehreren Teilbereichen der ein oder mehreren Teilbereiche des zumindest einen Segments und/oder des zumindest einen Bereichs des zumindest einen zugeordneten Raumwinkels erfolgt, wobei der Abstand benachbarter virtueller Feldquellen zueinander zwischen 0,01 $\mu$m und 100 $\mu$m, insbesondere zwischen 0,1 $\mu$m und 50 $\mu$m, beträgt und/oder wobei der Winkel zwischen zwei benachbarten virtuellen Feldquellen zueinander, insbesondere relativ zur Position ein oder mehrerer virtueller Pixel der zwei oder mehreren virtuellen Pixel des zumindest einen Pixelarray, kleiner als 1°, vorzugsweise kleiner als 0,5°, ist.

48. Verfahren nach einem der Paragraphen 43 bis 47, dadurch gekennzeichnet, dass ein oder mehrere virtuelle Feldquellen der ein oder mehreren virtuellen Feldquellen die Form von Mikrosymbolen aufweisen, insbesondere ausgewählt aus: Buchstabe, Porträt, Bild, alphanumerisches Zeichen, Schriftzeichen, geometrische Freiform, Quadrat, Dreieck, Kreis, gekrümmte Linie, Umriss.

49. Verfahren nach Paragraph 48, dadurch gekennzeichnet, dass die lateralen Abmessungen der Mikrosymbole auf ein oder mehreren Teilbereichen der ein oder mehreren Teilbereiche des zumindest einen Segments zwischen 0,1° und 10° liegen, insbesondere zwischen 0,2° und 5°, liegen.

50. Verfahren nach einem der Paragraphen 43 bis 49, dadurch gekennzeichnet, dass eine erste Gruppe von ein oder mehreren virtuellen Feldquellen der ein oder mehreren virtuellen Feldquellen aus einem Abstand von 0,3 m, insbesondere von 0,15 m bis 0,45 m, nicht auf einen Schirm projizierbar und/oder eine zweite Gruppe von ein oder mehreren virtuellen Feldquellen der ein oder mehreren virtuellen Feldquellen aus einem Abstand von 1,0 m, insbesondere von 0,8 m bis 1,2 m, auf einen Schirm projizierbar ist.

51. Verfahren nach einem der Paragraphen 43 bis 50, dadurch gekennzeichnet, dass das virtuelle elektromagnetische Feld, welches von ein oder mehreren der virtuellen Feldquellen ausgeht, insbesondere von allen der virtuellen Feldquellen ausgeht, die gleiche Intensität und/oder die gleiche Intensitätsverteilung über den zumindest einen zugeordneten Raumwinkel und/oder über den zumindest einen Bereich des zumindest einen zugeordneten Raumwinkels aufweist.

52. Verfahren nach einem der Paragraphen 43 bis 51, dadurch gekennzeichnet, dass das virtuelle elektromagnetische Feld, welche von ein oder mehreren der virtuellen Feldquellen ausgeht, insbesondere von allen der virtuellen Feldquellen ausgeht, eine Intensitätsverteilung über den zumindest einen zugeordneten Raumwinkel und/oder über das zumindest eine Segment und/oder über den zumindest einen Bereich des zumindest einen zugeordneten Raumwinkels aufweist, welche gaußförmig oder supergaußförmig verteilt ist.

53. Verfahren nach einem der Paragraphen 43 bis 52, dadurch gekennzeichnet, dass das virtuelle elektromagnetische Feld, welche von zwei oder mehreren der virtuellen Feldquellen ausgeht, insbesondere von allen der virtuellen Feldquellen ausgeht, unterschiedliche Intensitäten und/oder unterschiedliche Intensitätsverteilungen über den zumindest einen zugeordneten Raumwinkel und/oder über das zumindest eine Segment und/oder über den zumindest einen Bereich des zumindest einen zugeordneten Raumwinkels aufweist.

54. Verfahren nach einem der Paragraphen 43 bis 53, dadurch gekennzeichnet, dass das virtuelle elektromagnetische Feld, welche von ein oder mehreren der virtuellen Feldquellen ausgeht, insbesondere von allen der virtuellen Feldquellen ausgeht, eine isotrope oder eine anisotrope Intensitätsverteilung über den zumindest einen zugeordneten Raumwinkels und/oder über das zumindest eine Segment und/oder über den zumindest einen Bereich des zumindest einen zugeordneten Raumwinkels aufweist.

55. Verfahren nach einem der Paragraphen 43 bis 54, dadurch gekennzeichnet, dass ein oder mehrere der virtuellen Feldquellen, insbesondere alle der virtuellen Feldquellen, eine virtuelle Punkfeldquelle ausbilden, wobei die virtuelle Punkfeldquelle vorzugsweise eine virtuelle Kugelwelle abstrahlt.

56. Verfahren nach einem der Paragraphen 43 bis 55, dadurch gekennzeichnet, dass das virtuelle elektromagnetische Feld $U_i$ ausgehend von einer i-ten virtuellen Punktfeldquelle am Ort $(x_i, y_i, z_i)$ zumindest einer Koordinate $(x_h, y_h, z_h)$, insbesondere einer Koordinate $(x_h, y_h, z_h=0) = (x_h, y_h)$, in und/oder auf ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, mittels der Gleichung

$$U_i(x_h, y_h) = \frac{exp(ikr)}{r}, \quad r = \sqrt{(x_h - x_i)^2 + (y_h - y_i)^2 + z_i^2},$$

berechnet wird.

57. Verfahren nach Paragraph 56, dadurch gekennzeichnet, dass das virtuelle elektromagnetische Feld Ui ein oder mehrere Wellenlängen umfasst, welche insbesondere im sichtbaren Spektralbereich von 380 nm bis 780 nm, bevorzugt von 430 nm bis 690 nm, liegen, wobei ein oder mehrere, jeweils benachbarte Wellenlängen der ein oder mehreren Wellenlängen, bevorzugt in dem sichtbaren Spektralbereich, vorzugsweise äquidistant, zueinander beabstandet sind.

58. Verfahren nach einem der Paragraphen 56 bis 57, dadurch gekennzeichnet, dass das virtuelle elektromagnetische Feld Ui ein oder mehrere Wellenlängen umfasst, welche insbesondere im infraroten, sichtbaren und/oder ultravioletten Spektralbereich liegen, wobei ein oder mehrere, jeweils benachbarte Wellenlängen der ein oder mehreren Wellenlängen, bevorzugt in dem infraroten, sichtbaren und/oder ultravioletten Spektralbereich, vorzugsweise äquidistant, zueinander beabstandet sind.

59. Verfahren nach einem der Paragraphen 56 bis 58, dadurch gekennzeichnet, dass das virtuelle elektromagnetische Gesamtfeld Up in und/oder auf ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, mittels der Gleichung

$$U_p(x_p, y_p) = U_r^*(x_p, y_p) \sum_{i=1}^{N_p} U_i(x_p, y_p)$$

berechnet wird, wobei insbesondere die virtuellen elektromagnetischen Felder $U_i$ ausgehend von i = 1, ..., $N_p$ virtuellen Punktfeldquellen an zumindest einer Koordinate $(x_p, y_p, z_p=0) = (x_p, y_p)$ und/oder insbesondere die optionale Referenzwelle $U_r^*$, bevorzugt die zumindest eine optionale Referenzwelle $U_r^*$, an zumindest einem Punkt oder für die Parameter $(x_p, y_p)$ in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, berechnet werden.

60. Verfahren nach einem der Paragraphen 43 bis 59, dadurch gekennzeichnet, dass ein oder mehrere Phasenbilder der ein oder mehreren Phasenbilder linear in ein virtuelles Strukturprofil umgewandelt werden, wobei ein Phasenwert von 0 der minimalen Tiefe und ein Phasenwert von $2\pi$ der maximalen Tiefe der ausgebildeten ein oder mehreren Strukturen ein oder mehrerer Pixel der zwei oder mehreren Pixel des zumindest einen Pixelarray entsprechen.

61. Verfahren nach einem der Paragraphen 43 bis 60, dadurch gekennzeichnet, dass das virtuelle Strukturprofil ein oder mehrerer virtueller Pixel der zwei oder mehreren virtuellen Pixel des zumindest einen virtuellen Pixelarray mittels Laserbelichtung und Entwicklung auf eine mit Photoresist beschichtete Platte und/oder mittels Elektronenstrahl-Lithographie als die ein oder mehreren Strukturen ein oder mehrerer Pixel der zwei oder mehreren Pixel des zumindest einen Pixelarray ausgebildet wird.

62. Verfahren nach einem der Paragraphen 43 bis 61, dadurch gekennzeichnet, dass ein oder mehrere in einem mehreren Pixeln der zwei oder mehreren Pixel des zumindest einen Pixelarray ausgebildete Strukturen eine optische Tiefe, insbesondere eine optische Tiefe in Luft, von der halben mittleren Wellenlänge des virtuellen elektromagnetischen Feldes und/oder des virtuellen elektromagnetischen Gesamtfeldes aufweisen.

63. Verfahren zur Herstellung eines Sicherheitsdokuments, insbesondere nach einem der Paragraphen 39 bis 42, vorzugsweise umfassend ein oder mehrere Schichten, bevorzugt umfassend ein oder mehrere optisch variable Elemente, insbesondere nach einem der Paragraphen 1 bis 39 und/oder insbesondere hergestellt nach einem der Paragraphen 43 bis 62, dadurch gekennzeichnet, dass ein oder mehrere optisch variable Elemente (1a) als Laminierfolie und/oder als Prägefolie auf das Sicherheitsdokument und/oder auf eine oder mehrere Schichten des Sicherheitsdokuments aufgebracht werden und/oder in das Sicherheitsdokument und/oder in ein oder mehrere Schichten der ein oder mehreren Schichten des Sicherheitsdokuments eingebracht werden.

Im Folgenden wird die Erfindung anhand von mehreren Ausführungsbeispielen unter Zuhilfenahme der beiliegenden Zeichnungen beispielhaft erläutert. Dabei zeigen:

Fig. 1        zeigt eine schematische Darstellung eines Sicherheitsdokuments.

Fig. 1a       zeigt eine schematische Darstellung eines Sicherheitsdokuments.

Fig. 2        zeigt eine schematische Darstellung eines optisch variablen Elements.

Fig. 3        zeigt einen schematischen Querschnitt eines optisch variablen Elements.

Fig. 3a       zeigt einen schematischen Querschnitt eines optisch variablen Elements.

Fig. 4        zeigt eine schematische Darstellung eines optisch variablen Elements.

Fig. 5        zeigt eine schematische Darstellung eines optisch variablen Elements.

Fig. 6        zeigt eine schematische Darstellung eines optisch variablen Elements.

Fig. 7        zeigt eine schematische Darstellung eines optisch variablen Elements.

Fig. 8        zeigt eine schematische Darstellung eines optisch variablen Elements.

Fig. 9        zeigt eine schematische Darstellung eines Pixelarrays.

Fig. 10       zeigt eine schematische Darstellung eines Pixels.

Fig. 11       zeigt eine schematische Darstellung eines Pixels.

Fig. 12       zeigt eine schematische Darstellung eines Pixels.

Fig. 12a      zeigt eine schematische Darstellung eines Pixels.

Fig. 13       zeigt ein Foto sowie Mikroskopbilder eines optisch variablen Elements.

Fig. 13b      zeigt eine schematische Darstellung eines optisch variablen Elements.

Fig. 13c      zeigt eine schematische Darstellung eines optisch variablen Elements.

Fig. 14       zeigt eine schematische Darstellung eines optisch variablen Elements.

Fig. 15       zeigt eine schematische Darstellung eines optisch variablen Elements.

Fig. 16       zeigt eine schematische Darstellung eines optisch variablen Elements.

Fig. 17       zeigt ein Foto eines optisch variablen Elements.

Fig. 18       zeigt Mikroskopbilder eines Pixelarrays.

Fig. 19       zeigt eine schematische Darstellung eines optisch variablen Elements.

Fig. 20       zeigt ein Foto eines optisch variablen Elements.

Fig. 21       zeigt Mikroskopbilder eines Pixelarrays.

Fig. 22       zeigt ein Foto eines optisch variablen Elements.

Fig. 23     zeigt ein Foto eines optisch variablen Elements.

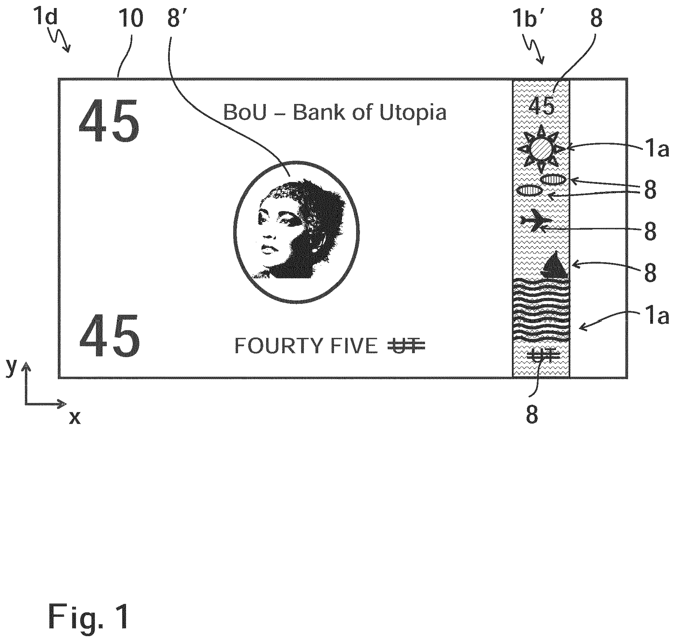

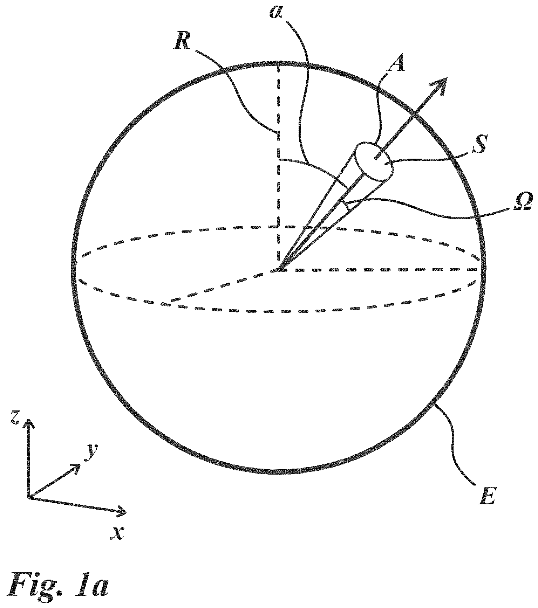

Fig. 1 zeigt ein Sicherheitsdokument 1d, insbesondere eine Banknote, umfassend ein Substrat 10 in Aufsicht, welches ein streifenförmiges Sicherheitselement 1b' aufweist, wobei für einen Betrachter bei Betrachtung des Sicherheitselements 1 b' in Auflicht und/oder Durchlicht Bewegungseffekte und/oder optisch in Betrachtungsrichtung virtuell vorspringende und/oder von der Betrachtungsrichtung zurückspringende 3D-Elemente erfassbar sind. Derartige optische Effekte sind vorzugsweise abhängig von dem Kippwinkel und/oder dem Betrachtungswinkel relativ zu der durch das Substrat 10 aufgespannten Ebene.

Es ist möglich, dass das Sicherheitsdokument 1d in oder außerhalb des streifenförmigen Bereichs 1b' ein oder mehrere weitere optisch variable Elemente und/oder optisch invariable Sicherheitselemente aufweist, die insbesondere mit dem Sicherheitselement 1b' teilweise oder ganz überlappen können.

Weiter ist es möglich, dass in und/oder auf dem Sicherheitsdokument 1d ein oder mehrere weitere Bereiche umfassend jeweils weitere ein oder mehrere optisch variable Elemente in Streifenform und/oder in Patch-Form ausgebildet sind.

Auch ist es möglich, dass ein oder mehrere optische variable Elemente bei Betrachtung des Sicherheitsdokuments 1d, insbesondere mittels eines Betrachters und/oder eines Sensors, entlang eines durch das Sicherheitsdokument 1d aufgespannten Flächennormalenvektors zumindest teilweise überlappend angeordnet sind.

Das streifenförmige Sicherheitselement 1b umfasst weiter zwei optisch variable Elemente 1a, welche insbesondere jeweils zumindest ein Pixelarray umfassend zwei oder mehrere Pixel aufweist. Ein optisch variables Element der zwei optisch variablen Elemente ist in Form eines Motivs umfassend die Sonne ausgebildet und ein weiteres optisch variables Element der zwei optisch variablen Elemente ist in Form eines Motivs umfassend eine Vielzahl von zehn voneinander beabstandeten wellenförmigen Linien beziehungsweise dünnen Streifen ausgebildet. Derartige Motive sind insbesondere ausgewählt aus: Muster, Buchstaben, Porträts, Bilder, alphanumerische Zeichen, Schriftzeichen, Landschaftsdarstellungen, Bauwerksdarstellungen, geometrische Freiformen, Quadraten, Dreiecken, Kreisen, gekrümmten Linien und/oder Umrissen.

Weiter umfasst das streifenförmige Sicherheitselement 1b' mehrere Sicherheitselemente 8, welche als die Zahlenabfolge "45", zwei wolkenartige Motive, ein flugzeugförmiges Motiv, ein segelschiffförmiges Motiv und eine mit zwei horizontalen Linien durchzogene Buchstabenabfolge "UT" ausgestaltet sind. Die Zahlenfolge "45" und die mit zwei horizontalen Linien durchzogene Buchstabenabfolge "UT" können beispielsweise als demetallisierte Bereiche realisiert sein und die zwei wolkenartigen Motive, das flugzeugförmige Motiv sowie das segelschiffförmige Motiv können insbesondere mit farbintensiven diffraktiven Strukturen realisiert sein.

Ferner umfasst das Sicherheitsdokument 1d ein Sicherheitselement 8', welches ein Motiv umfassend ein Portrait aufweist. Hierbei ist es möglich, dass die optisch variablen Strukturen 8' als bei Beleuchtung diffraktiv aufleuchtende Flächen ausgebildet sind und/oder dass der optische Eindruck des Portraits 8', welches insbesondere als Fresnelsche Freiformfläche ausgebildet ist, in Auflicht und/oder Durchlicht für einen Betrachter und/oder einen Sensor erfassbar ist. Alternativ kann das Sicherheitselement 8' insbesondere auch ein Intaglio- oder Offsetdruck sein.

Vorzugsweise umfasst das streifenförmige Sicherheitselement 1 b' zusätzlich zu den optisch variablen Elementen 1a, welche jeweils ein Pixelarray aufweisen, zumindest ein Höhenprofil zumindest einer weiteren optisch variablen Struktur, insbesondere ausgewählt aus: einer diffraktiven Reliefstruktur, insbesondere eines Beugungsgitters, einer fresnelschen Freiformlinse, einer Beugungsstruktur Nullter Ordnung, eines Blaze-Gitters, einer Mikrospiegelstruktur, einer isotropen oder anisotropen Mattstruktur und/oder einer Mikrolinsenstruktur.

Es ist auch möglich, dass ein oder mehrere oder alle der Strukturen elektromagnetische Strahlung, insbesondere einfallende elektromagnetische Strahlung, diffraktiv streuen, beugen und/oder abbilden.

Insbesondere weist das zumindest eine Pixelarray in zumindest einer Richtung zumindest bereichsweise eine von Null verschiedene Krümmung auf.

Der Dokumentenkörper des Sicherheitsdokuments 1d umfasst insbesondere ein oder mehrere Schichten, wobei das Substrat 10 bevorzugt ein Papiersubstrat und/oder ein Kunststoffsubstrat oder ein Hybridsubstrat, bestehend aus einer Kombination von Papier und Kunststoff, ist.

Weiter ist es möglich, dass das streifenförmige Sicherheitselement 1 b' ein oder mehrere Schichten aufweist und insbesondere ein Trägersubstrat (vorzugsweise aus Polyester, insbesondere PET) aufweist, welches ablösbar oder nicht ablösbar ist, und/oder ein oder mehrere Polymerlackschichten, insbesondere eine oder mehrere Replikationsschichten, in welche die Höhenprofile zumindest einer weiteren optisch variablen Struktur repliziert werden können.

Es ist auch möglich, dass das streifenförmige Sicherheitselement 1b' ein oder mehrere Schutzschichten und/oder ein oder mehrere Dekorschichten und/oder ein oder mehrere Kleberschichten oder Haftvermittlungsschichten beziehungsweise Haftvermittlerschichten und/oder ein oder mehrere Barriereschichten und/oder ein oder mehrere weitere Sicherheitsmerkmale umfasst.

Ein oder mehrere Dekorschichten der Dekorschichten weisen vorzugsweise ein oder mehrere metallische und/oder HRI-Schichten auf, welche vorzugsweise jeweils nicht vollflächig sondern lediglich partiell in dem optisch variablen Element und/oder dem Sicherheitsdokument vorgesehen sind. Die metallischen Schichten sind hierbei insbesondere opak, transluzent oder semitransparent ausgebildet. Vorzugsweise umfassen die metallischen Schichten hierbei unterschiedliche Metalle, welche unterschiedliche, insbesondere deutlich unterschiedliche, bevorzugt von einem Betrachter und/oder Sensor unterscheidbare, Reflexions-, Absorptions- und/oder Transmissionsspektren, insbesondere Reflexions-, Absorptions- und/oder Transmissionsvermögen, aufweisen. Bevorzugt umfassen die Metallschichten ein oder mehrere der Metalle: Aluminium, Kupfer, Gold, Silber, Chrom, Zinn, und/oder ein oder mehrere Legierungen dieser Metalle. Weiter sind die partiell vorgesehenen metallischen Schichten gerastert und/oder mit lokal unterschiedlichen Schichtdicken ausgestaltet.

Unter Reflexionsvermögen wird insbesondere das Verhältnis zwischen der Intensität des reflektierten Teils einer elektromagnetischen Welle beziehungsweise elektromagnetischer Strahlung und der Intensität des einfallenden Teils der elektromagnetischen Welle beziehungsweise elektromagnetischer Strahlung verstanden, wobei die Intensität insbesondere ein Maß für die von der elektromagnetischen Welle beziehungsweise elektromagnetischen Strahlung transportierten Energie ist.

Unter Absorptionsvermögen oder Absorptionskoeffizient wird insbesondere ein Maß für die Abnahme der Intensität elektromagnetischer Wellen beziehungsweise elektromagnetischer Strahlung beim Hindurchdringen durch einen Stoff und/oder durch ein Material verstanden, wobei die Dimension des Absorptionsvermögens und/oder des Absorptionskoeffizienten insbesondere 1/Längeneinheit, bevorzugt 1/Längenmaß, ist. Beispielsweise weist eine opake Schicht für sichtbare Strahlung einen größeren Absorptionskoeffizienten auf als Luft.

Unter Transmissionsvermögen und/oder optischer Dicke wird bevorzugt ein, insbesondere dimensionsloses, Maß verstanden, welches angibt, wie stark die Intensität einer elektromagnetischen Welle beziehungsweise elektromagnetischer Strahlung abnimmt, wenn diese durch einen Stoff und/oder ein Material hindurch dringt.

Insbesondere sind ein oder mehrere Metallschichten der Metallschichten hierbei vorzugsweise musterförmig strukturiert in der Form, dass diese ein oder mehrere Bildelemente umfassen, in denen das Metall der Metallschicht vorgesehen ist und einen Hintergrundbereich umfassen, in denen das Metall der Metallschichten nicht vorgesehen ist. Die Bildelemente können hierbei vorzugsweise in Form von alphanumerischen Zeichen, jedoch auch von Grafiken und komplexen Darstellung von Objekten gebildet sein. Die Bildelemente können insbesondere auch als ein gerastertes, hochaufgelöstes Graustufenbild, beispielsweise ein Portrait, ein Gebäude, eine Landschaft oder ein Tier, gebildet sein. Das Raster kann insbesondere regelmäßig oder fraktal oder unregelmäßig, insbesondere stochastisch ausgebildet sein und bevorzugt bereichsweise in der Ausbildung variieren.

Vorzugsweise umfassen ein oder mehrere Dekorschichten der Dekorschichten weiter insbesondere ein oder mehrere Farbschichten, insbesondere lasierende Farben. Bei diesen Farbschichten handelt es sich insbesondere um Farbschichten, welche mittels eines Druckverfahrens aufgebracht werden, und welche ein oder mehrere Farbstoffe und/oder Pigmente aufweisen, welche bevorzugt in einer Bindemittelmatrix eingebunden sind. Die Farbschichten, insbesondere Farben, können transparent, klar, teilweise streuend, transluzent, intransparent, und/oder deckend sein. Beispielsweise kann im Bereich der Sonne 1a eine gelbe Farbschicht vorgesehen sein und im Bereich der Wellen 1a eine blaue Farbschicht.

Es ist möglich, dass ein oder mehrere Dekorschichten der Dekorschichten ein oder mehrere optisch aktive Reliefstrukturen aufweisen, welche vorzugsweise jeweils in zumindest eine Oberfläche einer Lackschicht, bevorzugt einer replizierten Lackschicht, eingebracht sind. Bei derartigen Reliefstrukturen handelt es sich insbesondere um diffraktive Reliefstrukturen, wie beispielsweise Hologramme, Beugungsgitter, fresnelsche Freiformflächen, Beugungsgitter mit symmetrischen oder asymmetrischen Profilformen und/oder Beugungsstrukturen Nullter Ordnung.

Weiter bevorzugt handelt es sich bei den Reliefstrukturen um isotrop und/oder anisotrop streuende Mattstrukturen, Blaze-Gitter und/oder im Wesentlichen in Reflexion und/oder in Transmission wirkende Reliefstrukturen, wie beispielsweise Mikrolinsen, Mikroprismen oder Mikrospiegel.

Es ist möglich, dass eine oder mehrere Dekorschichten der Dekorschichten ein oder mehrere Flüssigkristallschichten aufweisen, welche vorzugsweise zum einen eine von der Polarisation des einfallenden Lichts abhängige und vorzugsweise zum anderen eine wellenlängenselektive Reflexion und/oder Transmission einfallenden Lichts abhängig von der Ausrichtung der Flüssigkristalle generieren.

Vorzugsweise werden die ein oder mehreren Strukturen der ein oder mehreren Strukturen und/oder das zumindest eine Pixelarray in einen Dünnschichtaufbau, insbesondere in einen Fabry-Perot-Schichtaufbau, eingebracht. Bevorzugt wird der Dünnschichtaufbau auf die ein oder mehreren Strukturen und/oder auf das zumindest eine Pixelarray aufgebracht. Insbesondere weist ein derartiger Fabry-Perot-Schichtaufbau, insbesondere zumindest bereichsweise, zumindest eine erste semitransparente Absorberschicht, zumindest eine transparente Abstandsschicht und zumindest eine zweite semitransparente Absorberschicht und/oder eine opake Reflexionsschicht auf. All diese Schichten des Dünnschichtaufbaus können insbesondere jeweils vollflächig oder partiell vorliegen und die transparenten und opaken bzw. semitransparenten Bereiche insbesondere entweder überlappen oder nicht überlappen.

Insbesondere weist die erste semitransparente Absorberschicht eine Schichtdicke zwischen 5 nm und 50 nm auf. Die Absorberschicht weist bevorzugt Aluminium, Silber, Kupfer, Zinn, Nickel, Inconel, Titan und/oder Chrom auf.

Vorzugsweise weist die erste semitransparente Absorberschicht im Fall von Aluminium und Chrom eine Schichtdicke zwischen 5 nm und 15 nm auf.

Vorzugsweise weist die transparente Abstandsschicht eine Schichtdicke zwischen 100 nm und 800 nm und insbesondere zwischen 300 nm und 600 nm auf. Die Abstandsschicht besteht bevorzugt aus organischem Material, insbesondere aus Polymer, und/oder aus anorganischem $Al_2O_3$, $SiO_2$ und/oder $MgF_2$.

Weiter bevorzugt besteht die transparente Abstandsschicht aus einer gedruckten Polymerschicht, welche insbesondere mittels Tiefdruck, Schlitzgießen oder im Inkjet-Druck aufgebracht wird.

Weiter ist es auch möglich, ein oder mehrere optisch variable Elemente 1a und/oder das streifenförmige Sicherheitselement 1b' und/oder ein oder mehrere Schichten der vorstehenden Schichten und/oder das Substrat 10 beispielsweise mit folgenden weiteren Schichten und/oder Mehrschichtaufbauten zu kombinieren und/oder zu verwenden: Ein oder mehrere HRI-Schichten umfassend ZnS, $TiO_2$, etc., insbesondere gedampft, gesputtert oder mittels Chemical Vapor Deposition (CVD) vollflächig oder partiell aufgebracht; ein oder mehrere HRI- oder LRI-Lackschichten (beispielsweise für optische Effekte in Transmission), insbesondere mittels Tiefdruck vollflächig oder partiell aufgebracht; ein oder mehrere Metalle umfassend Aluminium, Silber, Kupfer, und/oder Chrom und/oder Legierungen hieraus, insbesondere vollflächig oder partiell gedampft, gesputtert, insbesondere mittels Kathodenzerstäubung, und/oder als Tinte umfassend Nanopartikel gedruckt; ein oder mehrere Interferenzschichtaufbauten umfassend HLH (Abfolge bestehend aus HRI-Schicht, LRI-Schicht, HRI-Schicht), HLHLH (Abfolge bestehend aus HRI-Schicht, LRI-Schicht, HRI-Schicht, LRI-Schicht, HRI-Schicht); Abfolgen bestehend aus ein oder mehreren HRI- und LRI-Schichten, wobei sich die HRI- und LRI-Schichten vorzugsweise einander abwechseln, sowie Fabry-Perot-Dreischichtsystem, insbesondere umfassend ein oder mehrere PVD- und/oder CVD-Abstandsschicht; ein oder mehrere Flüssigkristallschichten; Einsatz als belichteter Master in einem Volumenhologramm; Überlagerung mit ein oder mehreren lasierenden Farbschichten; und/oder Einsatz als Vorlage für die Erzeugung von Aztec-Strukturen und/oder zur Konvertierung zu einem mehrstufigem Phasenrelief, welches zumindest einen Farbeffekt bereitstellt.

Insbesondere die Überlagerung mit den ein oder mehreren lasierenden Farbschichten bietet vorteilhafterweise die Möglichkeit, einprägsame und einfach zu erklärende optische Effekte zu generieren. Weiter bevorzugt erscheinen die durch eine Überlagerung mit den ein oder mehreren lasierenden Farbschichten generierten achromatisch gebeugten Effekte des zumindest einen Pixelarray eines optisch variablen Elements monochromatisch in der Farbe, welche durch die ein oder mehreren lasierenden Farbschichten transmittiert wird beziehungsweise von den ein oder mehreren lasierenden Farbschichten nicht herausgefiltert wird. Insbesondere wirken die ein oder mehreren lasierenden Farbschichten als Farbfilter.

Vorzugsweise umfassen die zwei optisch variablen Elemente 1a jeweils zumindest ein Pixelarray, wobei jedes der Pixelarrays zwei oder mehrere Pixel aufweist, wobei ein oder mehrere Pixel der zwei oder mehreren Pixel des jeweiligen Pixelarray (2) ein oder mehrere Strukturen aufweisen, und wobei ein oder mehrere Strukturen der ein oder mehreren Strukturen einfallende elektromagnetische Strahlung in ein oder mehrere Raumwinkel abbilden, beugen und/oder streuen.

Die Fig. 1a verdeutlicht insbesondere die Definition des Raumwinkels unter dem vorzugsweise der Flächeninhalt einer Teilfläche A einer Kugeloberfläche von einer Kugel E verstanden wird, wobei der Flächeninhalt einer Teilfläche A bevorzugt durch das Quadrat des Radius R der Kugel dividiert wird. Die Zahlenwerte des Raumwinkels geben bevorzugt den Winkel $\alpha$ des Lichtkegels im Bezug zur senkrechten z-Achse an. Der Öffnungswinkel $\Omega$ gibt bevorzugt die Breite des Lichtkegels in Bezug auf die Gerade im Zentrum des Lichtkegels, in der Figur 1a durch einen Pfeil gekennzeichnet, an. Die Richtung des Lichtkegels in Bezug auf die x- bzw. y-Achse hängt insbesondere von dem anvisierten optischen Effekt ab.

Vorzugsweise ist ein Verfahren zur Herstellung eines optisch variablen Sicherheitselements, insbesondere der optisch variablen Sicherheitselements 1a, durch folgenden Schritte gekennzeichnet:

Bereitstellung zumindest eines virtuellen Pixelarray umfassend zwei oder mehrere virtuelle Pixel;

Zuordnung zumindest eines Raumwinkels zu ein oder mehreren virtuellen Pixel der zwei oder mehreren virtuellen Pixel des zumindest einen virtuellen Pixelarray;

Anordnung ein oder mehrerer virtueller Feldquellen in und/oder auf zumindest einem Bereich und/oder zumindest ein Segment des zumindest einen zugeordneten Raumwinkels, wobei der zumindest eine Bereich oder das zumindest eine Segment des zumindest einen zugeordneten Raumwinkels in einem ersten Abstand zu den ein oder mehreren virtuellen Pixel der zwei oder mehreren virtuellen Pixel des zumindest einen virtuellen Pixelarray angeordnet ist;

Berechnung ein oder mehrerer virtueller elektromagnetischer Felder ausgehend von den ein oder mehreren virtuellen Feldquellen in einem vorbestimmten Abstand von den ein oder mehreren virtuellen Pixel der zwei oder mehreren virtuellen Pixel des zumindest einen virtuellen Pixelarray in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene;

Berechnung ein oder mehrerer Phasenbilder für die ein oder mehreren virtuellen Pixel der zwei oder mehreren virtuellen Pixel des zumindest einen virtuellen Pixelarray aus einem virtuellen elektromagnetischen Gesamtfeld bestehend aus der Überlagerung der ein oder mehreren virtuellen elektromagnetischen Feldern in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene;

Berechnung virtueller Strukturprofile für die ein oder mehreren virtuellen Pixel der zwei oder mehreren virtuellen Pixel des zumindest einen virtuellen Pixelarray aus den ein oder mehreren Phasenbildern;

Ausbildung der virtuellen Strukturprofile der ein oder mehreren virtuellen Pixel der zwei oder mehreren Pixel des zumindest einen virtuellen Pixelarrays in und/oder auf ein Substrat als zumindest ein Pixelarray umfassend zwei oder mehrere Pixel, wobei ein oder mehrere Pixel der zwei oder mehreren Pixel des zumindest einen Pixelarray ein oder mehrere Strukturen aufweisen, zur Bereitstellung des optisch variablen Elements.

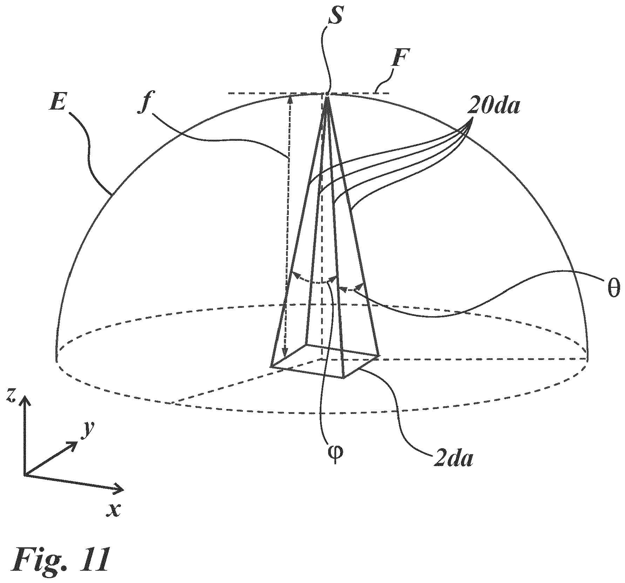

Es ist möglich, dass der zumindest eine zugeordnete Raumwinkel und/oder der zumindest eine Bereich des zumindest einen zugeordneten Raumwinkels das Segment S aufspannt, wobei das Segment S insbesondere einem Segment einer Kugel, bevorzugt einem konischen Segment, entspricht, wobei beispielsweise der halbe Öffnungswinkel, insbesondere $\theta/2$ und/oder $\varphi/2$, des in der Figur 11 gezeigten Segments S kleiner als 10°, bevorzugt kleiner als 5°, weiter bevorzugt kleiner als 1°, ist.

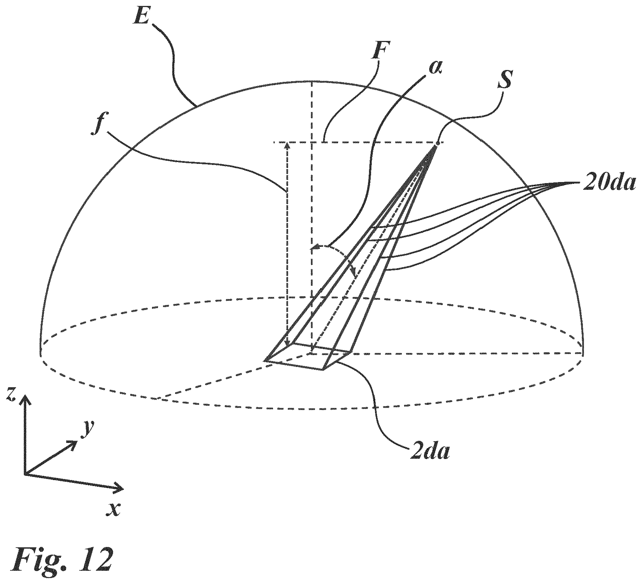

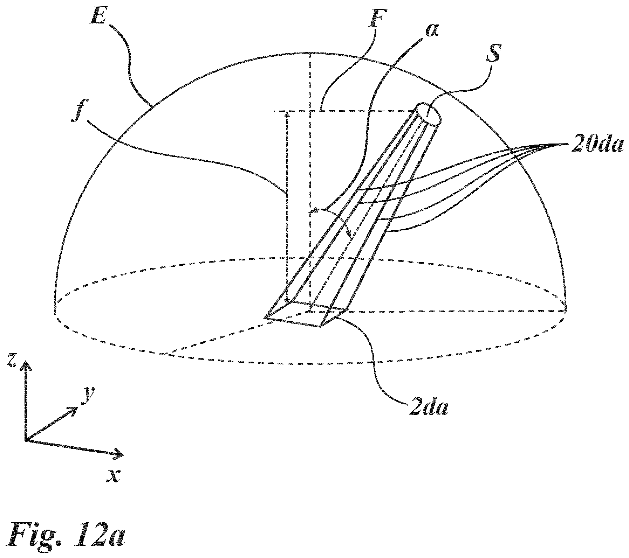

Weiter ist es möglich, dass die virtuellen Feldquellen, welche insbesondere in und/oder auf ein oder mehreren Teilbereichen des in der Figur 11 oder 12 gezeigten Segments S und/oder auf dem zumindest einen Bereich des zumindest einen zugeordneten Raumwinkels angeordnet sind, in zumindest einer Richtung periodisch und/oder pseudozufällig und/oder zufällig auf ein oder mehreren Teilbereichen der ein oder mehreren Teilbereiche des in der Figur 11 oder 12 gezeigten Segments S und/oder auf dem zumindest einen Bereich des zumindest einen zugeordneten Raumwinkels angeordnet sind.

Es ist auch möglich, dass die Abstände benachbarter virtueller Feldquellen zwischen 0,01 mm und 100 mm, insbesondere zwischen 0,1 mm und 50 mm, bevorzugt zwischen 0,25 mm und 20 mm, in und/oder auf ein oder mehreren Teilbereichen der ein oder mehreren Teilbereiche des in der Figur 11 oder 12 gezeigten Segments S und/oder dem zumindest einen Bereich des zumindest einen zugeordneten Raumwinkels liegen, und/oder dass die Abstände benachbarter virtueller Feldquellen insbesondere im Mittel zwischen 0,01 mm und 100 mm, insbesondere zwischen 0,1 mm und 50 mm, bevorzugt zwischen 0,25 mm und 20 mm, in und/oder auf ein oder mehreren Teilbereichen der ein oder mehreren Teilbereiche des in der Figur 11 oder 12 gezeigten Segments S und/oder des zumindest einen Bereichs des zumindest einen zugeordneten Raumwinkels liegen.

Weiter ist es auch möglich, dass die Anordnung der virtuellen Feldquellen, insbesondere der virtuellen Punktfeldquellen, als ein Kreuzraster, bevorzugt einem äquidistanten Kreuzraster, auf ein oder mehreren Teilbereichen der ein oder mehreren Teilbereiche des in der Figur 11 oder 12 gezeigten Segments S und/oder des zumindest einen Bereichs des zumindest einen zugeordneten Raumwinkels erfolgt, wobei der Abstand benachbarter virtueller Feldquellen zueinander zwischen 0,01 mm und 100 mm, insbesondere zwischen 0,1 mm und 50 mm, bevorzugt zwischen 0,25 mm und 20 mm beträgt und/oder wobei der Winkel zwischen zwei benachbarten virtuellen Feldquellen zueinander, insbesondere relativ zur Position der jeweiligen ein oder mehreren virtuellen Pixel der zwei oder mehreren virtuellen Pixel des zumindest einen virtuellen Pixelarray, kleiner als 1°, vorzugsweise kleiner als 0,5°, ist.

Vorzugsweise weisen ein oder mehrere virtuelle Feldquellen der ein oder mehreren virtuellen Feldquellen die Form von Mikrosymbolen auf, insbesondere ausgewählt aus: Buchstabe, Porträt, Bild, alphanumerisches Zeichen, Schriftzeichen, geometrische Freiform, Quadrat, Dreieck, Kreis, gekrümmte Linie, Umriss.

Weiter bevorzugt liegen die lateralen Abmessungen der Mikrosymbole zwischen 0,1° und 10°, insbesondere zwischen 0,2° und 5°.

Bevorzugt sind eine erste Gruppe von ein oder mehreren virtuellen Feldquellen der ein oder mehreren virtuellen Feldquellen aus einem Abstand von 0,3 m, insbesondere von 0,15 m bis 0,45 m, nicht auf einen Schirm projizierbar und/oder eine zweite Gruppe von ein oder mehreren virtuellen Feldquellen der ein oder mehreren virtuellen Feldquellen aus einem Abstand von 1,0 m, insbesondere von 0,8 m bis 1,2 m, auf einen Schirm projizierbar.

Insbesondere bevorzugt weist das virtuelle elektromagnetische Feld, welches von ein oder mehreren der virtuellen Feldquellen ausgeht, insbesondere von allen der virtuellen Feldquellen ausgeht, die gleiche Intensität und/oder die gleiche Intensitätsverteilung über den zumindest einen zugeordneten Raumwinkel und/oder über den zumindest

27

einen Bereich und/oder über das zumindest eine Segment und/oder über das Segment S des zumindest einen zugeordneten Raumwinkels auf.

Weiter ist es möglich, dass das virtuelle elektromagnetische Feld, welche von ein oder mehreren der virtuellen Feldquellen ausgeht, insbesondere von allen der virtuellen Feldquellen ausgeht, eine Intensitätsverteilung über den zumindest einen zugeordneten Raumwinkel und/oder über den zumindest einen Bereich und/oder über das zumindest eine Segment und/oder über das Segment S des zumindest einen zugeordneten Raumwinkels aufweist, welche gaußförmig oder supergaußförmig verteilt ist.

Es ist auch möglich, dass das virtuelle elektromagnetische Feld, welches von zwei oder mehreren der virtuellen Feldquellen ausgeht, insbesondere von allen der virtuellen Feldquellen ausgeht, unterschiedliche Intensitäten und/oder unterschiedliche Intensitätsverteilungen über den zumindest einen zugeordneten Raumwinkel und/oder über den zumindest einen Bereich und/oder über das zumindest eine Segment und/oder über das Segment S des zumindest einen zugeordneten Raumwinkels aufweist.

Weiter ist es auch möglich, dass das virtuelle elektromagnetische Feld, welches von ein oder mehreren der virtuellen Feldquellen ausgeht, insbesondere von allen der virtuellen Feldquellen ausgeht, eine isotrope oder eine anisotrope Intensitätsverteilung über den zumindest einen zugeordneten Raumwinkel und/oder über den zumindest einen Bereich und/oder über das zumindest eine Segment und/oder über das Segment S des zumindest einen zugeordneten Raumwinkels aufweist.

Insbesondere bilden ein oder mehrere der virtuellen Feldquellen, insbesondere alle der virtuellen Feldquellen, eine virtuelle Punktfeldquelle aus, wobei die virtuelle Punktfeldquelle vorzugsweise eine virtuelle Kugelwelle abstrahlt.

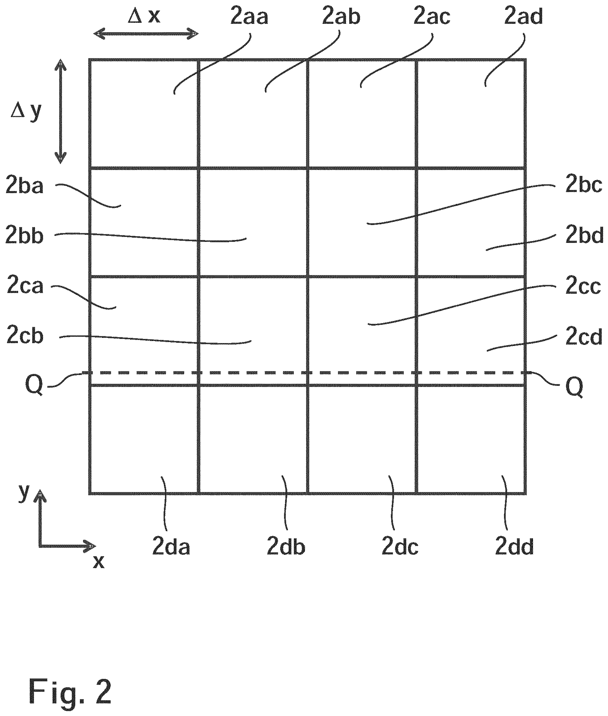

Vorzugsweise wird das virtuelle elektromagnetische Feld $U_i$ ausgehend von einer i-ten virtuellen Punktfeldquelle am Ort $(x_i, y_i, z_i)$ wird an zumindest einer Koordinate $(x_h, y_h, z_h)$, insbesondere einer Koordinate $(x_h, y_h, z_h=0) = (x_h, y_h)$, in und/oder auf ein oder mehreren virtuellen Pixel der zwei oder mehreren virtuellen Pixel 4aa-4dd des zumindest einen virtuellen Pixelarray 4 und/oder in und/oder auf der durch das zumindest eine virtuelle Pixelarray 4 aufgespannten Fläche, insbesondere Ebene, und/oder beispielsweise in den in den Figuren 2, 9, 10, 11, 12 oder 12a gezeigten Pixeln 2aa-2dd, 2aa-2dd, 2ad, 2da, 2da beziehungsweise 2da, mittels der Gleichung

$$U_i(x_h, y_h) = \frac{exp(ikr)}{r}, \quad r = \sqrt{(x_h - x_i)^2 + (y_h - y_i)^2 + z_i^2},$$

berechnet.

Es ist möglich, dass das virtuelle elektromagnetische Feld $U_i$ ein oder mehrere Wellenlängen umfasst, welche insbesondere im sichtbaren Spektralbereich von 380 nm bis 780 nm, bevorzugt von 430 nm bis 690 nm, liegen, wobei ein oder mehrere, jeweils benachbarte Wellenlängen der ein oder mehreren Wellenlängen, bevorzugt in dem sichtbaren Spektralbereich, vorzugsweise äquidistant, zueinander beabstandet sind.

Bevorzugt umfasst das virtuelle elektromagnetische Feld $U_i$ ein oder mehrere Wellenlängen, welche um einen Faktor 2 bis 40, insbesondere um einen Faktor 3 bis 10, bevorzugt um einen Faktor 4 bis 8, größer sind als ein oder mehrere Wellenlängen einfallender elektromagnetischer Strahlung.

Weiter ist es möglich, dass das virtuelle elektromagnetische Feld $U_i$ ein oder mehrere Wellenlängen umfasst, welche insbesondere im infraroten, sichtbaren und/oder ultravioletten Spektralbereich liegen, wobei ein oder mehrere, jeweils benachbarte Wellenlängen der ein oder mehreren Wellenlängen, bevorzugt in dem infraroten, sichtbaren und/oder ultravioletten Spektralbereich, vorzugsweise äquidistant, zueinander beabstandet sind.

Vorzugsweise wird das virtuelle elektromagnetische Gesamtfeld $U_p$ in und/oder auf ein oder mehreren virtuellen Pixel der zwei oder mehreren virtuellen Pixel 4aa-4dd des zumindest einen virtuellen Pixelarray 4 und/oder in und/oder auf der durch das zumindest eine virtuelle Pixelarray 4 aufgespannten Fläche, insbesondere Ebene, und/oder beispielsweise in den in den Figuren 2, 9, 10, 11, 12 oder 12a gezeigten Pixeln 2aa-2dd, 2aa-2dd, 2ad, 2da, 2da beziehungsweise 2da, mittels der Gleichung

$$U_p(x_p, y_p) = U_r^*(x_p, y_p) \sum_{i=1}^{N_p} U_i(x_p, y_p)$$

berechnet, wobei insbesondere die virtuellen elektromagnetischen Felder $U_i$ ausgehend von $i = 1, ..., N_p$ virtuellen Punktfeldquellen an zumindest einer Koordinate $(x_p, y_p, z_p=0) = (x_p, y_p)$ und/oder insbesondere die optionale Referenzwelle $U_r^*$, bevorzugt die zumindest eine optionale Referenzwelle $U_r^*$, an zumindest einem Punkt oder für die Parameter $(x_p, y_p)$ in und/oder auf den ein oder mehreren virtuellen Pixel der zwei oder mehreren virtuellen Pixel 4aa-4dd des zumindest einen virtuellen Pixelarray 4 und/oder in und/oder auf der durch das zumindest eine virtuelle Pixelarray 4 aufgespannten Fläche, insbesondere Ebene, berechnet werden.

Es ist möglich, dass ein oder mehrere Phasenbilder der ein oder mehreren Phasenbilder in ein oder mehrere virtuelle Strukturprofile umgewandelt werden, bevorzugt linear in ein virtuelles Strukturprofil umgewandelt werden, wobei ein Phasenwert von 0 der minimalen Tiefe und ein Phasenwert von $2\pi$ der maximalen Tiefe der ausgebildeten ein oder mehreren Strukturen ein oder mehrerer Pixel der zwei oder mehreren Pixel des zumindest einen Pixelarray entsprechen.

Weiter ist es möglich, dass das virtuelle Strukturprofil ein oder mehrerer virtueller Pixel der zwei oder mehreren virtuellen Pixel des zumindest einen virtuellen Pixelarray mittels Laserbelichtung und Entwicklung auf eine mit Photoresist beschichtete Platte und/oder mittels Elektronenstrahl-Lithographie als die ein oder mehreren Strukturen ein oder mehrerer Pixel der zwei oder mehreren Pixel des zumindest einen Pixelarray ausgebildet wird.

Es ist auch möglich, dass ein oder mehrere in einem oder mehreren Pixeln der zwei oder mehreren Pixel des zumindest einen Pixelarray umfassten beziehungsweise ausgebildeten Strukturen eine optische Tiefe, insbesondere eine optische Tiefe in Luft, von der halben mittleren Wellenlänge des virtuellen elektromagnetischen Feldes und/oder des virtuellen elektromagnetischen Gesamtfeldes aufweisen.

Weiter bevorzugt ist ein Verfahren zur Herstellung eines Sicherheitsdokuments, insbesondere des Sicherheitsdokuments 1d, bevorzugt umfassend ein oder mehrere Schichten, weiter bevorzugt umfassend ein oder mehrere optisch variable Elemente, insbesondere bevorzugt die optisch variablen Elemente 1a, durch die folgenden Schritte gekennzeichnet:

Aufbringen und/oder Einbringen ein oder mehrerer optisch variabler Elemente als Laminierfolie und/oder als Prägefolie auf das Sicherheitsdokument und/oder auf eine oder mehrere Schichten des Sicherheitsdokuments und/oder in das Sicherheitsdokument und/oder in ein oder mehrere Schichten der ein oder mehreren Schichten des Sicherheitsdokuments.

Die Figur 2 zeigt ein Pixelarray in Aufsicht umfassend sechzehn Pixel 2aa-2dd, wobei die Pixel 2aa-2dd als eine 4x4 Matrix angeordnet sind, welche vier Zeilen und vier Spalten aufweist. Die erste Zeile umfasst entlang der Richtung x die Pixel 2aa, 2ab, 2ac, 2ad, die zweite Zeile umfasst entlang der Richtung x die Pixel 2ba, 2bb, 2bc, 2bd, die dritte Zeile umfasst entlang der Richtung x die Pixel 2ca, 2cb, 2cc, 2cd, und die vierte Zeile umfasst entlang der Richtung x die Pixel 2da, 2db, 2dc, 2dd. Die erste Spalte umfasst entlang der Richtung y die Pixel 2da, 2ca, 2ba, 2aa, die zweite Spalte umfasst entlang der Richtung y die Pixel 2db, 2cb, 2bb, 2ab, die dritte Spalte umfasst entlang der Richtung y die Pixel 2dc, 2cc, 2bc, 2ac, und die vierte Spalte umfasst entlang der Richtung y die Pixel 2dd, 2cd, 2bd, 2ad.

Die in der Figur 2 gezeigten Pixel 2aa-2dd weisen die gleichen lateralen Abmessungen $\Delta X$ entlang der Richtung x und die gleichen lateralen Abmessungen $\Delta Y$ entlang der Richtung y auf, wobei diese in der durch die Richtungen x und y aufgespannten Ebene jeweils quadratische Formen ausbilden.

Es ist auch möglich, dass ein oder mehrere oder alle Pixel der ein zwei oder mehreren Pixel 2aa-2dd gleiche oder zueinander unterschiedliche Formen, insbesondere in der durch das Pixelarray 2 definierten Ebene und/oder in der durch die Richtungen x und y definierten Ebene, ausbilden, welche vorzugsweise jeweils ausgewählt sind aus: Kreisfläche, eiförmige Fläche, Ellipsenfläche, Dreiecksfläche, Quadratfläche, Rechteckfläche, Polygonfläche, Kreisringfläche, Freiformfläche, wobei die zwei oder mehreren Pixel im Falle der Auswahl der Form der Pixel als eine Kreisfläche und/oder eiförmige Fläche insbesondere jeweils ein oder mehrere benachbarte Hintergrundflächen aufweisen, welche bevorzugt auch an benachbarte Pixel angrenzen oder nicht angrenzen. Die Form der Pixel variiert insbesondere polygonal, zufällig oder pseudozufällig. Weiter bevorzugt umfasst das zumindest eine Pixelarray, insbesondere das Pixelarray 2 zwei oder mehrere Pixel, welche vorzugsweise unterschiedliche Formen der vorstehenden Formen umfassen und/oder vorzugsweise unterschiedliche Variationen der Formen der vorstehenden Variationen von Formen aufweisen.

Weiter ist es auch möglich, dass ein oder mehrere oder alle Pixel der zwei oder mehreren Pixel 2aa-2dd in unterschiedlichen Richtungen, insbesondere in die unterschiedlichen Richtungen x und y, insbesondere in der durch das Pixelarray 2 definierten Ebene und/oder in der durch die Richtungen x und y definierten Ebene, unterschiedliche laterale Abmessungen aufweisen.

Auch ist es möglich, dass ein oder mehrere oder alle Pixel der zwei oder mehreren Pixel 2aa-2dd, insbesondere in der durch das Pixelarray 2 definierten Ebene und/oder in der durch die Richtungen x und y definierten Ebene, unterschiedliche Flächen belegen und/oder einander überlappen und/oder einander nicht überlappen.

Weiter ist es möglich, dass die Anordnung der Pixel 2aa-2dd in dem Pixelarray 2 einer periodischen Funktion folgt. Beispielsweise können die Mittelpunkte der Pixel in einer Zeile oder Spalte des Pixelarray derart angeordnet sein, dass die Mittelpunkte der Pixel jeweils benachbarter Pixel entlang einer durch die Spalte oder Zeile definierten Richtung vorzugsweise gleich beabstandet sind. Die in der Figur 2 gezeigten Pixel 2aa-2dd weisen entlang der Richtungen x oder y jeweils gleiche Abstände zueinander auf, wobei dies insbesondere benachbarte Pixel der Pixel 2aa-2dd betrifft. Weiter bevorzugt sind ein oder mehrere oder alle Pixel der Pixel 2aa-2dd nicht-periodisch oder insbesondere zufällig oder pseudozufällig, in dem Pixelarray 2 und/oder entlang ein oder mehrerer Richtungen und/oder in der durch die Richtungen x und y aufgespannten beziehungsweise definierten Ebene, angeordnet.

Unter einem Mittelpunkt der Pixel oder einem geometrischen Schwerpunkt der Pixel wird insbesondere bei flächigen Pixeln der Flächenschwerpunkt verstanden, welcher insbesondere bei der Mittelung aller Punkte des zugrundeliegenden Pixels bestimmt wird.

Eine nicht-periodische Anordnung von Pixeln weist den Vorteil auf, dass störende Diffraktionseffekte, welche aufgrund der Größe beziehungsweise Formen und/oder laterale Abmessungen der Pixel entstehen, reduziert oder unterdrückt, insbesondere vollständig unterdrückt werden können.

Vorzugsweise betragen die lateralen Abmessungen ein oder mehrerer Pixel der Pixel 2aa-2dd entlang zumindest einer Richtung, insbesondere entlang der Richtung x und/oder entlang der Richtung y, zwischen 5 $\mu$m und 500 $\mu$m, insbesondere zwischen 10 $\mu$m und 300 $\mu$m, insbesondere zwischen 20 $\mu$m und 150 $\mu$m.

Derartigen lateralen Abmessungen wohnt der Vorteil inne, dass Pixel bei diesen Größenordnungen der lateralen Abmessungen für das Auge eines menschlichen Betrachters, insbesondere in einem gewöhnlichen oder normalen Leseabstand von circa 300 mm nicht oder kaum optisch auflösbar sind. Gleichzeitig sind die Pixel insbesondere groß genug, dass die vorgesehenen Mikrostrukturen achromatisch wirken können.

Es ist möglich, dass die Pixelgröße und/oder ein oder mehrere laterale Abmessungen ein oder mehrerer Pixel der Pixel 2aa-2dd in dem zumindest einen Pixelarray 2 in ein oder mehrere Richtungen, insbesondere in eine oder beide Richtungen der Richtungen x und y, bevorzugt bereichsweise, nicht-periodisch, periodisch, pseudozufällig oder zufällig variieren oder nicht variieren. Bevorzugt variieren die Pixelgrößen in zumindest einem Pixelarray in mindestens eine Raumrichtung maximal um ±70% um einen Mittelwert, bevorzugt maximal um ±50%. Vorzugsweise variieren ein oder mehrere laterale Abmessungen ein oder mehrerer Pixel der zwei oder mehreren Pixel 2aa-2dd in dem zumindest einen Pixelarray 2 in eine oder mehrere Raumrichtungen, insbesondere in eine oder beide Richtungen der Richtungen x und y, in dem zumindest einen Pixelarray 2 zumindest bereichsweise maximal um ±70%, bevorzugt maximal um ±50%, um einem Mittelwert herum, wobei der Mittelwert in einer oder mehrere Richtungen insbesondere zwischen 5 $\mu$m und 500 $\mu$m, insbesondere zwischen 10 $\mu$m und 300 $\mu$m, insbesondere zwischen 20 $\mu$m und 150 $\mu$m, liegt.

Weiter ist es möglich, dass ein oder mehrere Pixel der Pixel 2aa-2dd in dem zumindest einen Pixelarray 2, insbesondere zumindest bereichsweise, periodisch, nicht-periodisch, fraktal, zufällig und/oder pseudozufällig in dem zumindest einen Pixelarray 2 angeordnet sind.

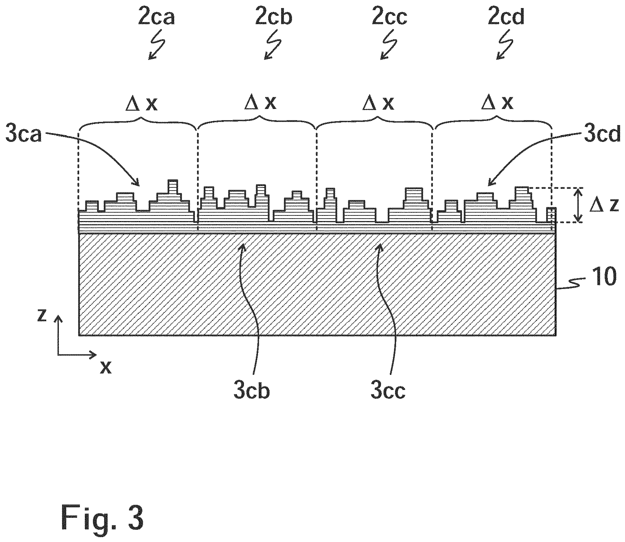

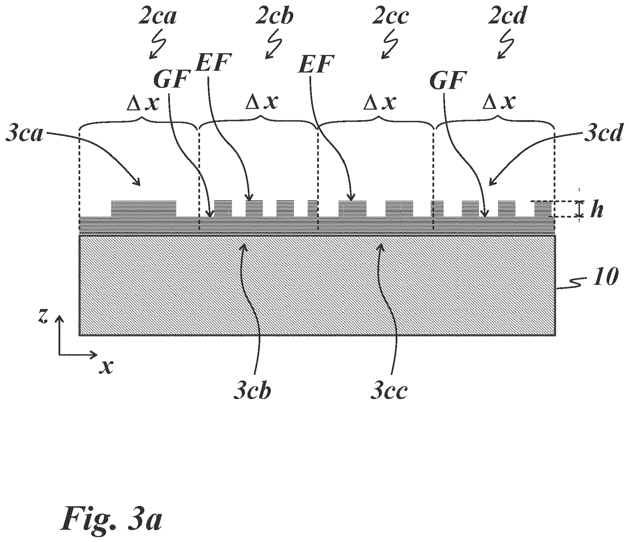

Die Figur 3 zeigt das in der Figur 2 gezeigte Pixelarray 2 umfassend die Pixel 2ca, 2cb, 2cc, 2cd, entlang des Schnitts Q in einem Querschnitt. Das Pixel 2ca umfasst die Struktur 3ca, das Pixel 2cb umfasst die Struktur 3cb, das Pixel 2cc umfasst die Struktur 3cc und das Pixel 2cd umfasst die Struktur 3cd. Die Strukturen 3ca, 3cb, 3cc und 3cd sind auf ein Substrat 10 appliziert, aufgebracht und/oder abgeformt, wobei das Substrat insbesondere ein oder mehrere Schichten aufweist.

Die Figur 3a zeigt eine weitere Ausgestaltungsform des in der Figur 2 gezeigten Pixelarrays 2 umfassend die Pixel 2ca, 2cb, 2cc, 2cd, entlang des Schnitts Q in einem Querschnitt. Das Pixel 2ca umfasst die Struktur 3ca, das Pixel 2cb umfasst die Struktur 3cb, das Pixel 2cc umfasst die Struktur 3cc und das Pixel 2cd umfasst die Struktur 3cd. Die Strukturen 3ca, 3cb, 3cc und 3cd sind auf ein Substrat 10 appliziert, aufgebracht und/oder abgeformt, wobei das Substrat insbesondere ein oder mehrere Schichten aufweist. Im Unterschied zu Figur 3 sind die Strukturen 3ca, 3cb, 3cc und 3cd in dieser Ausgestaltungsform insbesondere binäre Strukturen mit einem ersten Abstand beziehungsweise einer einheitlichen Strukturhöhe h.

Hierbei weisen die in der Figur 3a gezeigten binären Strukturen 3ca, 3cb, 3cc und 3cd beziehungsweise binären Mikrostrukturen, vorzugsweise umfassend ein oder mehrere Strukturelemente, insbesondere eine Grundfläche GF und mehrere Strukturelemente auf, welche bevorzugt jeweils eine gegenüber der Grundfläche GF erhöhte Elementfläche EF und bevorzugt eine zwischen der Elementfläche EF und der Grundfläche GF angeordneten Flanke aufweisen, wobei insbesondere die Grundfläche GF der Struktur 3ca, 3cb, 3cc und 3cd eine durch Koordinatenachsen x und y aufgespannte Grundebene definiert, wobei bevorzugt die Elementflächen EF der Strukturelemente jeweils im Wesentlichen parallel zu der Grundebene GF verlaufen und wobei vorzugsweise die Elementflächen EF der Strukturelemente und die Grundfläche GF in einer senkrecht zur Grundebene in Richtung einer Koordinatenachse z verlaufende Richtung beabstandet sind, insbesondere mit einem ersten Abstand h, welcher vorzugsweise derart gewählt ist, dass insbesondere durch Interferenz des an der Grundfläche GF und den Elementflächen EF reflektierten Lichts im Auflicht und/oder insbesondere durch Interferenz des durch die Elementflächen EF und die Grundfläche GF transmittierten Lichts im Durchlicht eine zweite Farbe in den ein oder mehreren ersten Zonen generiert wird. Hierbei wird vorzugsweise in die direkte Reflexion oder Transmission die zweite Farbe generiert und insbesondere die dazu komplementäre erste Farbe in der ersten oder in höheren Ordnungen. Beispielsweise kann die erste Farbe Violett und die zweite Farbe Orange sein oder die erste Farbe kann Blau und die zweite Farbe Gelb sein.

Es ist möglich, dass das optisch variable Element 1a ein oder mehrere Schichten umfasst, wobei insbesondere das zumindest eine Pixelarray 2 auf oder in zumindest einer Schicht der ein oder mehreren Schichten angeordnet ist und wobei vorzugsweise ein oder mehrere Schichten der ein oder mehreren Schichten ausgewählt sind aus: HRI-Schicht, insbesondere Schicht umfassend HRI- und/oder LRI-Lackschicht, Metallschicht, Interferenzschicht, insbesondere Interferenzschichtabfolgen, bevorzugt HLH oder HLHLH, weiter bevorzugt Fabry-Perot-Dreischichtsystem oder -Mehrschichtsystem, Flüssigkristallschicht, Farbschicht, insbesondere lasierende Farbschicht.

Vorzugsweise weist jede der Strukturen 3ca, 3cb, 3cc, 3cd eine beschränkte maximale Strukturtiefe $\Delta z$, insbesondere eine maximale Strukturtiefe, auf, welche in der Figur 3 für alle Strukturen 3ca, 3cb, 3cc, 3cd in den entsprechenden Pixeln 2ca, 2cb, 2cc, 2cd insbesondere gleich ist.

Weiter bevorzugt weisen ein oder mehrere Strukturen der ein oder mehreren Strukturen 3ca, 3cb, 3cc, 3cd eine beschränkte maximale Strukturtiefe $\Delta z$ auf, wobei die maximale Strukturtiefe $\Delta z$ insbesondere kleiner als 35 $\mu$m, bevorzugt kleiner als 20 $\mu$m, weiter bevorzugt kleiner gleich 15 $\mu$m, noch weiter bevorzugt kleiner gleich 7 $\mu$m, insbesondere bevorzugt kleiner gleich 2 $\mu$m, ist.

Hierbei ergibt sich insbesondere der Vorteil, dass die Dicke beziehungsweise die Gesamtdicke des optisch variablen Elements 1a umfassend das zumindest eine Pixelarray 2 für die Anwendung in Sicherheitsdokumenten 1d, insbesondere auf Banknoten, ID-Karten oder Pässen, kompatibel zu halten.

Insbesondere ist die Gesamtdicke von folienbasierten optisch variablen Elementen 1a, bevorzugt Sicherheitselementen und/oder Dekorelemente, vorzugsweise auf Banknoten, ID-Karten oder Pässen, kleiner als 35 $\mu$m. Es ist bevorzugt, dass die Gesamtdicke kleiner als 20 $\mu$m ist, um insbesondere ein Verbiegen von Banknoten aufgrund einer applizierten Folie umfassend ein oder mehrere optisch variable Elemente 1a vorteilhaft zu unterdrücken. Weiter ist es möglich, dass die beschränkte maximale Strukturtiefe aller Strukturen 3ca, 3cb, 3cc, 3cd der entsprechenden Pixel 2ca, 2cb, 2cc, 2cd derart zu beschränken, dass die Strukturen 3ca, 3cb, 3cc, 3cd vorzugsweise mittels eines Replikationsverfahrens appliziert, aufgebracht und/oder abgeformt werden.

Es ist möglich, dass ein oder mehrere Strukturen der ein oder mehreren Strukturen 3ca, 3cb, 3cc, 3cd derart ausgebildet sind, dass die beschränkte maximale Strukturtiefe $\Delta z$ der ein oder mehreren Strukturen 3ca, 3cb, 3cc, 3cd für mehr als 50% der Pixel, insbesondere für mehr als 70% der Pixel, bevorzugt für mehr als 90% der Pixel, des zumindest einen Pixelarray 2 kleiner gleich 15 $\mu$m, insbesondere kleiner gleich 7 $\mu$m, bevorzugt kleiner gleich 2 $\mu$m, ist.

Weiter ist es möglich, dass ein oder mehrere Strukturen der ein oder mehreren Strukturen 3ca, 3cb, 3cc, 3cd derart ausgebildet sind, dass die maximale Strukturtiefe $\Delta z$ der ein oder mehrerer Strukturen für alle Pixel kleiner gleich 15 $\mu$m, insbesondere kleiner gleich 7 $\mu$m, bevorzugt kleiner gleich 2 $\mu$m, ist.

Eine beschränkte maximale Strukturtiefe von kleiner oder gleich 15 $\mu$m ist vorteilhafterweise insbesondere kompatibel zu Verfahren umfassend UV-Replikationen (UV = ultraviolett) und eine beschränkte maximale Strukturtiefe kleiner oder gleich 7 $\mu$m, insbesondere kleiner oder gleich 2 $\mu$m, ist vorteilhafterweise insbesondere kompatibel zu Verfahren umfassend UV-Replikation und/oder thermische Replikationen.

Auch ist es möglich, dass ein oder mehrere Strukturen der ein oder mehreren Strukturen 3ca, 3cb, 3cc, 3cd, eine Gitterperiode insbesondere kleiner als die Hälfte, bevorzugt kleiner als dem Drittel, weiter bevorzugt kleiner als dem Viertel, der maximalen lateralen Abmessung der Pixel 2ca, 2cb, 2cc, 2cd, bevorzugt jedem der Pixel 2ca, 2cb, 2cc, 2cd, aufweisen.

Weiter ist es insbesondere möglich, dass ein oder mehrere Strukturen der ein oder mehreren Strukturen 3ca, 3cb, 3cc, 3cd zueinander unterschiedlich oder ähnlich oder gleich oder identisch sind.

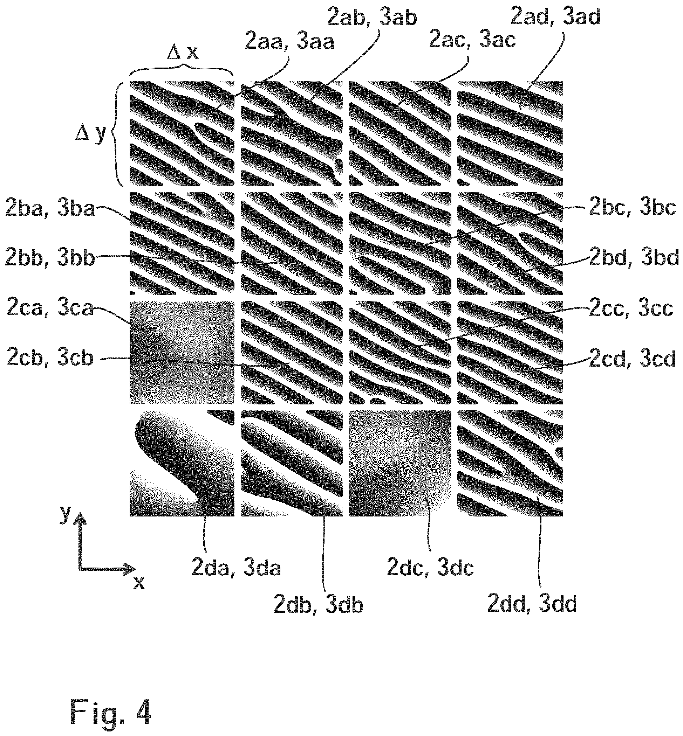

Die Figur 4 zeigt das in der Figur 2 gezeigte Pixelarray 2, bis auf, dass jedem der Pixel 2aa-2dd eine entsprechende Struktur 3aa-3dd zugeordnet ist beziehungsweise dass jedes der Pixel 2aa-2dd eine entsprechende Struktur 3aa-3dd umfasst, wobei die Strukturen 3aa-3dd als hologrammartige, insbesondere einfallendes Licht achromatisch abbildende, beugende und/oder streuende, Strukturen ausgebildet sind.

Insbesondere weisen ein oder mehrere oder alle der Strukturen der Strukturen 3aa-3dd zueinander unterschiedliche optische Eigenschaften auf.

Es ist möglich, dass jedem Pixel der Pixel 2aa-2dd des zumindest einen Pixelarray 2 ein oder mehrere Strukturen der ein oder mehreren Strukturen 3aa-3dd zugeordnet sind, wobei die einem Pixel zugeordneten ein oder mehreren Strukturen einfallende elektromagnetische Strahlung in ein oder mehrere vorbestimmte Raumwinkel abbilden, beugen und/oder streuen, wobei insbesondere den ein oder mehreren vorbestimmten Raumwinkeln jeweils eine Richtung, vorzugsweise eine vorbestimmte Richtung, zugeordnet ist.

Weiter ist es möglich, dass ein oder mehrere Strukturen der ein oder mehreren Strukturen 3aa-3dd und/oder ein oder mehrere zugeordnete Strukturen der ein oder mehreren zugeordneten Strukturen 3aa-3dd in ein oder mehrere Raumwinkel der ein oder mehreren Raumwinkel und/oder ein oder mehrere vorbestimmten Raumwinkel der ein oder mehreren vorbestimmten Raumwinkel abbilden, beugen und/oder streuen, welche sich insbesondere voneinander unterscheiden, wobei ein oder mehrere auf eine um einen Pixel angeordnete Kugel, insbesondere eine Einheitskugel mit einem Einheitsradius von 1, projizierte Raumwinkel der ein oder mehreren Raumwinkel und/oder vorbestimmten Raumwinkel der ein oder mehreren vorbestimmten Raumwinkel ein oder mehrere, insbesondere gleiche oder verschiedenartige, Formen ausbilden, welche vorzugsweise jeweils ausgewählt sind aus: Kreisfläche, Ellipsenfläche, Dreiecksfläche, Quadratfläche, Rechteckfläche, Polygonfläche, Kreisringfläche, wobei insbesondere ein oder mehrere Formen der ein oder mehreren Formen offen oder geschlossen sind und/oder aus ein oder mehreren Teilformen bestehen und wobei vorzugsweise zumindest zwei Teilformen miteinander verbunden oder überlagert sind.

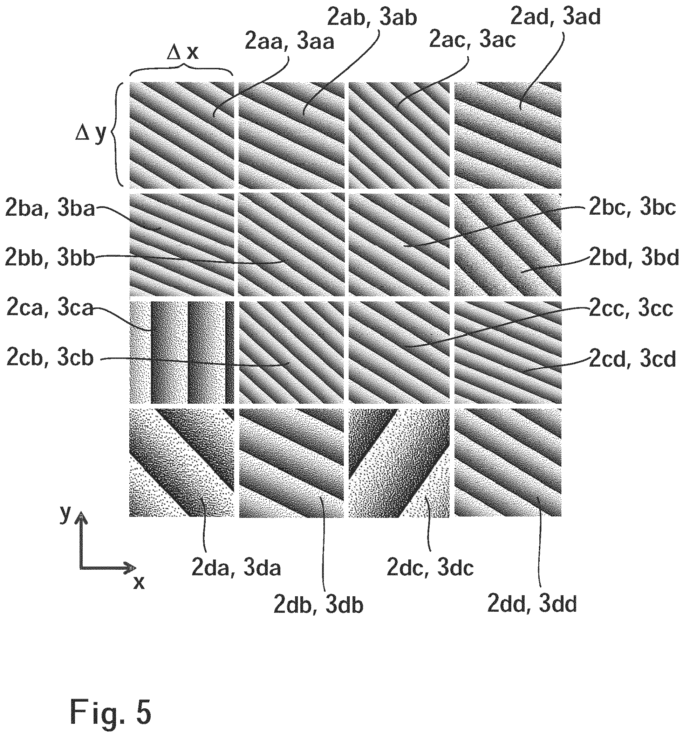

Die Figur 5 zeigt das in der Figur 2 gezeigte Pixelarray 2, bis auf, dass jedem der Pixel 2aa-2dd eine entsprechende Struktur 3aa-3dd zugeordnet ist beziehungsweise dass jedes der Pixel 2aa-2dd eine entsprechende Struktur 3aa-3dd umfasst, wobei die Strukturen 3aa-3dd als Gitterstrukturen ausgebildet sind, welche einfallendes Licht achromatisch abbilden, beugen und/oder streuen. Insbesondere sind die Gitterstrukturen lineare Gitterstrukturen, welche bevorzugt ein blaze-artiges Gitterprofil aufweisen.

Bevorzugt sind die achromatisch beugenden Gitterstrukturen in ein oder mehreren Pixeln der Pixel 2aa-2dd in dem zumindest einen Pixelarray 2 mit weiteren Mikrostrukturen und/oder Nanostrukturen, insbesondere linearen Gitterstrukturen, bevorzugt Kreuzgitterstrukturen, weiter bevorzugt Subwellenlängengitterstrukturen, überlagert.

Es ist möglich, dass die ein oder mehrere Strukturen der ein oder mehreren Strukturen 3aa-3dd, welche als achromatisch beugende Gitterstrukturen, vorzugsweise als Blaze-Gitter, ausgebildet sind, insbesondere eine Gitterperiode von größer als 3 $\mu$m, bevorzugt von größer als 5 $\mu$m, aufweisen und/oder insbesondere jedes Pixel der Pixel 2aa-2dd mindestens zwei Gitterperioden der achromatisch beugenden Strukturen umfassen.

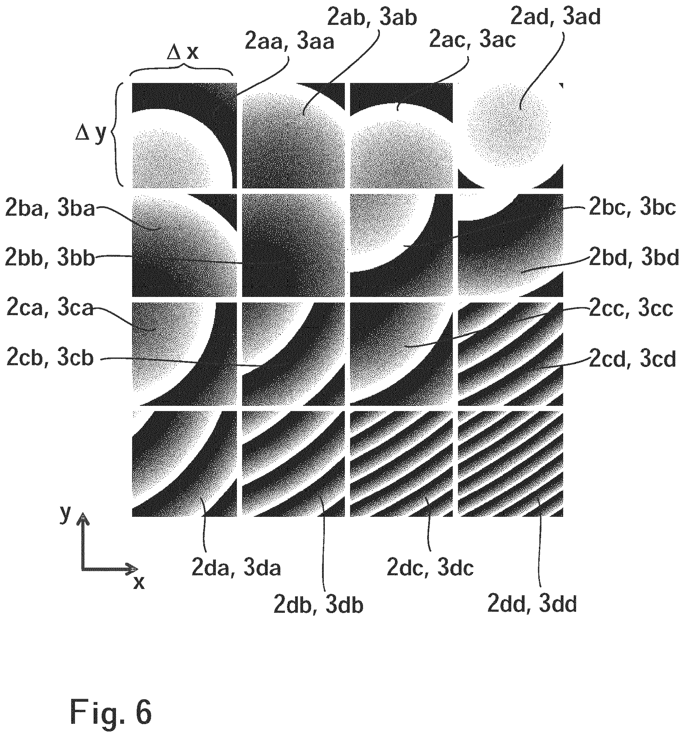

Die Figur 6 zeigt das in der Figur 2 gezeigte Pixelarray 2, bis auf, dass jedem Pixel der Pixel 2aa-2dd eine entsprechende Struktur 3aa-3dd zugeordnet ist beziehungsweise dass jedes Pixel der Pixel 2aa-2dd eine entsprechende Struktur 3aa-3dd umfasst, wobei die Strukturen 3aa-3dd als Fresnelsche Mikrolinsenstrukturen und/oder Teilbereiche bzw. Ausschnitte von Fresnelschen Mikrolinsenstrukturen ausgebildet sind, wobei insbesondere die Gitterlinien der Fresnelschen Mikrolinsenstrukturen als gekrümmte Gitterlinien ausgebildet sind und/oder Gitterlinien mit variierenden Gitterperioden aufweisen und/oder wobei insbesondere jedes Pixel der zwei oder mehreren Pixel, vorzugsweise in zumindest einer Raumrichtung, mindestens zwei Gitterperioden umfasst.

Es ist möglich, dass die Fresnelschen Mikrolinsenstrukturen als Blaze-Gitter ausgestaltet sind, wobei die Gitterlinien insbesondere gekrümmt sind und/oder wobei die Gitterperiode vorzugsweise variiert.

Insbesondere sind ein oder mehrere oder alle der Strukturen weniger bevorzugt als Mikrospiegel und/oder Mikroprismen, insbesondere weniger bevorzugt als achromatisch refraktiv abbildende Mikrostrukturen ausgebildet.

Es ist weiter möglich, dass mehr als 70% der Pixel, insbesondere mehr als 90% der Pixel, der Pixel 2aa-2dd in dem zumindest einen Pixelarray 2 ein oder mehrere Strukturen der ein oder mehreren Strukturen 3aa-3dd aufweisen, welche eine Anzahl von mindestens 2 Erhebungen, insbesondere mindestens 3 Erhebungen, bevorzugt mindestens 4 pro Pixel, aufweisen.

Weiter bevorzugt weisen ein oder mehrere Strukturen der ein oder mehreren Strukturen eine Anzahl von mindestens 2 Erhebungen, insbesondere mindestens 3 Erhebungen, bevorzugt mindestens 4 Erhebungen pro Pixel, auf.

Vorzugsweise liegen zumindest zwei Gitterperioden der als Blaze-Gitter und/oder Fresnelschen Mikrolinsenstrukturen ausgebildeten Strukturen in zumindest einem Pixel, wobei die Gitterperiode hierbei vorzugsweise kleiner als die Hälfte der maximalen lateralen Abmessung eines jeden Pixel ist.

Auch ist es möglich, dass ein oder mehrere Strukturen der ein oder mehreren Strukturen 3aa-3dd als chromatische Gitterstrukturen, insbesondere als lineare Gitter, bevorzugt als lineare Gitter mit einem sinusförmigen Profil, und/oder als Nanotext und/oder als Spiegelflächen ausgebildet sind. Dadurch ist es insbesondere möglich, farbige Designelemente und/oder versteckte Merkmale in das achromatisch erscheinende Pixelarray zu integrieren.

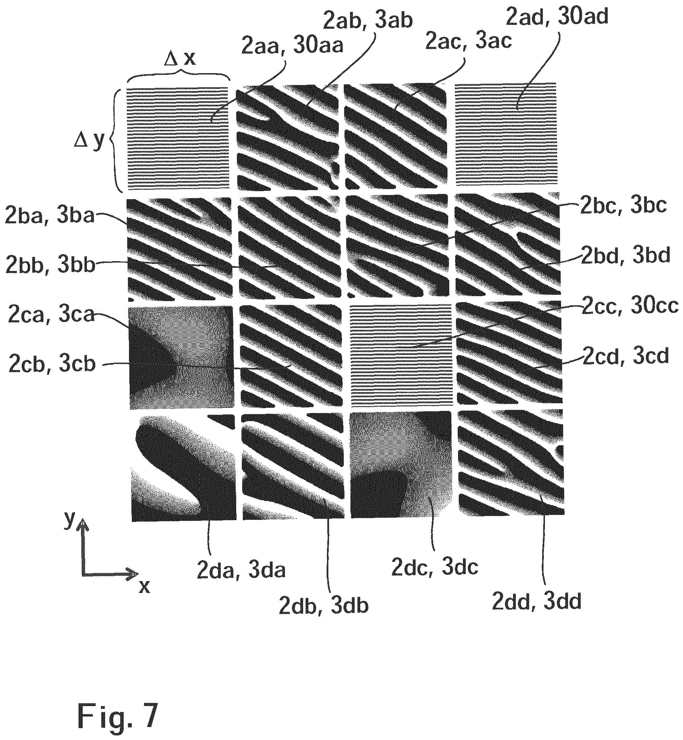

Die Figur 7 zeigt das in der Figur 2 gezeigte Pixelarray 2, bis auf, dass die Pixel 2aa, 2ad und 2cc jeweils ein lineares Gitter 30aa, 30ad beziehungsweise 30cc, insbesondere umfassend ein sinusförmiges Profil, aufweisen.

Es ist möglich, die achromatischen Effekte der ein oder mehreren Strukturen 3aa-3dd durch die Verwendung beziehungsweise Applikation oder Abformung weiterer Strukturen durch weitere optische Effekte zu erweitern und hierbei die Fälschungssicherheit vorteilhaft weiter zu erhöhen.

Weiter ist es möglich, dass ein oder mehrere Strukturen der ein oder mehreren Strukturen 3aa-3dd, bevorzugt in ein oder mehrere Pixel der Pixel 2aa-2dd, als Subwellenlängengitter, insbesondere als lineare Subwellenlängengitter, ausgebildet sind, wobei bevorzugt die Gitterperiode der Subwellenlängengitter, insbesondere der linearen Subwellenlängengitter, weniger als 450 nm beträgt und/oder wobei insbesondere zumindest ein derartiges Pixelarray einen für einen Betrachter erfassbaren optisch variablen Effekt beim Kippen und/oder Drehen des optisch variablen Elements und/oder des zumindest einen Pixelarray bereitstellt. Insbesondere handelt es sich bei einem derartigen optisch variablen Effekt um ein oder mehrere von einem Betrachter und/oder von einem Sensor erfassbare Icons, Logos, Bilder und/oder weitere Motive, welche vorzugsweise bei einem starken Kippen des optisch variablen Elements 1a aufleuchten.

Auch ist es weiter möglich, dass ein oder mehrere Strukturen der ein oder mehreren Strukturen 3aa-3dd, insbesondere zumindest partiell, mit einer Metallschicht versehen sind und/oder einfallende elektromagnetische Strahlung absorbieren, wobei vorzugsweise ein oder mehrere Pixel der zwei oder mehreren Pixel in Reflexion, bevorzugt in direkter Reflexion, für einen Betrachter in dunkelgrau bis schwarz erfassbar sind.

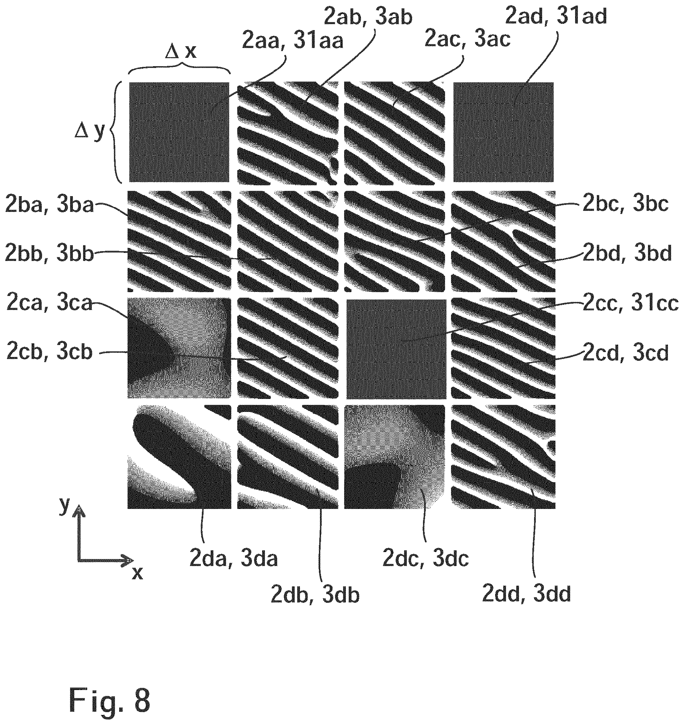

Die Figur 8 zeigt das in der Figur 2 gezeigte Pixelarray 2, bis auf, dass die Pixel 2aa, 2ad und 2cc jeweils eine Licht absorbierende, insbesondere einfallendes Licht absorbierende, Mikrostruktur 31aa, 31ad beziehungsweise 31cc aufweisen, wobei diese absorbierenden Mikrostrukturen 31aa, 31ad beziehungsweise 31cc für einen Betrachter und/oder einen Sensor vorzugsweise dunkelgrau bis schwarz erscheinen. Insbesondere sind die absorbierenden Mikrostrukturen 31aa, 31ad beziehungsweise 31cc als Subwellenlängen-Kreuzgitter, insbesondere mit einer Gitterperiode kleiner gleich 450 nm, bevorzugt kleiner gleich 350 nm, ausgebildet. Derartige Pixel mit dunkelgrau bis schwarz erscheinenden Mikrostrukturen ermöglichen es insbesondere, den Kontrast des Erscheinungsbildes des Pixelarrays zu erhöhen und beispielsweise die Illusion von Schattenwürfen zu erzeugen.

Es ist auch möglich, dass ein oder mehrere Strukturen der ein oder mehreren Strukturen 3aa-3dd als Mikrostrukturen ausgebildet sind, welche Licht absorbieren, insbesondere einfallendes Licht absorbieren, und/oder bei Normalbetrachtung beziehungsweise in direkter Reflexion für einen Betrachter und/oder einen Sensor farbig erscheinen.

Es ist möglich, weitere Strukturen durch weitere optische Effekte zu erweitern und hierbei die Fälschungssicherheit vorteilhaft weiter zu erhöhen.

Weiter ist es möglich, die achromatischen Effekte der ein oder mehreren Strukturen 3aa-3dd durch die Verwendung beziehungsweise Applikation oder Abformung von lichtabsorbierenden Mikrostrukturen in ein oder mehreren Pixel der Pixel 2aa-2dd des zumindest einen Pixelarray 2 um Kontrastlinien oder Kontrastflächen in einem Design zu ergänzen. Hierbei ist es beispielsweise möglich, ein optisch auf einen Betrachter und/oder einen Sensor hervorspringendes oder zuspringendes 3D-Objekt, wie beispielsweise ein Portrait, welches durch die, einfallendes Licht gerichtet abbildenden, beugenden und/oder streuenden Strukturen 3aa-3dd in den entsprechenden Pixeln der Pixel 2aa-2dd generiert wird, durch die für einen Betrachter und/oder Sensor dunkel bis schwarz erscheinenden Pixel umfassend die lichtabsorbierenden Mikrostrukturen kontrastreicher erfassbar zu gestalten. Insbesondere ist es möglich, dass die dunkel erscheinenden Pixel beispielweise einen von einem Betrachter erwarteten Schattenwurf kontrastreicher darstellen.

Insbesondere weisen ein oder mehrere Strukturen der ein oder mehreren Strukturen 3aa-3dd eine HRI-Schicht auf, wobei insbesondere die Pixel, welche die ein oder mehreren Strukturen aufweisen, in Reflexion für einen Betrachter und/oder Sensor farbig erfassbar sind.

Vorzugsweise ist es möglich, in einer von einem Design vorbestimmten Anzahl von Pixeln der Pixel 2aa-2dd Mikrostrukturen vorzusehen, welche, insbesondere bei einer zumindest partiellen Beschichtung mit zumindest einer hochbrechenden dielektrischen Schicht, insbesondere zumindest einer HRI-Schicht, vorzugsweise bei Normalbetrachtung beziehungsweise in direkter Reflexion farbig, beispielsweise rot oder grün, bei Erfassung durch einen Betrachter und/oder einen Sensor erscheinen. Derartige Mikrostrukturen sind bevorzugt als lineare Subwellenlängengitter ausgebildet, wobei die farbigen Pixel umfassend die derartigen Mikrostrukturen beispielsweise in einem Portrait für einen Betrachter und/oder Sensor grün erfassbare Pupillen generieren.

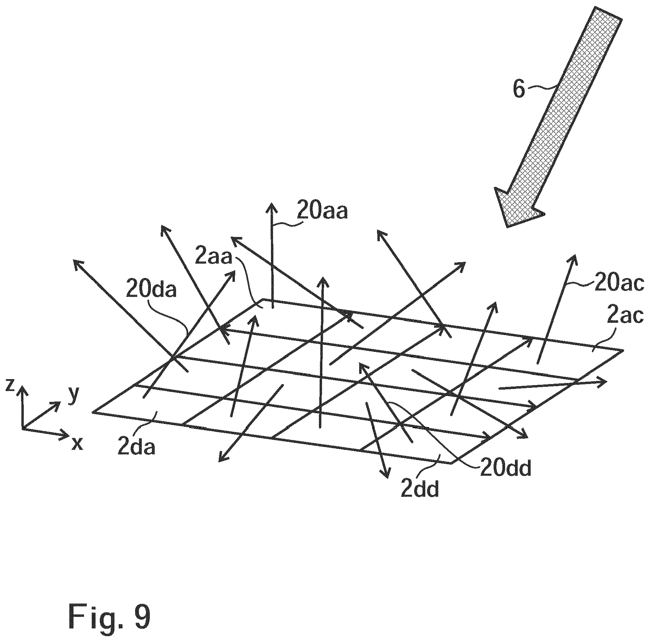

Die Figur 9 zeigt einen Ausschnitt eines Pixelarray 2 umfassend sechszehn Pixel 2aa-2dd in einer perspektivischen Draufsicht, wobei sich das Pixelarray in der durch die Richtungen x und y aufgespannten Ebene erstreckt. Weiter ist die Einfallsrichtung eines einfallenden Lichts 6 und die Ausfallsrichtungen ausfallenden Lichts 20aa-20dd für die entsprechenden Pixel 2aa-2dd in der Figur 9 gezeigt. Das ausfallende Licht 20aa-20dd strahlt insbesondere in den Halbraum ab, welcher insbesondere durch die Ebene des Pixelarrays definiert ist, wobei das einfallende Licht 6 vorzugsweise aus einer Richtung dieses Halbraums einfällt. Das einfallende Licht 6 wird insbesondere achromatisch in die entsprechenden Richtungen des ausfallenden Lichts 20aa-20dd als ausfallendes Licht 20aa-20dd gebeugt. Hierbei wird das einfallende Licht 6 insbesondere pseudo-zufällig in beliebige Raumrichtungen als ausfallendes Licht 20aa-20dd in oder an jedem Pixel 2aa-2dd, bevorzugt individuell in oder an jedem Pixel 2aa-2dd umfassend eine jeweilige Struktur 3aa-3dd, achromatisch abgebildet, gebeugt und/oder gestreut.

Es ist möglich, dass ein oder mehrere Strukturen der ein oder mehreren Strukturen 3aa-3dd, bevorzugt in den entsprechenden Pixeln der Pixel 2aa-2dd, einfallende elektromagnetische Strahlung, insbesondere einfallendes Licht 6, pseudo-zufällig oder zufällig derart in alle Raumrichtungen abbilden, beugen und/oder streuen, dass ein oder mehrere Pixel des Pixelarrays 2 in Reflexion für einen Betrachter und/oder einen Sensor vorzugsweise isotrop weiß, bevorzugt isotrop achromatisch, erfassbar ist.

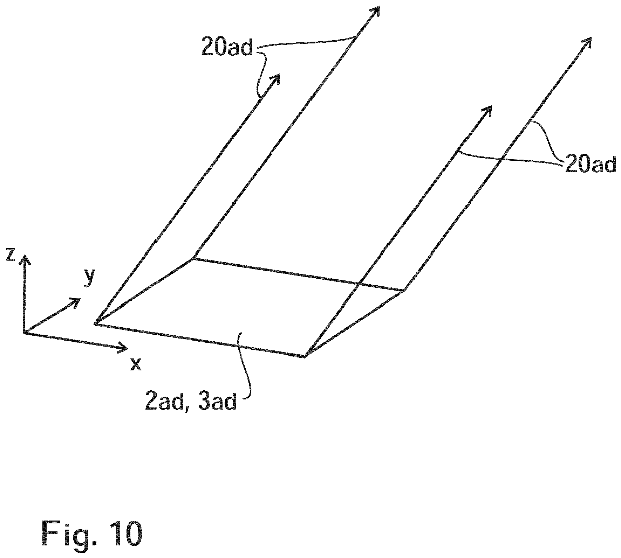

Die Figur 10 zeigt einen vergrößerten Ausschnitt des in der Figur 9 gezeigten Pixelarray 2, welcher beispielsweise einen Pixel 2ad, umfassend Licht abbildenden, beugenden und/oder streuenden Strukturen 3ad, umfasst, welcher einfallendes Licht beziehungsweise einfallende elektromagnetische Strahlung als ausfallendes Licht 20ad in eine vorbestimmte Richtung und/oder in einem vorbestimmten Raumwinkel abbildet, beugt und/oder streut. Hierbei verlaufen die Bahnen und/oder Propagationsrichtungen des ausfallenden Lichts 20ad vorzugsweise parallel zueinander.

Es ist auch möglich, dass das auf das Pixelarray 2 einfallende Licht beziehungsweise die einfallende elektromagnetische Strahlung als ausfallendes Licht 2aa-2dd lediglich in zumindest einem Bereich, insbesondere ein oder mehreren zumindest teilweise zusammenhängenden oder nicht zusammenhängenden und/oder zumindest teilweise überlappenden oder nicht überlappenden Bereichen, der ein oder mehreren vorbestimmten Raumwinkel pseudo-zufällig oder zufällig abgebildet, gebeugt und/oder gestreut wird. Hierdurch wird vorteilhafterweise in diesen Bereichen und/oder vorbestimmten Raumwinkeln die Helligkeit und/oder Intensität des ausfallenden Lichts beziehungsweise der ausfallenden elektromagnetischen Strahlung erhöht, wobei insbesondere der von einem Betrachter und/oder Sensor erfassbare Effekt, bevorzugt visuelle Effekt, besser erfassbar bei schwachen Beleuchtungsbedingungen ist.

Weiter ist es auch möglich, bei einer starken Einschränkung, insbesondere ein oder mehrerer Öffnungswinkel, ein oder mehrere der vorbestimmten Raumwinkel der ein oder mehreren vorbestimmten Raumwinkel in zumindest einer Richtung, einen asymmetrischen und/oder dynamischen Weiss-Effekt zu erzeugen. Hierbei werden die Öffnungswinkel der vorbestimmten Raumwinkel vorzugsweise auf kleiner +/-10°, bevorzugt kleiner +/-5°, weiter bevorzugt +/-3°, insbesondere in zumindest eine Richtung, beschränkt.

Eine Zusammenfassung der wichtigsten Strukturparameter sowie von Wertebereichen dieser Parameter ist in Tabelle 1 aufgelistet.

| Strukturparameter | Bereiche | Bevorzugte Bereiche | Besonders bevorzugte Bereiche |
|---|---|---|---|
| Laterale Abmessungen eines Pixels und/oder $\Delta_X$ und/oder $\Delta_Y$ | 5 $\mu$m bis 500 $\mu$m | 10 $\mu$m bis 300 $\mu$m | 20 $\mu$m bis 150 $\mu$m |
| Beschränkte maximale Strukturtiefe | $\leq$ 15 $\mu$m | $\leq$ 4 $\mu$m | $\leq$ 2 $\mu$m |
| Abstände benachbarter virtueller Feldquellen | 0,001 m bis 100 m | 0,1 m bis 5 m | 0,25 bis 2 m |
| Fokuslänge Mikrolinse | 0,04 mm bis 5 mm | 0,06 mm bis 3 mm | 0,1 mm bis 2 mm |
| Anzahl Erhebungen pro Pixel | $\geq 2$ | $\geq 3$ | $\geq 4$ |

Die Figur 11 zeigt ein vergrößerten Ausschnitt des in der Figur 6 gezeigten Pixelarrays 2 umfassend den Pixel 2da, in welchem zumindest eine Struktur 3da als Fresnelsche Mikrolinsenstruktur abgeformt ist, wobei einfallendes Licht beziehungsweise einfallende elektromagnetische Strahlung von der Struktur 3da auf ein oder mehrere Punkte und/oder ein oder mehrere Flächen im Raum senkrecht zu der durch das Pixelarray 2 aufgespannten Ebene und/oder zu der durch die Richtungen x und y aufgespannten Ebene abgebildet, gebeugt und/oder gestreut, insbesondere fokussiert wird. Die Figur 11 ist lediglich schematisch und nicht maßstabsgetreu.

Es ist weiter auch möglich, dass ein oder mehrere Strukturen der ein oder mehreren Strukturen als Mikrolinsen, insbesondere Fresnelsche Mikrolinsen, ausgebildet sind, wobei insbesondere die Fokuslänge der ein oder mehreren Strukturen zwischen 0,04 mm bis 5 mm, insbesondere 0,06 mm bis 3 mm, bevorzugt 0,1 mm bis 2 mm, beträgt und/oder wobei insbesondere die Fokuslänge in einer Richtung x und/oder y durch die Gleichung

$$f_{x,y} = \frac{\Delta_{x,y}/2}{\tan(\phi_{x,y}/2)}$$

bestimmt ist, wobei bevorzugt $\Delta_{x,y}$ die jeweilige laterale Abmessung ein oder mehrerer Pixel der zwei oder mehreren Pixel des zumindest einen Pixelarrays in die Richtung x beziehungsweise in die Richtung y ist und $\phi_{x,y}$ der jeweilige Raumwinkel in die Richtung x beziehungsweise in die Richtung y ist, in welche die ein oder mehreren Strukturen einfallende elektromagnetische Strahlung, insbesondere einfallendes Licht, abbilden, beugen und/oder streuen.

Weiter ist es möglich, dass ein oder mehrere Strukturen der ein oder mehreren Strukturen als Zylinderlinse ausgebildet sind, wobei insbesondere die Fokuslänge der ein oder mehreren Strukturen unendlich groß ist.

Insbesondere bestimmen die Größen und/oder die lateralen Abmessungen der Pixel und/oder der zugeordneten Raumwinkel die entsprechenden Fokuslängen.

Die Figur 12 zeigt einen vergrößerten Ausschnitt des in der Figur 6 gezeigten Pixelarrays 2 umfassend den Pixel 2da, in welchem zumindest eine Struktur 3da als Fresnelsche Mikrolinsenstruktur abgeformt ist, wobei einfallendes Licht beziehungsweise einfallende elektromagnetische Strahlung von der Struktur 3da auf ein oder mehrere Punkte oder ein oder mehrere Flächen im Raum, insbesondere nicht senkrecht, zu der durch das Pixelarray 2 aufgespannten Ebene und/oder zu der durch die Richtungen x und y aufgespannten Ebene sondern in einem Winkel $\alpha$ zu der Flächennormalen f der vorstehenden Ebenen in eine Richtung R abgebildet, gebeugt und/oder gestreut, insbesondere fokussiert wird.

Hierbei ist der Radius der Kugel E insbesondere gleich der Fokushöhe f Die Fresnelschen Mikrolinsenstruktur ist vorzugsweise für eine Wellenlänge von 550 nm, insbesondere einen Wellenlängenbereich von 450 nm bis 650 nm, des einfallenden Lichts berechnet beziehungsweise ausgelegt.

Die Figur 12a zeigt einen vergrößerten Ausschnitt des in der Figur 6 gezeigten Pixelarrays 2 umfassend den Pixel 2da, in welchem zumindest eine Struktur 3da als Fresnelsche Mikrolinsenstruktur abgeformt ist, wobei einfallendes Licht beziehungsweise einfallende elektromagnetische Strahlung von der Struktur 3da auf ein oder mehrere Punkte oder ein oder mehrere Flächen im Raum, insbesondere nicht senkrecht, zu der durch das Pixelarray 2 aufgespannten Ebene und/oder zu der durch die Richtungen x und y aufgespannten Ebene, sondern in einem Winkel $\alpha$ zu der Flächennormalen f der vorstehenden Ebenen in eine Richtung R abgebildet, gebeugt und/oder gestreut, insbesondere fokussiert wird.

Insbesondere wird in und/oder auf den in den Figuren 11, 12 und 12a gezeigten Segmenten S zumindest ein virtuelles Pixelarray umfassend zwei oder mehrere virtuelle Pixel bereitgestellt, wobei vorzugsweise jedem der ein oder mehreren virtuellen Pixel der zwei oder mehreren virtuellen Pixel des zumindest einen virtuellen Pixelarray zumindest ein Raumwinkel zugeordnet wird. Die halben Öffnungswinkel des in der Figur 11 gezeigten zugeordneten Raumwinkels, welcher durch die Linien 20da begrenzt wird, betragen beispielsweise θ/2 und φ/2. In den Figuren 11, 12 und 12a ist vorzugsweise jeweils ein virtueller Pixel den jeweiligen Pixeln 2da zugeordnet.

Weiter bevorzugt werden ein oder mehrere virtuelle Feldquellen in und/oder auf den in den Figuren 11, 12 und 12a gezeigten Segmenten S angeordnet, wobei insbesondere die in den Figuren 11, 12 und 12a gezeigten Segmente S jeweils in ersten Abständen zu den jeweiligen virtuellen Pixeln angeordnet sind, wobei die Position und/oder Ausrichtung des jeweiligen virtuellen Pixel in den Figuren 11, 12 beziehungsweise 12a vorzugsweise jeweils der Position und/oder Ausrichtung der in den Figuren 11, 12 und 12a gezeigten jeweiligen Pixel 2da entspricht.

Vorzugsweise werden ein oder mehrere virtuelle elektromagnetische Felder ausgehend von den ein oder mehreren virtuellen Feldquellen, insbesondere angeordnet in den in den Figuren 11, 12 und 12a gezeigten Segmenten S, in einem vorbestimmten Abstand von ein oder mehreren virtuellen Pixel der zwei oder mehreren virtuellen Pixel des zumindest einen virtuellen Pixelarray in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, berechnet.

Vorzugsweise werden ein oder mehrere Phasenbilder für ein oder mehreren virtuellen Pixel der zwei oder mehreren virtuellen Pixel des zumindest einen virtuellen Pixelarray aus einem virtuellen elektromagnetischen Gesamtfeld bestehend aus der Überlagerung der ein oder mehreren virtuellen elektromagnetischen Feldern in und/oder auf den ein oder mehreren virtuellen Pixel der zwei oder mehreren virtuellen Pixel des zumindest einen virtuellen Pixelarray und/oder in und/oder auf der durch das zumindest eine virtuelle Pixelarray aufgespannten Fläche, insbesondere Ebene, berechnet, wobei die jeweiligen Ebenen in den Figuren 11, 12 und 12a insbesondere den durch die jeweiligen Pixel 2da aufgespannten Ebenen entsprechen.

Weiter bevorzugt werden virtuelle Strukturprofile für die ein oder mehreren virtuellen Pixel der zwei oder mehreren virtuellen Pixel des zumindest einen virtuellen Pixelarray aus den ein oder mehreren Phasenbildern berechnet.

Insbesondere bevorzugt werden die virtuellen Strukturprofile der zwei oder mehreren virtuellen Pixel des zumindest einen virtuellen Pixelarrays in und/oder auf ein Substrat als zumindest ein Pixelarray umfassend zwei oder mehrere Pixel, wobei die jeweiligen in den Figuren 11, 12 und 12a gezeigten Pixel 2da des zumindest einen Pixelarray ein oder mehrere Strukturen 3da aufweisen, zur Bereitstellung eines optisch variablen Elements ausgebildet.

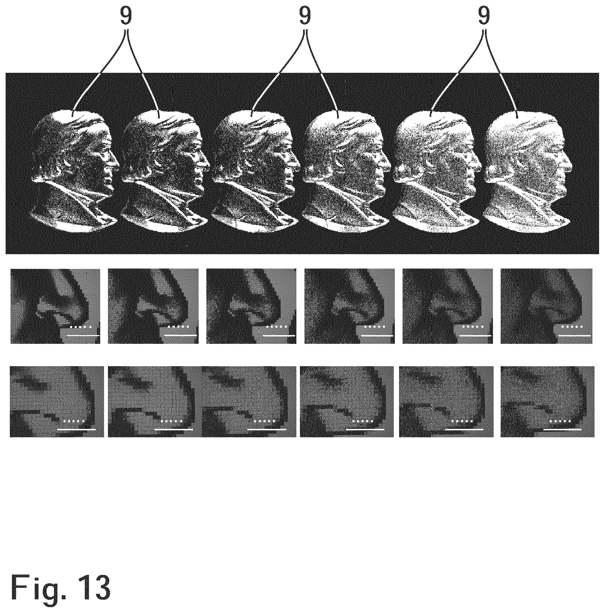

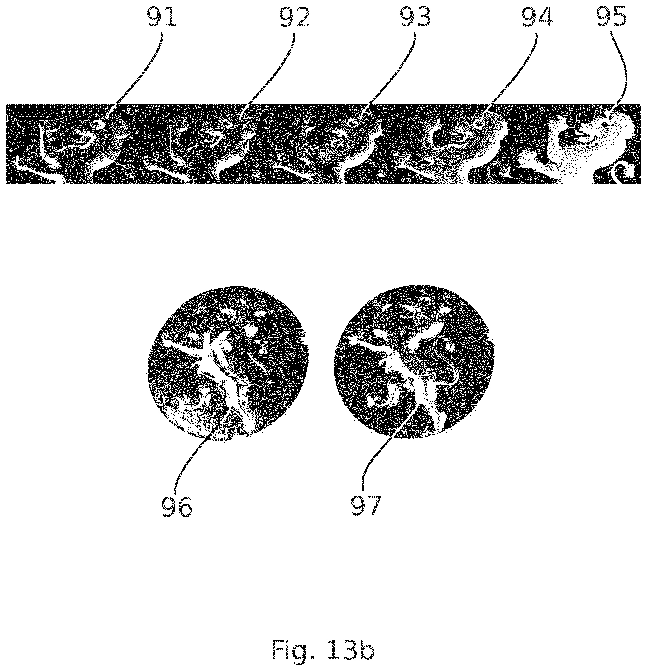

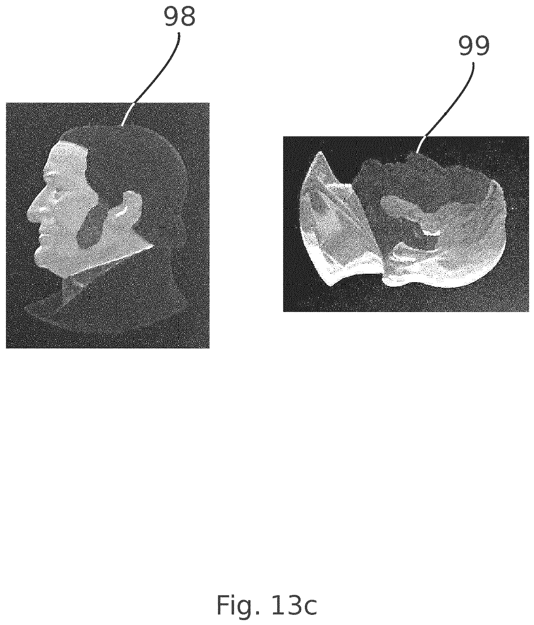

Die Figur 13 zeigt beispielhaft ein Design umfassend ein 3D-Modell des Portraits 9 des Mathematikers und Physikers Carl Friedrich Gauß. Die sechs Varianten in dem oberen Teil der Figur weisen jeweils einen von links nach rechts zunehmenden Öffnungswinkel der Raumwinkel auf, um welchen die entsprechenden Mikrostrukturen des zugrundeliegenden Pixelarrays einfallendes Licht beziehungsweise einfallende elektromagnetische Strahlung um die jeweils vorbestimmten Raumwinkel verbreitert abbilden, beugen und/oder streuen. Insbesondere betragen die Öffnungswinkel der jeweiligen zugeordneten Raumwinkel, in welche die entsprechenden Strukturen das einfallende Licht verbreitert abbilden, von links nach rechts: 0,5°, 1,25°, 2,5°, 5°, 7,5°, 10°.

Insbesondere generiert ein kleiner und/oder kleinerer Öffnungswinkel der vorbestimmten Raumwinkel einen für einen Betrachter und/oder Sensor erfassbaren 3D-Effekt mit glatt erscheinender Oberfläche des Portraits beziehungsweise eines Motivs. Bevorzugt generiert ein großer und/oder größerer Öffnungswinkel der Raumwinkel einen für einen Betrachter und/oder Sensor erfassbaren 3D-Effekt mit stark matt erscheinenden Oberflächen des Portraits beziehungsweise eines Motivs. Diese gesteuerte Mattigkeit kann als Designelement verwendet werden, beispielsweise um die Spitze eines als 3D-Effekt dargestellten Berges schneebedeckt wirken zu lassen.

Vorzugsweise liegt der Öffnungswinkel im Bereich zwischen 0,5° und 70° und bevorzugt zwischen 1° und 60°.

Der obere Teil der Figur 13b zeigt fünf Ausschnitte 91, 92, 93, 94, 95 von einem 3D-Modell eines Löwen, wobei insbesondere von links nach rechts der Öffnungswinkel von 1° bis 60° zunimmt. Sämtliche Pixel beugen das einfallende Licht insbesondere mit dem in etwa gleichen Öffnungswinkel in die für den Pixel vorgesehene Richtung. Der Ausschnitt 91 des Löwen ganz links weist eine spiegelnde virtuelle Oberfläche auf, der Ausschnitt 95 des Löwen ganz rechts weist eine seidenmatte Oberfläche auf. Die drei Ausschnitte 92, 93, 94 von Löwen dazwischen zeigen Zwischenwerte der Mattigkeit.

Weiter ist es möglich, einen Teilbereich des 3D-Effekts in einer anderen Mattigkeit erscheinen zu lassen. Der untere Teil der Figur 13b zeigt dies anhand von einem 3D-Modell eines Löwen 96, 97, wobei links in einem K-förmigen Teilbereich des Löwen 96 die Mattigkeit größer als im restlichen Löwen ist und im rechten Löwen 97 in dem K-förmigen Teilbereich des Löwen die Mattigkeit kleiner als im restlichen Löwen ist. Der Öffnungswinkel im linken Löwen 96 beträgt in den Bereichen ohne K-förmigen Teilbereich 1° und im rechten Löwen 97 beträgt der Öffnungswinkel 15°. Der K-förmige Teilbereich im linken Löwen 96 weist einen Öffnungswinkel von 60° auf und der K-förmige Teilbereich im rechten Löwen 97 weist einen Öfnungswinkel von 1° auf.

Die unteren Teile der Figur 13 zeigen Mikroskopaufnahmen von Ausschnitten der zugrundeliegenden Pixelarrays der in dem oberen Teil der Figur 13 gezeigten Portraits in unterschiedlichen Vergrößerungen der jeweiligen Bereiche. Insbesondere sind die von den in den Pixelarrays angeordneten Pixel umfassenden Strukturen erfassbar.

Insbesondere führt eine Veränderung der vorbestimmten Raumwinkel in welche die Pixel das einfallende Licht abbilden, beugen und/oder streuen, vorzugsweise zu einer deutlichen Veränderung der zugrundeliegenden Strukturen und mit größer werdendem Öffnungswinkeln insbesondere zu einer deutlichen Abweichung von geordneten bzw. periodischen Strukturen.

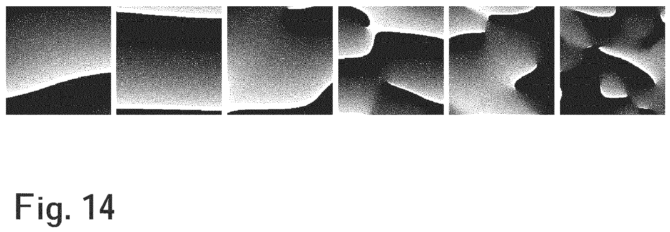

Die Figur 14 zeigt beispielhaft eine derartige Veränderung einer Struktur eines ausgewählten Pixels des in Figur 13 gezeigten Designs, wobei sich die Struktur von links nach rechts mit größer werdendem Öffnungswinkel verändert.

Weiter ist es möglich, einen 3D-Effekt, insbesondere wie zuvor beschrieben, partiell oder komplett oder vollständig nur in einer vorbestimmten Richtung sichtbar bzw. erfassbar zu machen. Hierfür werden die Strukturen in den Pixeln vorzugsweise derart gewählt, dass diese in dem vorbestimmten Bereich des 3D-Effektes einfallende elektromagnetische Strahlung im Wesentlichen bevorzugt in die vorbestimmte Richtung abbilden und/oder beugen und/oder streuen. Der Öffnungswinkel wird hierbei insbesondere richtungsabhängig gewählt.

Der linke Teil 98 der Figur 13c zeigt ein Design umfassend ein 3D-Modell des Portraits des Mathematikers und Physikers Carl Friedrich Gauß, wobei bei Normalbetrachtung das Gesicht einfallende elektromagnetische Strahlung im Wesentlichen bevorzugt in die Richtung eines Betrachters abbildet und/oder beugt und/oder streut. Dieser Bereich des Portraits erscheint insbesondere 3D-gewölbt und matt hell. Die anderen Bereiche des Portraits hingegen erscheinen vorzugsweise dunkel bis kaum wahrnehmbar. Insbesondere nach Drehung des optisch variablen Elementes um 90° im Uhrzeigersinn, wie in dem rechten Teil 99 der Figur 13c gezeigt, erscheint das Gesicht hingegen vorzugsweise dunkel bis kaum wahrnehmbar und die übrigen Bereiche des Portraits erscheinen insbesondere 3D-gewölbt und matt hell. Der Öffnungswinkel liegt hierbei bevorzugt in einem Bereich zwischen 0,5° und 70°, weiter bevorzugt zwischen 1° und 60°.

Es ist möglich, dass die als achromatische Mikrostruktur ausgebildeten Strukturen in ein oder mehreren oder allen Pixel der zwei oder mehreren Pixel des zumindest einen Pixelarray mit weiteren Mikrostrukturen und/oder Nanostrukturen überlagert sind. Beispiele für derartige weitere Mikrostrukturen und/oder Nanostrukturen sind lineare Gitterstrukturen, Kreuzgitterstrukturen, insbesondere Subwellenlängengitterstrukturen. Hierbei ist es möglich, eine Kombination des von den achromatischen Strukturen generierten achromatischen Effektes mit einem von Subwellenlängengitterstrukturen generierten Farbeffekt, insbesondere mit sogenannten Nullte-Beugungsordnung-Farbeffekten, zu erzielen. Beispiele für derartige Nullte-Beugungsordnung-Farbeffekte sind insbesondere sogenannte resonante Gitter im Falle einer HRI-Beschichtung oder Gitter mit Effekten auf Grundlage von Plasmonenresonanz im Falle von Metallbeschichtungen, insbesondere Aluminiumbeschichtung. In beiden genannten Fällen entsteht der optische Effekt des zumindest einen Pixelarrays insbesondere in der Farbe der überlagerten Subwellenlängengitterstrukturen-Effekte. Die Gitterperiode für die resonanten Gitter, die mit HRI beschichtet sind, liegt bevorzugt im Bereich von 200 nm bis 500 nm. Ferner sind die Subwellenlängengitterstrukturen der resonanten Gitter bevorzugt lineare Gitter.

Weiter ist es möglich, alternativ zur Aufteilung zumindest eines Pixelarray oder einer Fläche in Pixel mit unterschiedlichen zugeordneten und/oder vorbestimmten Raumwinkeln, Flächen oder benachbarte Pixel insbesondere mit identischen oder nahezu identischen Strukturen und/oder Mikrostrukturen zu belegen.

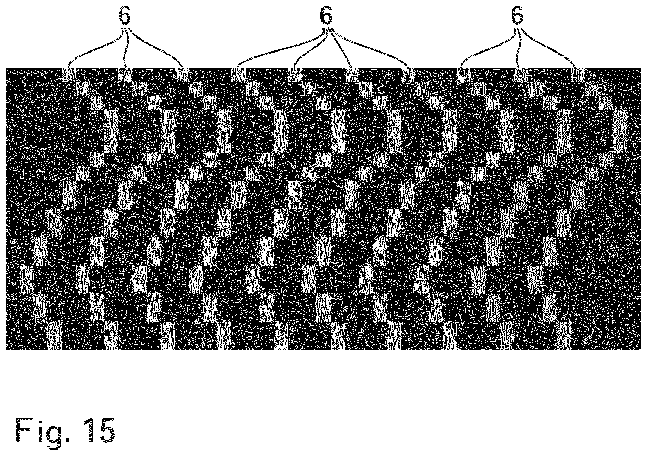

Die Figur 15 zeigt eine Anordnung von Pixeln eines Pixelarrays 2 umfassend entsprechende Strukturen, welche insbesondere derart ausgebildet ist, dass ein von einem Betrachter und/oder Sensor erfassbares Fine Line Movement ("Bewegung dünner oder feiner Linien") generiert wird, wobei die Breite der erfassbaren Linien vorzugsweise von den Größen und/oder lateralen Abmessungen der Pixel abhängig ist.

In dem in der Figur 15 gezeigten optisch variablen Element sind die Strukturen in den einzelnen linienförmig angeordneten Gruppen von Pixeln G derart ausgestaltet, dass diese insbesondere einfallendes Licht in unterschiedliche Raumrichtungen und/oder in unterschiedliche vorbestimmte Raumwinkel abbilden, wobei vorzugsweise durch Kippen eines derartigen optisch variablen Elements in Abhängigkeit der Betrachtungssituation und/oder Betrachtungsrichtung und/oder des einfallenden Lichts und/oder der Einfallsrichtung des einfallenden Lichts jeweils benachbarte linienförmig angeordnete Gruppen von Pixeln G, insbesondere in Abhängigkeit von der Kipprichtung, nacheinander, insbesondere achromatisch, aufleuchten.

Es ist auch möglich, dass ein oder mehrere linienförmig angeordneten Gruppen von Pixeln ausgelassen werden und/oder unter einem zufälligen Winkel aufleuchten, wobei das Aufleuchten der linienförmig angeordneten Gruppen von Pixel vorzugsweise in einer beliebigen Abfolge generiert wird. Insbesondere sind auch achromatische Fine Line Morphing Effekte ("Bewegung und/oder Formveränderung dünner oder feiner Linien") generierbar, welche vorzugsweise von einem Bertachter und/oder einem Sensor erfassbar sind.

Weiter ist es auch möglich, ein oder mehrere Effekte der folgenden, von einem Betrachter und/oder einem Sensor erfassbare Effekte zu generieren: Virtuell auf einen Betrachter und/oder Sensor hervorstehende oder zurückspringende Freiformen; virtuell vor oder hinter der durch das optisch variable Element aufgespannten Ebene schwebende Formen; achromatisches Fine Line Movement und Transformation; achromatische Bewegung, insbesondere lineare und/oder radiale achromatische Bewegung; achromatischer Bild-Flip, insbesondere zweifache, dreifache oder mehrfache Flips und/oder bevorzugt Animationen umfassend mehrere Motive, vorzugsweise Bilder; ein oder mehrere für einen Betrachter und/oder Sensor isotrop matt erscheinende Flächen; ein oder mehrere für einen Betrachter und/oder Sensor anisotrop matt erscheinende Flächen; ein oder mehrere Pixel der zwei oder mehreren Pixel des zumindest einen Pixelarrays umfassend versteckte Effekte, wie beispielsweise Nanotext; Hidden-Motiv (Versteckte beziehungsweise vor einem Betrachter und/oder Sensor in einem vorbestimmten Abstand und/oder in ein oder mehreren vorbestimmten Wellenlängenbereichen verborgenes Motiv), insbesondere Hidden-Text (Versteckter beziehungsweise vor einem Betrachter und/oder Sensor in einem vorbestimmten Abstand und/oder in ein oder mehreren vorbestimmten Wellenlängenbereichen verborgener Text) und/oder Hidden-Bilder (Versteckte beziehungsweise vor einem Betrachter und/oder Sensor in einem vorbestimmten Abstand und/oder in ein oder mehreren vorbestimmten Wellenlängenbereichen verborgene Bilder) in ein oder mehreren vorbestimmten Abbildungsebenen beziehungsweise in ein oder mehreren vorbestimmten Raumwinkeln und/oder Abständen zu dem optisch variablen Element.

Es ist möglich, dass zur Erzeugung eines zweifachen Flip in einer ersten Gruppe von Pixeln des Pixelarray eine erste Gruppe von Strukturen, welche einfallendes Licht insbesondere achromatisch abbilden, beugen und/oder streuen, beispielsweise Computer-generierte Hologrammstrukturen, abzuformen, wobei diese Strukturen der ersten Gruppe von Strukturen einfallendes Licht unter einem ersten Neigungswinkel von circa 30° zur Oberfläche der durch das optisch variable Element aufgespannten Ebene achromatisch abbilden, beugen und/oder streuen. Vorzugsweise bilden die Pixel der ersten Gruppe von Pixeln hierbei ein erstes Motiv aus.

Weiter ist es möglich, dass zur Erzeugung eines zweifachen Flip in einer zweiten Gruppe von Pixeln des Pixelarray eine zweite Gruppe von Strukturen, welche einfallendes Licht insbesondere achromatisch abbilden, beugen und/oder streuen, beispielsweise Computer-generierte Hologrammstrukturen, abzuformen, wobei diese Strukturen der zweiten Gruppe von Strukturen einfallendes Licht unter einem zweiten Neigungswinkel von circa 5° zur Oberfläche der durch das optisch variable Element aufgespannten Ebene achromatisch abbilden, beugen und/oder streuen. Vorzugsweise bilden die Pixel der zweiten Gruppe von Pixeln ein zweites Motiv aus.

Auch ist es möglich, dass ein oder mehrere Strukturen der ein oder mehreren Strukturen und/oder die einem Pixel der zwei oder mehreren Pixel des zumindest einen Pixelarray zugeordneten Strukturen zugeordneten Strukturen elektromagnetische Strahlung, insbesondere einfallende elektromagnetische Strahlung, in einem Raumwinkel, insbesondere einem punktförmigen Raumwinkel, abbilden, beugen und/oder streuen.

Vorzugsweise sind ein oder mehreren Strukturen der ein oder mehreren Strukturen und/oder ein oder mehrere Pixel der zwei oder mehreren Pixel des zumindest einen Pixelarrays umfassend ein oder mehrere zugeordnete Strukturen der ein oder mehreren zugeordneten Strukturen zwei oder mehreren Gruppen von Strukturen und/oder zwei oder mehreren Gruppen von Pixeln zugeordnet, insbesondere wobei sich die Gruppen der zwei oder mehreren Gruppen von Strukturen und/oder die Gruppen der zwei oder mehreren Gruppen von Pixeln voneinander unterscheiden.

Es ist möglich, dass zwei oder mehrere Gruppen von Strukturen der zwei oder mehreren Gruppen von Strukturen und/oder zwei oder mehrere Gruppen von Pixeln der zwei oder mehreren Gruppen von Pixeln elektromagnetische Strahlung, insbesondere einfallende elektromagnetische Strahlung, in gleiche oder unterschiedliche Raumwinkel und/oder vorbestimmte Raumwinkel, insbesondere punktförmige Raumwinkel und/oder vorbestimmte Raumwinkel, bevorzugt verschiedenförmige Raumwinkel und/oder vorbestimmte Raumwinkel, abbilden, beugen und/oder streuen.

Weiter ist es möglich, dass zwei oder mehrere Gruppen von Strukturen der zwei oder mehreren Gruppen von Strukturen und/oder zwei oder mehrere Gruppen von Pixeln der zwei oder mehreren Gruppen von Pixeln eine optische variable Information umfassend einen 3D-Effekt bereitstellt.

Hierbei ist es weiter möglich, dass das erste Motiv hell und das zweite Motiv dunkel erscheint, falls das optisch variable Element insbesondere aus dem, dem ersten Neigungswinkel entsprechenden vorbestimmten, Raumwinkel erfasst wird. Weiter ist es möglich, dass das optisch variable Element nach einer Kippung bezüglich eines Betrachters und/oder Sensors derart ausgerichtet ist, dass das optisch variable Element insbesondere aus dem dem zweiten Neigungswinkel entsprechenden vorbestimmten Raumwinkel erfassbar ist, wobei vorzugsweise das zweite Motiv hell und das erste Motiv dunkel erscheint. Ein derartiger Effekt wird bevorzugt auch als Bild-Flip-Effekt bezeichnet.

Vorzugsweise ist es möglich, dass die Strukturen das einfallende Licht in drei oder mehrere vorbestimmte Raumwinkel abbilden, beugen und/oder streuen, wobei jedem der vorbestimmten Raumwinkel insbesondere jeweils unterschiedliche Motive, insbesondere Bilder, zugeordnet sind. Hier ist es beispielsweise möglich, einen Flip zwischen drei oder mehreren Motiven in Abhängigkeit der Betrachtungsrichtung und/oder einem der vorbestimmten Raumwinkel entsprechenden Betrachtungsrichtungen zu erzeugen. Insbesondere wird für einen Betrachter und/oder Sensor eine Illusion einer kontinuierlichen und/oder sprunghaften Bewegung eines Motivs generiert, welche insbesondere bei entsprechender Bewegung, Drehung und/oder Kippung des optisch variablen Elements erscheint. Vorzugsweise wird das zugrundeliegende Pixelarray in Teile aufgeteilt, welche die jeweiligen Motive erzeugen und/oder ein oder mehrere Pixel der zwei oder mehreren Pixel des Pixelarray werden jeweils in Teile oder Subpixel unterteilt, welche jeweils unterschiedliche Strukturen aufweisen, welche das einfallende Licht in die vorbestimmten Raumwinkel zur Erzeugung der entsprechenden Motive abbilden, beugen und/oder streuen.

Vorzugsweise werden ein oder mehrere Pixel der zwei oder mehreren Pixel in jeweils drei, insbesondere vier, weiter bevorzugt fünf, Teile oder Subpixel aufgeteilt, wobei die Teile oder Subpixel insbesondere bevorzugt jeweils unterschiedliche Strukturen aufweisen.

Es ist möglich, dass ein oder mehrere der von einem Betrachter erfassbaren Raumwinkel der ein oder mehreren Raumwinkel oder vorbestimmten Raumwinkel der ein oder mehreren vorbestimmten Raumwinkel, in welche ein oder mehrere Pixel der zwei oder mehreren Pixel des zumindest einen Pixelarray einfallende elektromagnetische Strahlung abbilden, beugen und/oder streuen, einer Funktion folgen, wobei die Funktion derart ausgebildet ist, dass ein Betrachter die Raumwinkel oder vorbestimmten Raumwinkel als wellenförmig bewegende Helligkeitsbänder, bevorzugt sinusförmig bewegende Helligkeitsbänder, erfasst.

Weiter ist es möglich, eine sich verändernde Form eines Motivs, beispielsweise eine Transformation von einem Motiv, zum Beispiel die Buchstabenabfolge "CH", zu einem weiteren Motiv, zum Beispiel das Schweizer Kreuz, zu generieren, welche für einen Betrachter und/oder einen Sensor erfassbar ist, wobei insbesondere sich visuell vergrößernde oder verkleinernde Umrisslinien eines Motives möglich sind.

Es ist weiter auch möglich, dass ein oder mehrere Pixel der zwei oder mehreren Pixel des zumindest einen Pixelarray mindestens zwei Ansichten eines Motivs in unterschiedliche vorbestimmte Raumwinkel abbilden, beugen und/oder streuen, wobei insbesondere für einen Betrachter und/oder Sensor in zumindest einem vorgegebenen Abstand zumindest ein Stereobild des Motivs erfassbar ist.

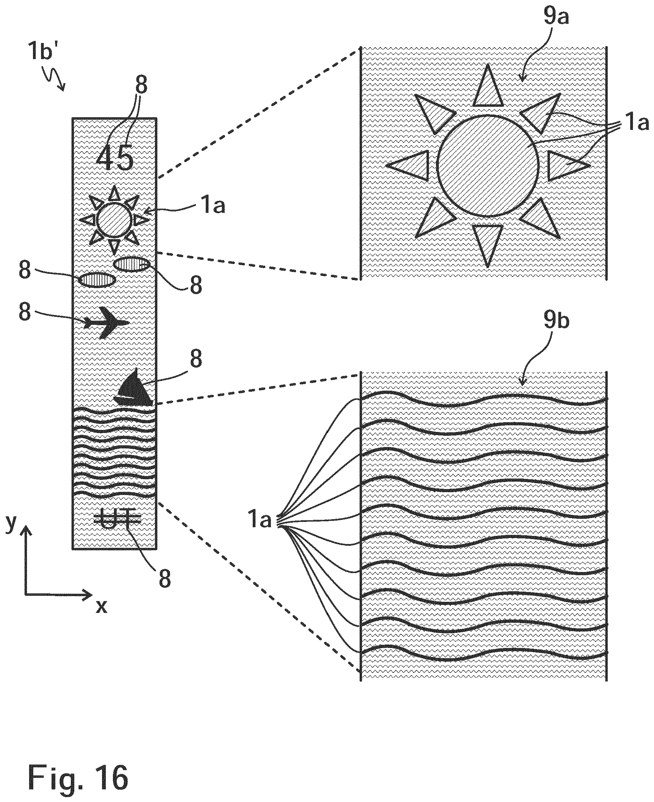

Die Figur 16 zeigt auf der linken Seite das in der Figur 1 gezeigte streifenförmige Sicherheitselement 1b', wobei ein Betrachter und/oder Sensor bei Betrachtung des Sicherheitselements 1b' insbesondere in Auflicht und/oder Durchlicht Bewegungseffekte und/oder optisch in Betrachtungsrichtung virtuell vorspringende und/oder von der Betrachtungsrichtung zurückspringende 3D-Elemente erfasst.

Es ist möglich, dass das Sicherheitsdokument 1d in oder außerhalb des streifenförmigen Bereichs 1b' ein oder mehrere weitere optisch variable Elemente aufweist.

Das streifenförmige Sicherheitselement 1b umfasst weiter zwei optisch variable Elemente 1a, welche insbesondere jeweils zumindest ein Pixelarray umfassend zwei oder mehrere Pixel aufweisen und auf der rechten Seite der Figur 16 in Vergrößerung gezeigt sind.

Weiter umfasst das streifenförmige Sicherheitselement 1b' mehrere Sicherheitselement 8, welches als die Zahlenabfolge "45", zwei wolkenartige Motive, ein flugzeugförmiges Motiv, ein segelschiffförmiges Motiv und eine mit zwei horizontalen Linien durchzogene Wortabfolge "UT" ausgestaltet sind.

Das in der Figur 16 oben rechts gezeigte sonnenförmige optisch variable Element 1a generiert insbesondere derart einen optischen Effekt, dass das ausfallende Licht von der gewölbten Oberfläche der Sonne 9a für einen Betrachter und/oder Sensor vorzugsweise reflektiert zu werden scheint. Dem Anschein nach ragt die Sonne 9a bevorzugt scheinbar fühlbar, insbesondere von einem Betrachter als fühlbar beziehungsweise als haptisch erfassbar erwartet, aus der durch das optisch variable Element 1a aufgespannten Ebene und/oder Oberfläche heraus, obwohl das Sicherheitselement hierbei vorzugsweise komplett eben und/oder flach ist. Das in der Figur 16 unten rechts gezeigte optisch variable Element umfasst ein Pixelarray, welches insbesondere für einen Betrachter und/oder Sensor die Illusion, insbesondere die optische Illusion, von sich wellenförmig bewegendem Wasser 9b generiert. Beim Kippen des optisch variablen Elements 1a erscheint für einen Betrachter und/oder Sensor vorzugsweise ein Helligkeitsband welches von links nach rechts und/oder in die entgegengesetzte Richtung bewegt.

Es ist möglich, dass ein oder mehrere Strukturen der ein oder mehreren Strukturen bei einer Verbiegung des Elements und/oder des zumindest einen Pixelarray einen optisch variablen Effekt bereitstellen, wobei insbesondere ein erstes Motiv in einem nicht gebogenen Zustand des Elements und/oder des zumindest einen Pixelarray erfassbar ist und ein zweites Motiv in einem gebogenen Zustand des Elements und/oder des zumindest einen Pixelarray erfassbar ist.

Auch ist es möglich, dass ein Bild-Flip derart von einem Betrachter und/oder einem Sensor erfasst wird, dass insbesondere im nicht gebogenen Zustand ein erstes Motiv und im gebogenen Zustand ein zweites Motiv erfassbar ist. Insbesondere wird das virtuelle Pixelarray zur Berechnung der entsprechenden Strukturen in den virtuellen Pixeln in einem gebogenen Zustand bereitgestellt und die virtuellen elektromagnetischen Felder, welche bevorzugt von ein oder mehreren virtuellen Punktfeldquellen abgestrahlt werden, vorzugsweise auf dem gebogenen virtuellen Pixelarray berechnet. Hierdurch wird insbesondere erreicht, dass die ein oder mehreren vorbestimmte Raumwinkel, in welche die Strukturen das einfallende Licht abbilden, beugen und/oder streuen, entsprechend um die lokale Krümmung des optisch variablen Elements, vorzugsweise im gebogenen Zustand, kompensiert wird. Falls einfallendes Licht auf ein flaches Pixelarray, dessen Pixel insbesondere für einen gebogenen Zustand ausgelegt sind, trifft, wird das Motiv vorzugsweise derart in die ein oder mehreren vorbestimmten Raumwinkel abgebildet, gebeugt und/oder gestreut, dass für einen Betrachter und/oder Sensor das Motiv bevorzugt nicht vollständig und/oder lediglich optisch verzerrt erfassbar ist.

Es ist möglich, dass ein Betrachter und/oder Sensor ein oder mehrere der folgenden, durch ein oder mehrere optisch variable Elemente generierte Effekte, insbesondere der folgenden durch ein oder mehrere optisch variable Elemente generierte optischen Effekte, erfasst: Ein oder mehrere Effekte in Reflexion; ein oder mehrere Effekte in Transmission; Kombination aus den vorstehenden Effekten in Reflexion und in Transmission, wie beispielsweise unterschiedliche Bewegungseffekte in Reflexion und Transmission, wobei insbesondere 50% der Pixel und/oder Subpixel zumindest eines Pixelarrays für den jeweiligen Effekt in Reflexion beziehungsweise Transmission verwendet werden; ein oder mehrere Effekte für einen gebogenen oder nicht gebogenen Zustand ein oder mehrerer optische variablen Elemente der ein oder mehreren optisch variablen Elemente.

Es ist auch möglich, ein oder mehrere Strukturen der ein oder mehreren Strukturen derart auszuformen, dass Phasensprünge von $2 \times 180°$ in Reflexion und $1 \times 360°$ in Transmission auftreten. Ein derartiger Phasensprung ist vorzugsweise nur bei einer Wellenlänge exakt, wobei der entsprechende Effekt bevorzugt farbselektiv um diese Wellenlänge herum ist. Der Effekt erscheint hierdurch für einen Betrachter und/oder Sensor insbesondere in einer klar definierten Farbe. Alle vorstehenden Effekte, insbesondere alle vorstehenden optischen Effekte, können beispielsweise derart mit einer entsprechend definierten Farbe umgesetzt werden.

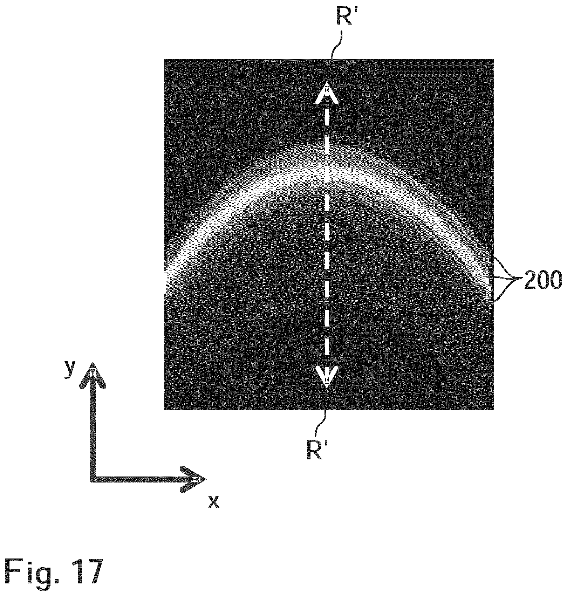

Die Figur 17 zeigt beispielhaft einen achromatischen Bogen umfassend eine Vielzahl von Lichtpunkten 200, welcher sich entlang der Richtung R', insbesondere beim Vor-Kippen und/oder Zurück-Kippen beziehungsweise beim Kippen entlang der Richtung R', des optisch variablen Elements rauf und/oder runter beziehungsweise entlang der Richtung R' in der durch die Richtungen x und y aufgespannten Figurenebene nach oben und/oder nach unten bewegt. Die Strukturen in den Pixeln des zugrundeliegenden Pixelarray sind insbesondere derart ausgelegt, dass einfallendes Licht bei Verkippung des optisch variablen Elements aus der durch die Richtungen x und y aufgespannten Figurenebene um -30° bis +30° heraus für einen Betrachter und/oder Sensor vorzugsweise die Illusion eines sich bewegenden hellen Bogens erzeugt.

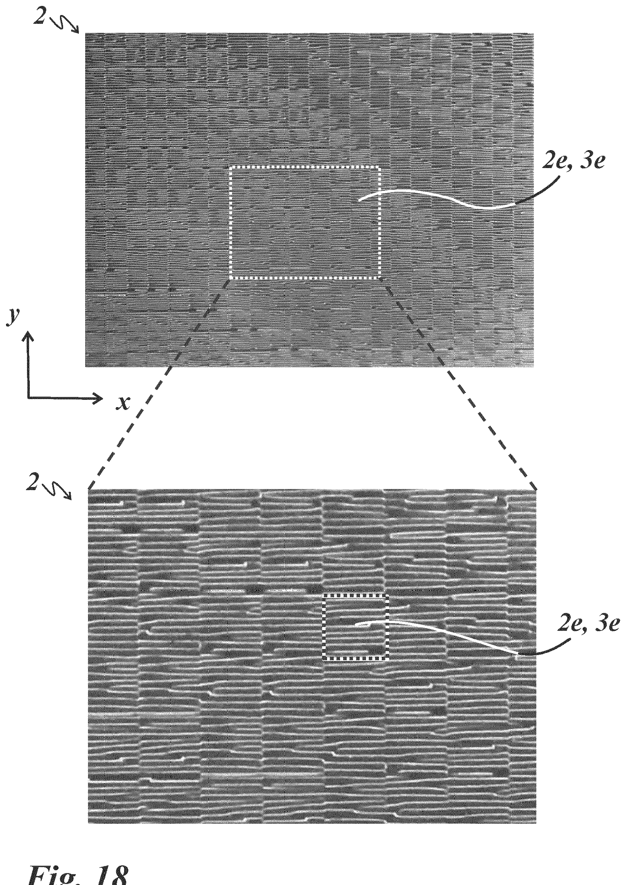

Die Figur 18 zeigt in dem oberen Teil einen ersten vergrößerten Ausschnitt und im unteren Teil einen zweiten, insbesondere noch weiter vergrößerten, Ausschnitt des zugrundeliegenden Pixelarrays umfassend Pixel mit entsprechenden Strukturen. Der umrandete Pixel 2e aufweisend die Struktur 3e weist in Richtung x und y jeweils eine laterale Abmessung von 50 μm auf.

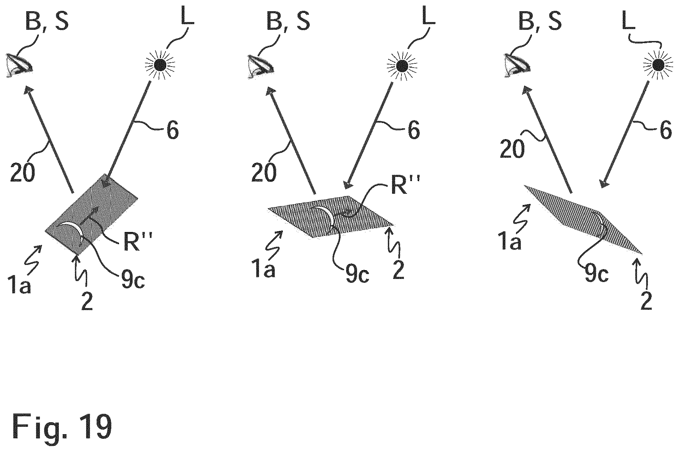

Die Figur 19 zeigt in einer schematischen perspektivischen Darstellung einen für einen Betrachter B und/oder einen Sensor S erfassbaren Bewegungsablauf eines achromatisch, bogenförmigen Motivs 9c, welcher sich in der durch das optische Element 1a aufgespannten Ebene, insbesondere entlang der Richtung R'', bewegt, wobei die Strukturen des in dem optisch variablen Element 1a enthaltenen Pixelarrays 2 das einfallende Licht 20 in Richtung des Betrachters B und/oder Sensor S abbilden, beugen und/oder streuen.

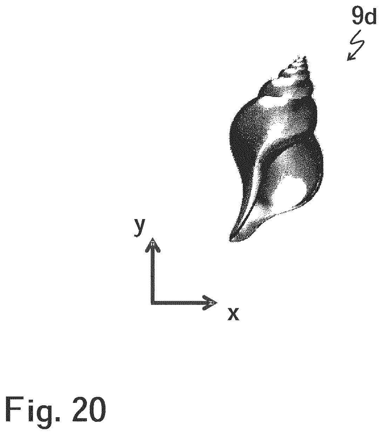

Die Figur 20 zeigt ein achromatisch für einen Betrachter und/oder Sensor aus der Figurenebene, insbesondere aus der durch die Richtungen x und y aufgespannten Ebene, herausragendes 3D-Objekt in Form eines Schneckengehäuses 9d. Insbesondere sind die Strukturen in den Pixeln des zugrundeliegenden Pixelarrays so ausgelegt, dass einfallendes Licht die Illusion des 3D-Objektes erzeugt. Beim vor und zurück, sowie links und rechts Kippen bewegen sich für einen Betrachter und/oder Sensor Licht und Schatten über die Schnecke.

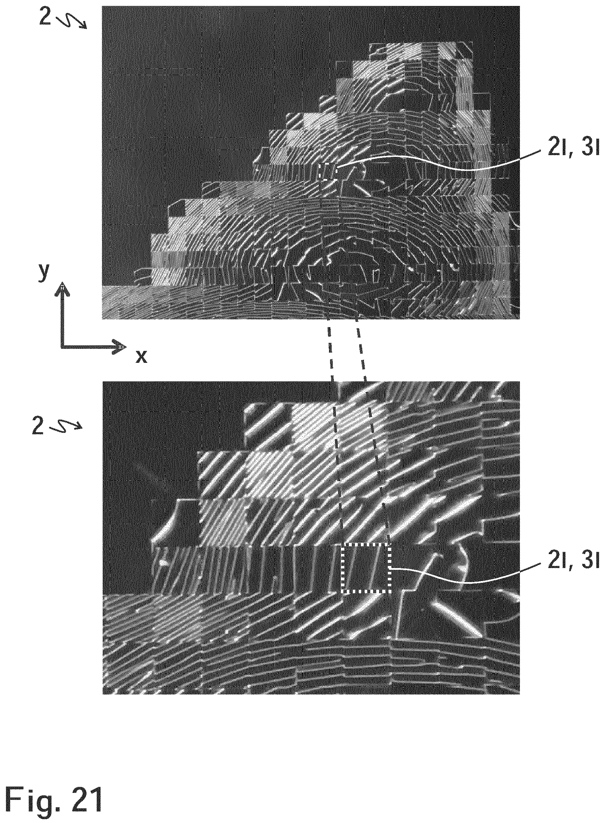

Die Figur 21 zeigt in dem oberen Teil einen ersten vergrößerten Ausschnitt und im unteren Teil einen zweiten, insbesondere noch weiter vergrößerten Ausschnitt des dem in der Figur 20 gezeigten Schneckengehäuses 9d zugrundeliegenden Pixelarrays umfassend Pixel mit entsprechenden Strukturen. Der umrandete Pixel 2f aufweisend die Struktur 3f weist in Richtung x und y jeweils eine laterale Abmessung von 50 μm auf.

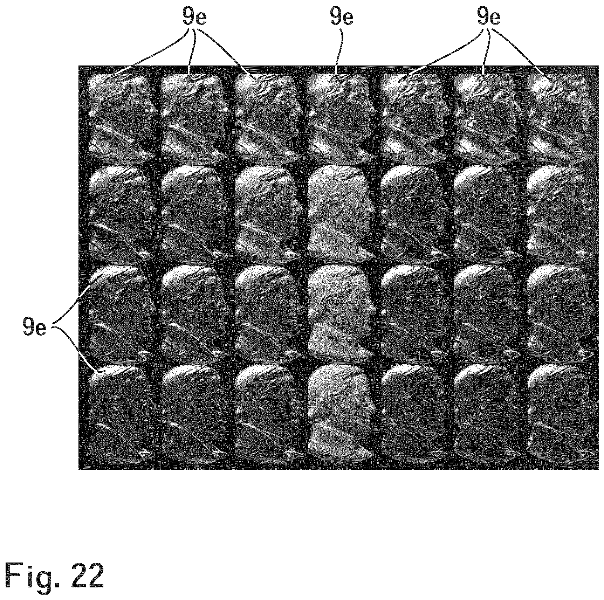

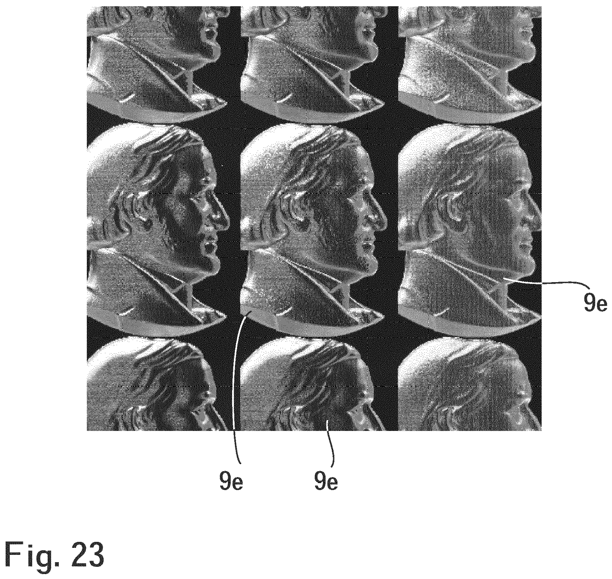

Die Figur 22 zeigt ein Design umfassend ein 3D-Modell des Portraits 9e des Mathematikers und Physikers Carl Friedrich Gauß in 28 verschiedenen Varianten und die Figur 23 zeigt einen vergrößerten Ausschnitt der Figur 22, wobei die Strukturen in den Pixel des zugrundeliegenden Pixelarray hierbei insbesondere als Fresnelsche Mikrolinsenstrukturen ausgeformt sind, welche für die Erzeugung der Varianten verwendet wurden. Insbesondere zeigen die Portraits in der ersten Zeile von links nach rechts eine sich verstärkende Variation der für einen Betrachter und/oder Sensor erfassbaren 3D-Effektstärke. Die jeweils ersten vier Portraits in den weiteren Zeilen zeigen von links nach rechts jeweils einen Effekt anhand des entsprechenden Portraits basierend auf Strukturen mit einer Strukturtiefe von 2 μm und die jeweils letzten drei Portraits in den weiteren Zeilen zeigen von links nach rechts jeweils einen Effekt anhand des entsprechenden Portraits basierend auf Strukturen mit einer Strukturtiefe von circa 1 μm Strukturtiefe.

**Bezugszeichenliste:**

| 1a | Optisch variables Element |
|---|---|
| 1b | Sicherheitselement |
| 1b' | Streifenförmiges Sicherheitselement |
| 1c | Dekorelement |
| 1d | Sicherheitsdokument |
| 10 | Substrat |
| 2 | Pixelarray |
| 2aa-2dd, 2e-2f | Pixel |

| 20aa-20dd | Ausfallendes Licht |
| 200 | Lichtpunkte |
| 3aa-3dd, 3e-3f | Struktur |
| 30aa, 30ad, 30cc | Mikrostruktur |
| 31 aa, 31ad, 31cc | Mikrostruktur |
| 4 | Virtuelles Pixelarray |
| 4aa-4dd | Virtuelle Pixel |
| 6 | Einfallendes Licht |
| 9, 9a, 9b, 9c, 9d, 9e | Motiv |
| 91, 92, 93, 94, 95 | Motiv |
| 96, 97 | Motiv |
| 98, 99 | Motiv |
| $\Delta x$, $\Delta y$ | Laterale Abmessung |
| $\Delta z$ | Strukturtiefe |
| P | Fokuspunkt |
| F | Fokalebene |
| f | Abstand |
| $\theta$, $\varphi$, $\alpha$, $\Omega$ | Winkel |
| S | Segment |
| R, R', R" | Richtung |
| G | Gruppe von Pixel |
| B | Betrachter |
| S | Sensor |
| L | Lichtquelle |
| GF | Grundfläche |
| EF | Elementfläche |

## Patentansprüche

1. Optisch variables Element (1a), insbesondere ein Sicherheitselement (1b) und/oder ein Dekorelement (1c), bevorzugt für Sicherheitsdokumente (1d),
wobei

das optisch variable Element (1a) zumindest ein Pixelarray (2) umfassend zwei oder mehrere Pixel (2aa-2dd,2e-2f) aufweist, wobei ein oder mehrere Pixel der zwei oder mehreren Pixel (2aa-2dd,2e-2f) des zumindest einen Pixelarray (2) ein oder mehrere Strukturen (3aa-3dd,3e-3f) aufweisen, und wobei ein oder mehrere Strukturen der ein oder mehreren Strukturen (3aa-3dd,3e-3f) einfallende elektromagnetische Strahlung (6) in ein oder mehrere Raumwinkel abbilden und/oder beugen,
**dadurch gekennzeichnet,**
**dass** ein oder mehrere Strukturen (3aa-3dd,3e-3f) der ein oder mehreren Strukturen als Teilbereiche von Mikrolinsen ausgebildet sind, wobei die Fokuslänge der ein oder mehreren Strukturen zwischen 0,04 mm bis 5 mm beträgt und/oder wobei die Fokuslänge in einer Richtung X und/oder Y durch die Gleichung

$$f_{X,Y} = \frac{\Delta_{X,Y}/2}{\tan(\phi_{X,Y}/2)}$$

bestimmt ist, wobei $\Delta_{X,Y}$ die jeweilige laterale Abmessung ein oder mehrerer Pixel der zwei oder mehreren Pixel (2aa-2dd,2e-2f) des zumindest einen Pixelarray (2) in die Richtung X beziehungsweise in die Richtung Y ist und $\phi_{X,Y}$ der jeweilige Raumwinkel in die Richtung X beziehungsweise in die Richtung Y ist, in welche die ein oder mehreren Strukturen einfallende elektromagnetische Strahlung abbilden und/oder beugen.

2. Optisch variables Element (1a) nach Anspruch 1,
**dadurch gekennzeichnet,**
**dass** ein oder mehrere Strukturen der ein oder mehreren Strukturen (3aa-3dd,3e-3f) einfallende elektromagnetische Strahlung (6) in ein oder mehrere Raumwinkel achromatisch abbilden und/oder beugen.

3. Optisch variables Element (1a) nach einem der vorhergehenden Ansprüche,
**dadurch gekennzeichnet,**
**dass** das optisch variable Element (1) ein oder mehrere Schichten umfasst, wobei das zumindest eine Pixelarray (2) auf oder in zumindest einer Schicht der ein oder mehreren Schichten angeordnet ist und wobei ein oder mehrere Schichten der ein oder mehreren Schichten ausgewählt sind aus: HRI-Schicht, insbesondere Schicht umfassend HRI und/oder LRI-Lackschicht, Metallschicht, Interferenzschicht, insbesondere Interferenzschichtabfolgen, bevorzugt HLH oder HLHLH, weiter bevorzugt Fabry-Perot-Dreischichtsystem oder -Mehrschichtsystem, Flüssigkristallschicht, Farbschicht, insbesondere lasierende Farbschicht.

4. Optisch variables Element (1a) nach einem der vorhergehenden Ansprüche,
**dadurch gekennzeichnet,**
**dass** jedem Pixel (2aa-2dd,2e-2f) der zwei oder mehreren Pixel (2aa-2dd,2e-2f) des zumindest einen Pixelarray (2) ein oder mehrere Strukturen der ein oder mehreren Strukturen (3aa-3dd,3e-3f) zugeordnet sind, wobei die einem Pixel (2aa-2dd,2e-2f) zugeordneten ein oder mehreren Strukturen einfallende elektromagnetische Strahlung (6) in ein oder mehrere vorbestimmte Raumwinkel abbilden und/oder beugen, wobei insbesondere den ein oder mehreren vorbestimmten Raumwinkeln jeweils eine Richtung, vorzugsweise eine vorbestimmte Richtung, zugeordnet ist.

5. Optisch variables Element (1a) nach einem der vorhergehenden Ansprüche,
**dadurch gekennzeichnet,**
**dass** ein oder mehrere der, insbesondere von einem Betrachter und/oder einem Sensor erfassbaren, Raumwinkel der ein oder mehreren Raumwinkel oder vorbestimmten Raumwinkel der ein oder mehreren vorbestimmten Raumwinkel, in welche ein oder mehrere Pixel der zwei oder mehreren Pixel (2aa-2dd,2e-2f) des zumindest einen Pixelarray (2) einfallende elektromagnetische Strahlung (6) abbilden und/oder beugen, einer Funktion folgen, wobei die Funktion derart ausgebildet ist, dass ein Betrachter die Raumwinkel oder vorbestimmten Raumwinkel als wellenförmig bewegende Helligkeitsbänder, bevorzugt sinusförmig bewegende Helligkeitsbänder, erfasst.

6. Optisch variables Element (1a) nach einem der vorhergehenden Ansprüche,
**dadurch gekennzeichnet,**
**dass** ein oder mehrere oder alle Raumwinkel der ein oder mehreren Raumwinkel und/oder ein oder mehrere oder alle vorbestimmten Raumwinkel der ein oder mehreren vorbestimmten Raumwinkel in zumindest einer Richtung bis zu 70°, bevorzugt bis zu 50°, weiter bevorzugt bis zu 40°, betragen und/oder dass der Öffnungswinkel ein oder mehrerer oder aller Raumwinkel vorzugsweise maximal 20°, weiter bevorzugt maximal 15°, insbesondere bevorzugt maximal 10°, beträgt.

7. Optisch variables Element (1a) nach einem der vorhergehenden Ansprüche,
**dadurch gekennzeichnet,**
**dass** ein oder mehrere oder alle Raumwinkel der ein oder mehreren Raumwinkel und/oder ein oder mehrere oder alle vorbestimmten Raumwinkel der ein oder mehreren vorbestimmten Raumwinkel in zumindest einer Richtung bis zu 70°, bevorzugt bis zu 50°, weiter bevorzugt bis zu 40°, betragen.

8. Optisch variables Element (1a) nach einem der vorhergehenden Ansprüche,
**dadurch gekennzeichnet,**
**dass** ein oder mehrere Strukturen der ein oder mehreren Strukturen (3aa-3dd,3e-3f) und/oder die einem Pixel der zwei oder mehreren Pixel (2aa-2dd,2e-2f) des zumindest einen Pixelarray (2) zugeordneten Strukturen derart ausgebildet sind, dass diese eine optisch variable Information bereitstellen, insbesondere ein oder mehrere 3D-Effekte und/oder Bewegungseffekte bereitstellen, bevorzugt achromatische oder monochromatische 3D-Effekte und/oder Bewegungseffekte bereitstellen.

9. Optisch variables Element (1a) nach einem der vorhergehenden Ansprüche,
**dadurch gekennzeichnet,**
**dass** ein oder mehrere Strukturen der ein oder mehreren Strukturen und/oder die einem Pixel der zwei oder mehreren Pixel (2aa-2dd,2e-2f) des zumindest einen Pixelarray (2) zugeordneten Strukturen zugeordneten Strukturen (3aa-3dd,3e-3f) elektromagnetische Strahlung, insbesondere einfallende elektromagnetische Strahlung (6), in einem Raumwinkel, insbesondere einem punktförmigen Raumwinkel, abbilden und/oder beugen.

10. Optisch variables Element (1a) nach einem der vorhergehenden Ansprüche,
**dadurch gekennzeichnet,**
**dass** ein oder mehrere Strukturen der ein oder mehreren Strukturen (3aa-3dd,3e-3f), eine Gitterperiode insbesondere kleiner als die Hälfte, bevorzugt kleiner als dem Drittel, weiter bevorzugt kleiner als dem Viertel, der maximalen lateralen Abmessung der zwei oder mehreren Pixel (2aa-2dd,2e-2f), bevorzugt jedem der zwei oder mehreren Pixel (2aa-2dd,2e-2f), des zumindest einen Pixelarray (2) aufweisen.

11. Optisch variables Element (1a) nach einem der vorhergehenden Ansprüche,
**dadurch gekennzeichnet,**
**dass** ein oder mehrere Strukturen der ein oder mehreren Strukturen (3aa-3dd,3e-3f) eine beschränkte maximale Strukturtiefe aufweisen, wobei die beschränkte maximale Strukturtiefe insbesondere kleiner als 15 $\mu$m, bevorzugt kleiner als 10 $\mu$m, weiter bevorzugt kleiner gleich 7 $\mu$m, noch weiter bevorzugt kleiner gleich 4 $\mu$m, insbesondere bevorzugt kleiner gleich 2 $\mu$m, ist.

12. Optisch variables Element (1a) nach Anspruch 11,
**dadurch gekennzeichnet,**
**dass** ein oder mehrere Strukturen der ein oder mehreren Strukturen (3aa-3dd,3e-3f) derart ausgebildet sind, dass die beschränkte maximale Strukturtiefe der ein oder mehreren Strukturen für mehr als 50% der Pixel (2aa-2dd,2e-2f), insbesondere für mehr als 70% der Pixel (2aa-2dd,2e-2f), bevorzugt für mehr als 90% der Pixel (2aa-2dd,2e-2f), des zumindest einen Pixelarray (2) kleiner gleich 15 $\mu$m, insbesondere kleiner gleich 7 $\mu$m, bevorzugt kleiner gleich 2 $\mu$m, ist.

13. Optisch variables Element (1a) nach Anspruch 11 oder 12,
**dadurch gekennzeichnet,**
**dass** ein oder mehrere Strukturen der ein oder mehreren Strukturen (3aa-3dd,3e-3f) derart ausgebildet sind, dass die beschränkte maximale Strukturtiefe der ein oder mehrerer Strukturen für alle Pixel (2aa-2dd,2e-2f) kleiner gleich 15 $\mu$m, insbesondere kleiner gleich 7 $\mu$m, bevorzugt kleiner gleich 2 $\mu$m, ist.

14. Optisch variables Element (1a) nach einem der vorhergehenden Ansprüche,
**dadurch gekennzeichnet,**
**dass** ein oder mehrere Strukturen (3aa-3dd,3e-3f) der ein oder mehreren Strukturen als reflektiv wirkende Teilbereiche von Mikrolinsen ausgebildet sind, wobei die Fokuslänge der ein oder mehreren Strukturen bevorzugt zwischen 0,06 mm bis 3 mm, weiter bevorzugt zwischen 0,1 mm bis 2 mm, beträgt.

15. Optisch variables Element (1a) nach einem der vorhergehenden Ansprüche,
**dadurch gekennzeichnet,**
**dass** ein oder mehrere Strukturen der ein oder mehreren Strukturen (3aa-3dd,3e-3f) als Fresnelsche Mikrolinsenstrukturen, insbesondere reflektiv wirkende Fresnelsche Mikrolinsenstrukturen, ausgebildet sind, wobei insbesondere die Gitterlinien der Fresnelschen Mikrolinsenstrukturen als gekrümmte Gitterlinien ausgebildet sind und/oder Gitterlinien mit variierenden Gitterperioden aufweisen und/oder wobei insbesondere jedes Pixel (2aa-2dd,2e-2f) der zwei oder mehreren Pixel (2aa-2dd,2e-2f) des zumindest einen Pixelarrays (2), vorzugsweise in zumindest einer Raumrichtung, mindestens zwei Gitterperioden umfasst.

16. Optisch variables Element (1a) nach einem der vorhergehenden Ansprüche,
**dadurch gekennzeichnet,**
**dass** ein oder mehrere Strukturen der ein oder mehreren Strukturen (3aa-3dd,3e-3f) eine Anzahl von mindestens 2 Erhebungen, insbesondere mindestens 3 Erhebungen, bevorzugt mindestens 4 Erhebungen, vorzugsweise pro Pixel (2aa-2dd,2e-2f), aufweisen.

17. Optisch variables Element (1a) nach einem der vorhergehenden Ansprüche,
**dadurch gekennzeichnet,**
**dass** mehr als 70% der Pixel, insbesondere mehr als 90% der Pixel, der zwei oder mehreren Pixel (2aa-2dd,2e-2f) in dem zumindest einen Pixelarray (2) ein oder mehrere Strukturen der ein oder mehreren Strukturen (3aa-3dd,3e-3f) aufweisen, welche eine Anzahl von mindestens 2 Erhebungen, insbesondere mindestens 3 Erhebungen, bevorzugt mindestens 4, vorzugsweise pro Pixel (2aa-2dd,2e-2f), aufweisen.

18. Optisch variables Element (1a) nach einem der vorhergehenden Ansprüche,
**dadurch gekennzeichnet,**
**dass** ein oder mehrere Strukturen der ein oder mehreren Strukturen (3aa-3dd,3e-3f) eine HRI-Schicht aufweisen, wobei insbesondere ein oder mehrere Pixel der zwei oder mehreren Pixel (2aa-2dd,2e-2f) des zumindest einen Pixelarray (2) in Reflexion für einen Betrachter farbig erfassbar sind.

**19.** Optisch variables Element (1a) nach einem der vorhergehenden Ansprüche,
**dadurch gekennzeichnet,**
**dass** ein oder mehrere Strukturen der ein oder mehreren Strukturen (3aa-3dd,3e-3f) einfallende elektromagnetische Strahlung pseudo-zufällig oder zufällig in alle Raumrichtungen abbilden und/oder beugen, wobei ein oder mehrere Pixel der zwei oder mehreren Pixel (2aa-2dd,2e-2f) des zumindest einen Pixelarray (2) in Reflexion für einen Betrachter isotrop weiß, bevorzugt isotrop achromatisch, erfassbar sind.

**20.** Optisch variables Element (1a) nach einem der vorhergehenden Ansprüche,
**dadurch gekennzeichnet,**
**dass** ein oder mehrere Strukturen der ein oder mehreren Strukturen (3aa-3dd,3e-3f) bei einer Verbiegung des Elements und/oder des zumindest einen Pixelarray (2) einen optisch variablen Effekt bereitstellen, wobei insbesondere ein erstes Motiv in einem nicht gebogenen Zustand des Elements und/oder des zumindest einen Pixelarray (2) erfassbar ist und ein zweites Motiv in einem gebogenen Zustand des Elements und/oder des zumindest einen Pixelarray (2) erfassbar ist.

**21.** Optisch variables Element (1a), insbesondere ein Sicherheitselement (1b) und/oder ein Dekorelement (1c), bevorzugt für Sicherheitsdokumente (1d),
wobei

das optisch variable Element (1a) zumindest ein Pixelarray (2) umfassend zwei oder mehrere Pixel (2aa-2dd,2e-2f) aufweist, wobei ein oder mehrere Pixel der zwei oder mehreren Pixel (2aa-2dd,2e-2f) des zumindest einen Pixelarray (2) ein oder mehrere Strukturen (3aa-3dd,3e-3f) aufweisen, und wobei ein oder mehrere Strukturen der ein oder mehreren Strukturen (3aa-3dd,3e-3f) einfallende elektromagnetische Strahlung (6) in ein oder mehrere Raumwinkel abbilden und/oder beugen,
**dadurch gekennzeichnet,**
**dass** jedem Pixel der zwei oder mehreren Pixel (2aa-2dd,2e-2f) des zumindest einen Pixelarray (2) eine Struktur der ein oder mehrere Strukturen (3aa-3dd,3e-3f) zugeordnet ist, wobei die ein oder mehrere Strukturen (3aa-3dd,3e-3f) als Teilbereiche bzw. Ausschnitte von Fresnelschen Mikrolinsenstrukturen ausgebildet sind, und wobei die Gitterlinien der Fresnelschen Mikrolinsenstrukturen als gekrümmte Gitterlinien ausgebildet sind und/oder Gitterlinien mit variierenden Gitterperioden aufweisen und/oder wobei insbesondere jedes Pixel der zwei oder mehreren Pixel, vorzugsweise in zumindest einer Raumrichtung, mindestens zwei Gitterperioden umfasst.

**22.** Sicherheitsdokument (1d) umfassend ein oder mehrere optisch variable Elemente (1a) nach einem der vorhergehenden Ansprüche.

**Fig. 1**

*Fig. 1a*

Fig. 2

Fig. 3

Fig. 3a

Fig. 4

Fig. 5

Fig. 6

Fig. 7

Fig. 8

Fig. 9

20ad

20ad

z

y

x

2ad, 3ad

Fig. 10

*Fig. 11*

*Fig. 12*

*E*

*F*

*a*

*S*

*f*

*20da*

*2da*

*z*

*y*

*x*

*Fig. 12a*

Fig. 13

Fig. 13b

98

99

Fig. 13c

Fig. 14

Fig. 15

Fig. 16

Fig. 17

Fig. 18

Fig. 19

9d

y

x

Fig. 20

Fig. 21

Fig. 22

9e

9e          9e

Fig. 23

Europäisches
Patentamt

European
Patent Office

Office européen
des brevets

# EUROPÄISCHER RECHERCHENBERICHT

**Nummer der Anmeldung**

EP 24 17 3126

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2017/011476 A1 (WAVEFRONT TECH INC [US]) 19. Januar 2017 (2017-01-19) * Absätze [0003], [0089], [0090], [0138], [0145] * ----- | 1-22 | INV. B42D25/324 B42D25/328 |
| X | DE 10 2010 025775 A1 (GIESECKE & DEVRIENT GMBH [DE]) 5. Januar 2012 (2012-01-05) * Absätze [0006], [0031]; Anspruch 14 * ----- | 21,22 | |

**RECHERCHIERTE SACHGEBIETE (IPC)**

B42D

Der vorliegende Recherchenbericht wurde für alle Patentansprüche erstellt

| Recherchenort | Abschlußdatum der Recherche | Prüfer |
|---|---|---|
| München | 23. Juli 2024 | Achermann, Didier |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 3126

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2024

| Im Recherchenbericht angeführtes Patentdokument | Datum der Veröffentlichung | Mitglied(er) der Patentfamilie | Datum der Veröffentlichung |
|---|---|---|---|
| WO 2017011476 A1 | 19-01-2017 | CA 2992060 A1 | 19-01-2017 |
| | | CN 108027521 A | 11-05-2018 |
| | | EP 3320385 A1 | 16-05-2018 |
| | | EP 3795367 A1 | 24-03-2021 |
| | | KR 20180029062 A | 19-03-2018 |
| | | US 2017129272 A1 | 11-05-2017 |
| | | US 2020039279 A1 | 06-02-2020 |
| | | US 2024059094 A1 | 22-02-2024 |
| | | WO 2017011476 A1 | 19-01-2017 |
| DE 102010025775 A1 | 05-01-2012 | AU 2011273910 A1 | 07-02-2013 |
| | | AU 2016256797 A1 | 01-12-2016 |
| | | CN 103068526 A | 24-04-2013 |
| | | DE 102010025775 A1 | 05-01-2012 |
| | | EP 2588276 A1 | 08-05-2013 |
| | | EP 3401117 A1 | 14-11-2018 |
| | | HK 1178843 A1 | 19-09-2013 |
| | | RU 2013104092 A | 27-08-2014 |
| | | US 2013099474 A1 | 25-04-2013 |
| | | US 2021070088 A1 | 11-03-2021 |
| | | WO 2012000669 A1 | 05-01-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004016596 A1